# EUROPEAN PATENT SPECIFICATION

(11) **EP 4 348 356 B1**
(45) Date of publication and mention of the grant of the patent: **02.09.2026**
(21) Application number: 22816796.1
(22) Date of filing: 01.06.2022
(51) Int. Cl.: G03H 1/20, G03H 1/02, G03H 1/04, G02B 5/30, G02B 27/01, G03H 1/22

(54) **METHOD OF MAKING HOLOGRAMS USING LIQUID CRYSTAL MASTERS**
VERFAHREN ZUR HERSTELLUNG VON HOLOGRAMMEN UNTER VERWENDUNG VON FLÜSSIGKRISTALL-MASTERN
PROCÉDÉ DE FABRICATION D'HOLOGRAMMES À L'AIDE DE MAÎTRES À CRISTAUX LIQUIDES

(30) Priority: 03.06.2021 US 202163196560 P
(43) Date of publication of application: 10.04.2024
(60) Divisional application: 26194557.0
(73) Proprietor: Magic Leap, Inc., Plantation, FL 33322 (US)
(72) Inventor: ZIEGLER, David Thomas, 1023 Crissier (CH); ECKERT, Rolf, 2000 Neuchâtel (CH); MONTFORT, Frédéric, 1055 Froideville (CH)
(74) Representative: J A Kemp LLP
(86) International application number: PCT/US2022/031828
(87) International publication number: WO 2022/256444

(56) References cited:
- EP-A1- 2 306 251
- WO-A1-2018/031634
- US-A1- 2011 069 287
- US-A1- 2015 125 109
- US-A1- 2018 239 147
- US-A1- 2019 369 403
- US-A1- 2020 081 398

## Description

### BACKGROUND

### Field

The present disclosure relates to systems and methods of fabricating optical devices, including holographic volume gratings that may be used in virtual reality and augmented reality imaging and visualization systems.

### Description of the Related Art

Modern computing and display technologies have facilitated the development of systems for so called "virtual reality" or "augmented reality" experiences, wherein digitally reproduced images or portions thereof are presented to a user in a manner wherein they seem to be, or may be perceived as, real. A virtual reality, or "VR", scenario typically involves presentation of digital or virtual image information without transparency to other actual real-world visual input; an augmented reality, or "AR", scenario typically involves presentation of digital or virtual image information as an augmentation to visualization of the actual world around the user. A mixed reality, or "MR", scenario is a type of AR scenario and typically involves virtual objects that are integrated into, and responsive to, the natural world. For example, in an MR scenario, AR image content may be blocked by or otherwise be perceived as interacting with objects in the real world.

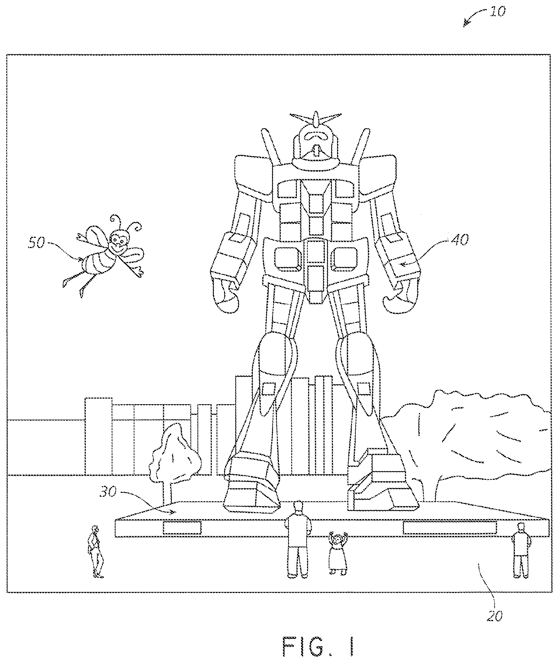

Referring to Figure 1, an augmented reality scene 10 is depicted wherein a user of an AR technology sees a real-world park-like setting 20 featuring people, trees, buildings in the background, and a concrete platform 30. In addition to these items, the user of the AR technology also perceives that he "sees" "virtual content" such as a robot statue 40 standing upon the real-world platform 30, and a cartoon-like avatar character 50 flying by which seems to be a personification of a bumble bee, even though these elements 40, 50 do not exist in the real world. Because the human visual perception system is complex, it is challenging to produce an AR technology that facilitates a comfortable, natural-feeling, rich presentation of virtual image elements amongst other virtual or real-world imagery elements.

EP 2,306,251A discloses a hologram generating device and a hologram generating method that allows the generation of a hologram for reproducing an easily observable three-dimensional image without restrictions on object sizes. The hologram generating device includes an object light generation means for generating object light in a first polarization direction, a reference light generation means for generating reference light in a second polarization direction intersecting with the first polarization direction at right angle, an irradiation means for irradiating with the object light and the reference light from the front surface side, a polarization light selecting reflection means placed on the rear surface side for reflecting only either one of the object light and the reference light transmitting through a hologram recording layer, and a polarization conversion means placed between the hologram recording layer and the polarization selecting reflection means for converting the polarization direction of one of the reflected object light and reference light to a polarization direction intersecting with that of the reflected one at right angle, wherein the one of the object light and the reference light incident from the rear surface is made to interfere with the other of the object light and reference light incident from the front surface in the hologram recording layer to record a reflection type hologram on the hologram recording layer.

US 2015/125109A discloses grating configurations for creating time sequenced field of view (FOV) tiles for a waveguide display. Pairings of non-output diffraction gratings and output diffraction gratings are activated to create a number of FOV tiles in a time sequence, for example in a frame update period for the image. Examples of a non-output grating are an input grating and a fold grating. For a set of at least three gratings used to make the pairings, each non-output grating is paired with each output grating. The number of pairings, and so the number of FOV tiles, is equal to a product of the total number of non-output gratings and the total number of output gratings. At least one diffraction grating in the pairing is an active pairing. Also described is a multiplexed diffraction grating including multiplexed K-vectors which increases the overall angular bandwidth for both incidence and diffraction.

Systems and methods disclosed herein address various challenges related to display technologies, including AR and VR technology.

### SUMMARY

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes.

Methods of fabricating volume phase holograms using liquid crystal gratings are disclosed herein. Some such volume phase holograms comprise diffraction gratings usable as in-coupling elements, out-coupling optical elements, orthogonal pupil expanders in head mounted display system.

Example embodiments described herein have several features, no single one of which is indispensable or solely responsible for their desirable attributes. A variety of example systems and methods are provided below.

These and other features will now be described with reference to the drawings summarized above. The drawings and the associated descriptions are provided to illustrate embodiments and not to limit the scope of the disclosure or claims. Throughout the drawings, reference numbers may be reused to indicate correspondence between referenced elements. In addition, where applicable, the first one or two digits of a reference numeral for an element can frequently indicate the figure number in which the element first appears.

### BRIEF DESCRIPTION OF THE DRAWINGS

Figure 1 illustrates a user's view of augmented reality (AR) through an AR device.
Figure 2 illustrates an example of a wearable display system.
Figure 3 illustrates a conventional display system for simulating three-dimensional imagery for a user.
Figure 4 illustrates aspects of an approach for simulating three-dimensional imagery using multiple depth planes.
Figures 5A-5C illustrate relationships between radius of curvature and focal radius.
Figure 6 illustrates an example of a waveguide stack for outputting image information to a user.
Figure 7 illustrates an example of exit beams outputted by a waveguide.
Figure 8 illustrates an example of a stacked waveguide assembly in which each depth plane includes images formed using multiple different component colors.
Figure 9A illustrates a cross-sectional side view of an example of a set of stacked waveguides that each includes an in-coupling optical element.
Figure 9B illustrates a perspective view of an example of the plurality of stacked waveguides of Figure 9A.
Figure 9C illustrates a top-down plan view of an example of the plurality of stacked waveguides of Figures 9A and 9B.
Figure 10A illustrates a top-down perspective view of an example of a grating structure comprising a plurality of sublayers of liquid crystal material.
Figure 10B illustrates a side view of the grating structure of Figure 10A.
Figure 11 illustrates an example of a grating structure comprising a plurality of sublayers of liquid crystal material having laterally offset repeating units of liquid crystal molecules.
Figures 12A and 12B-1 illustrate examples of stacks of grating structures.
Figure 12B-2 is an example of plot of the tilt angles and thicknesses of the stack illustrated in Figure 12B-1.
Figure 12C-1 illustrates an example of a single liquid crystal polarization grating structure having one tilt angle.

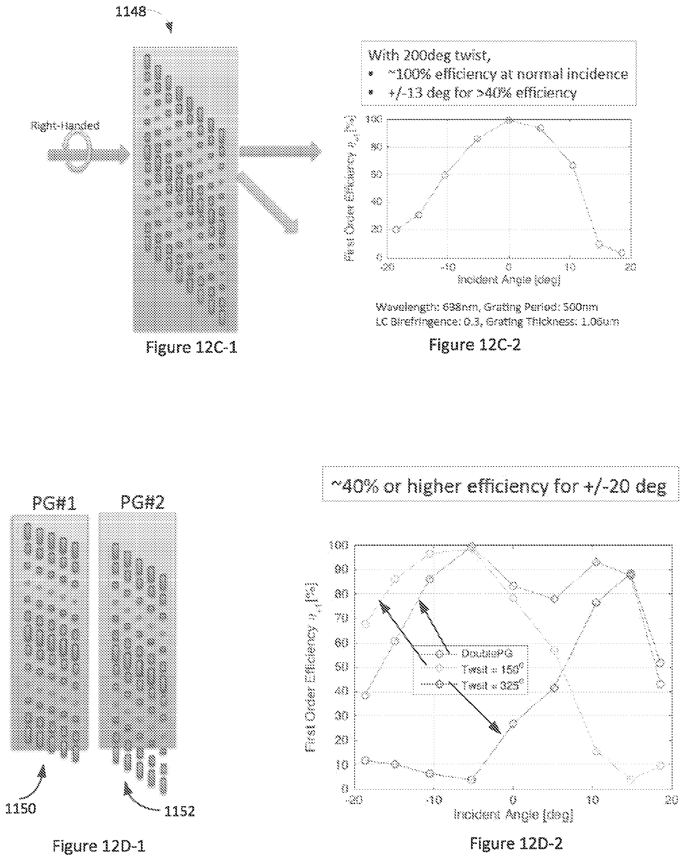

Figure 12C-2 illustrates examples of the first order diffraction efficiency, for light of different incident angles, of the single liquid crystal polarization grating structure having one tilt angle depicted in Figure 12C-1.
Figure 12D-1 illustrates an example of a stack of two liquid crystal polarization grating structures, each having a tilt angle of a different magnitude.
Figure 12D-2 illustrates examples of the first order diffraction efficiency, for light of different incident angles, of the stack of two liquid crystal polarization grating structures, each having a tilt angle of a different magnitude depicted in Figure 12D-1.

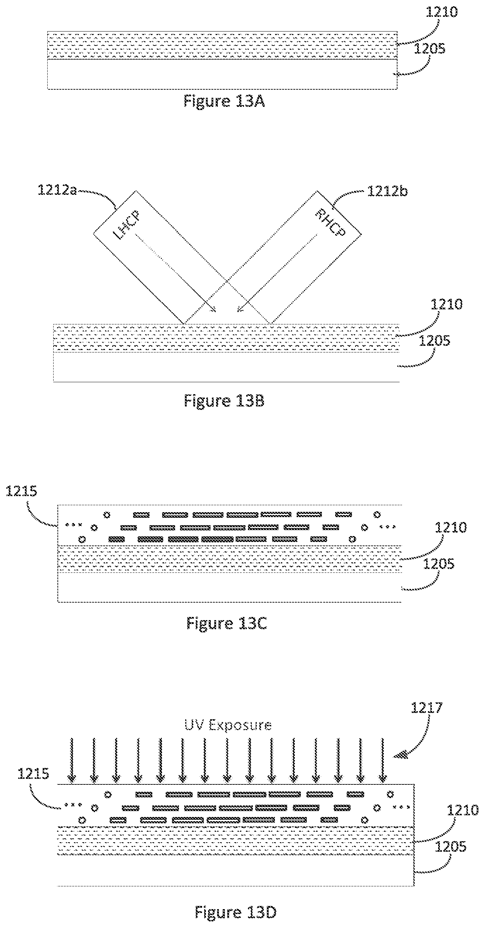

Figures 13A-13E illustrate examples of different structures formed during a process for making a stack of grating structures.

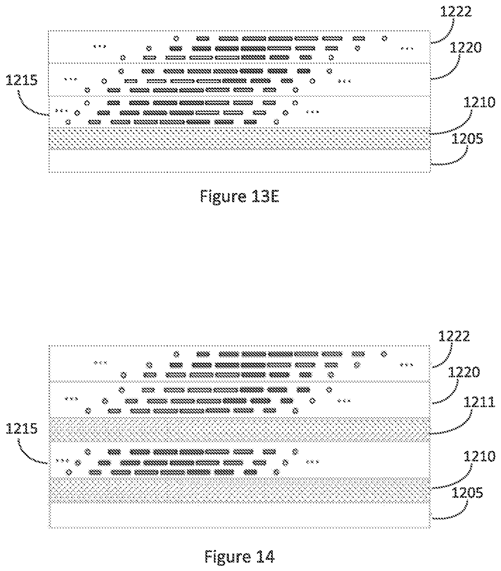

Figure 14 illustrates a stack of grating structures having multiple alignment layers.

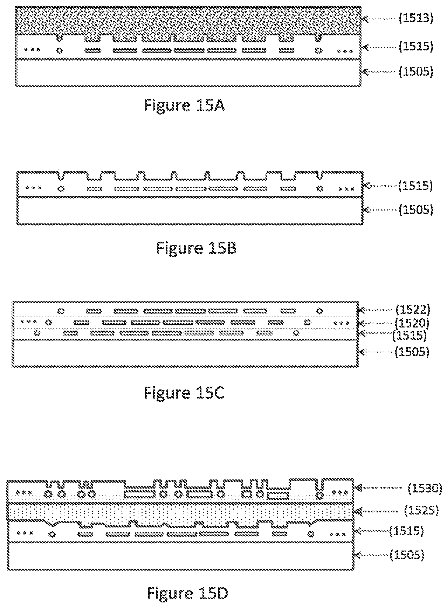

Figures 15A-15D illustrate examples of different structures formed during another process for making a stack of grating structures.

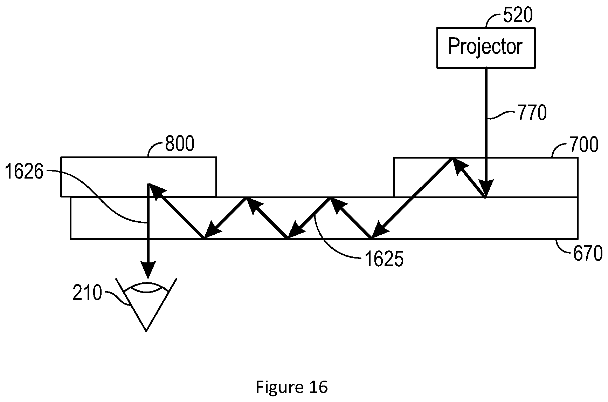

Figure 16 is an example of the coupling of light into and out of a waveguide using volume phase holographic gratings (VPHGs) as in-coupling and out-coupling optical elements, respectively.

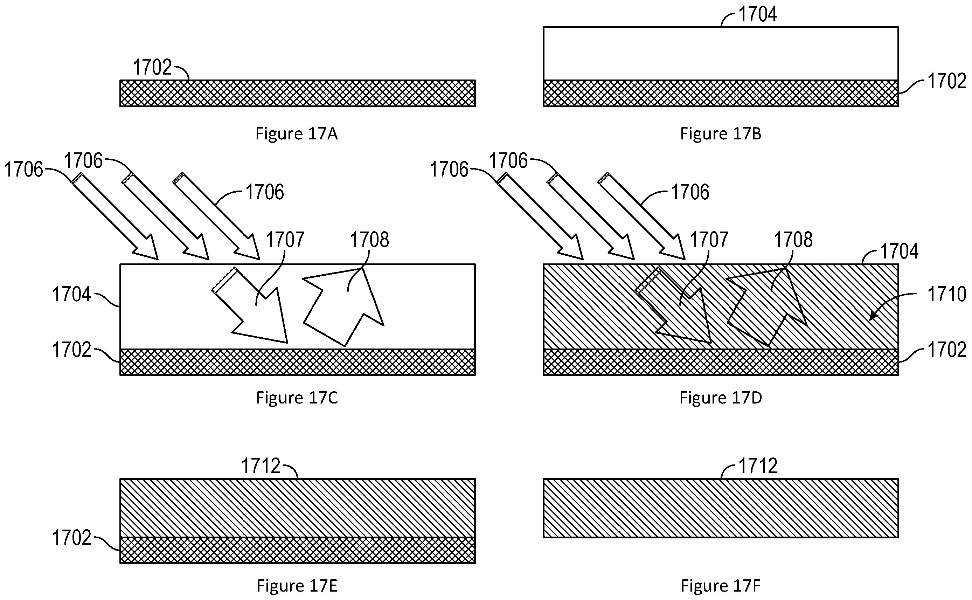

Figures 17A-17F illustrate an example of a method for fabricating a VPHG using a master grating which is not according to the claimed invention.

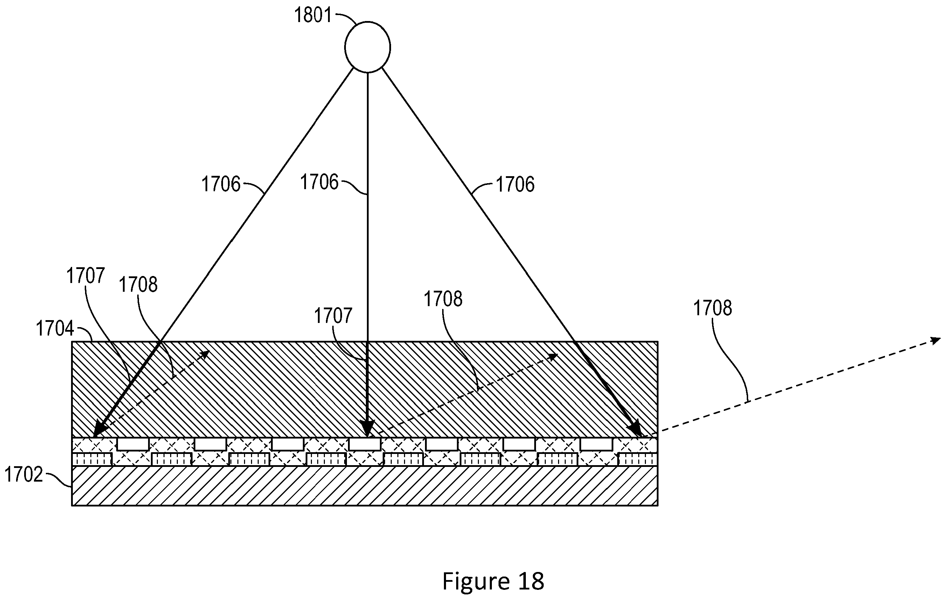

Figure 18 illustrates an example the recordation of a VPHG in a photosensitive layer using a divergent beam generated by a point source.

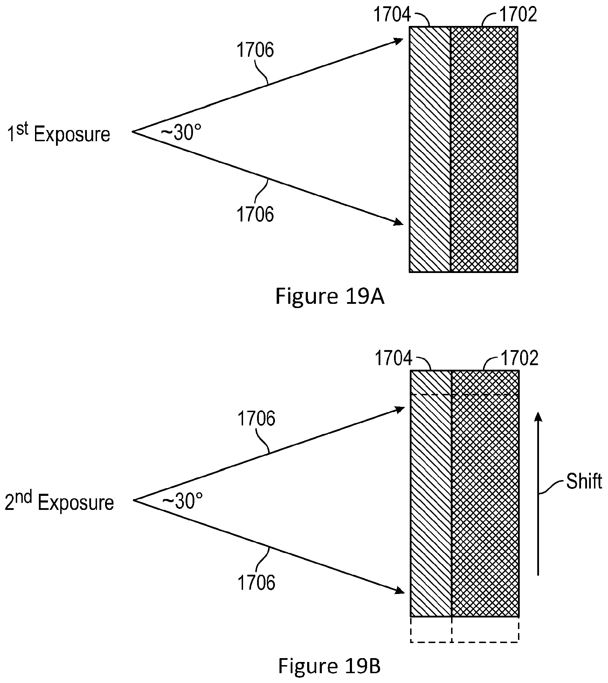

Figures 19A-19B illustrate an example of a method for multistep recording of a VPHG.

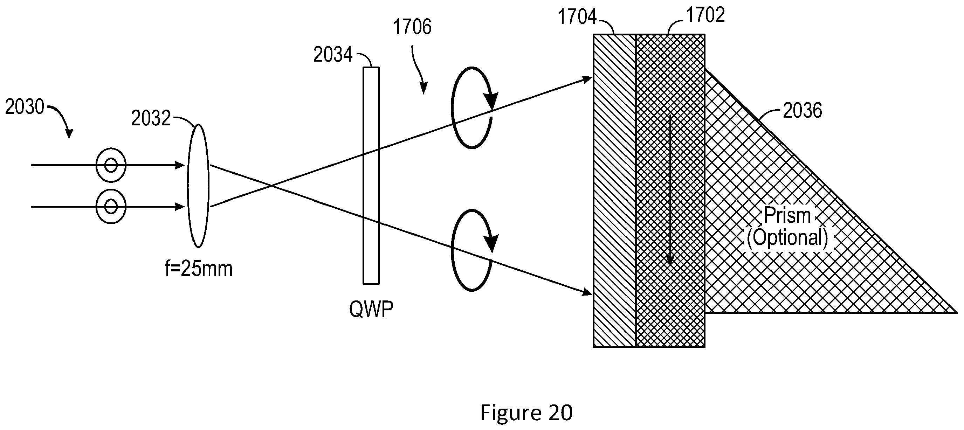

Figure 20 illustrates an example of a configuration for generating the recording beam used to record a VPHG.

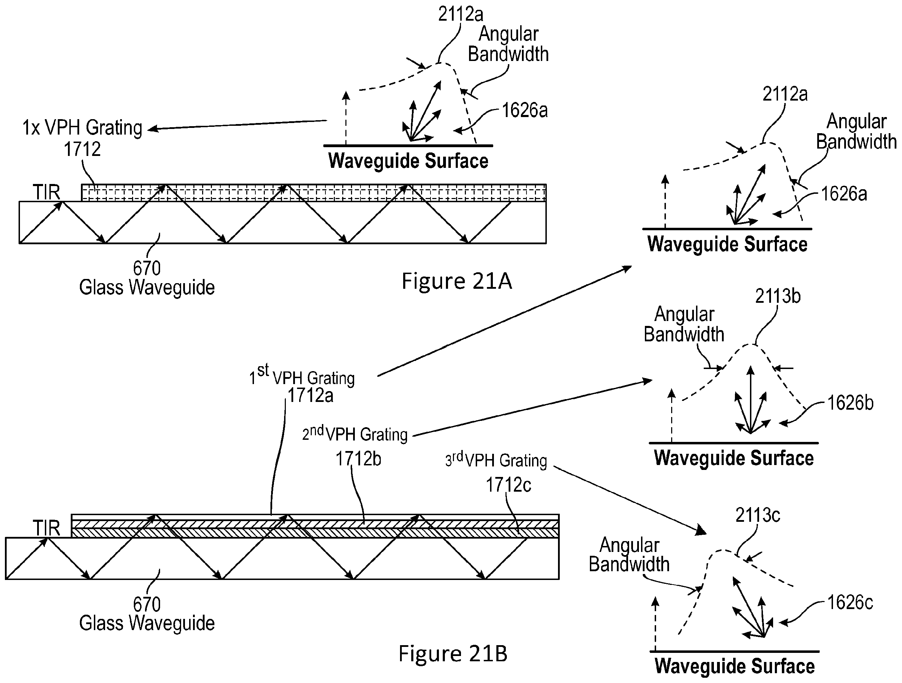

Figure 21A illustrates out-coupling of light from a waveguide using a single VPHG disposed on a waveguide, and the angular distribution of the out-coupled light beams.
Figure 21B illustrates out-coupling of light from a waveguide using a stack of three VPHGs disposed on a waveguide, and the angular distribution of the out-coupled light beams.

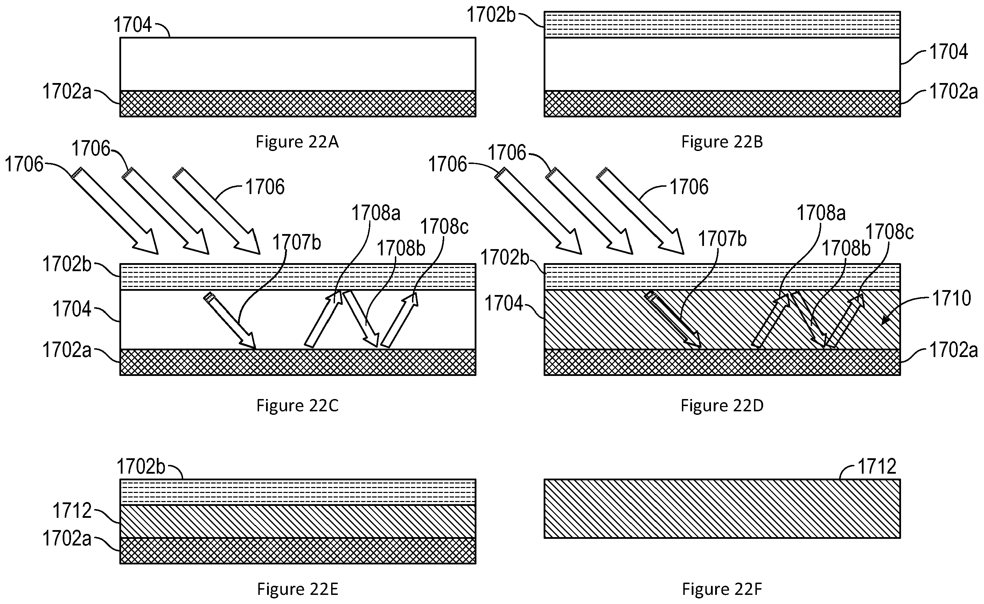

Figures 22A-22F illustrate an example of a method for fabricating a VPHG using two master gratings.

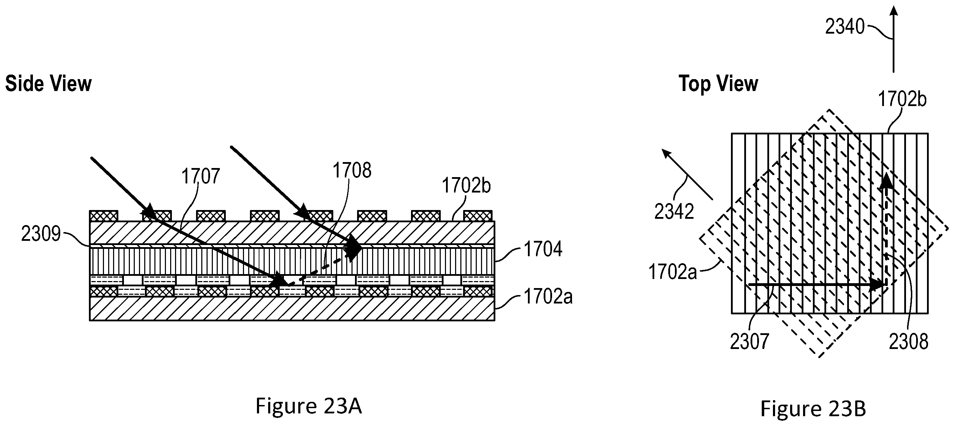

Figures 23A-23B illustrate (A) a side view, and (B) a top view, of an example arrangement for recording a VPHG using two master gratings.

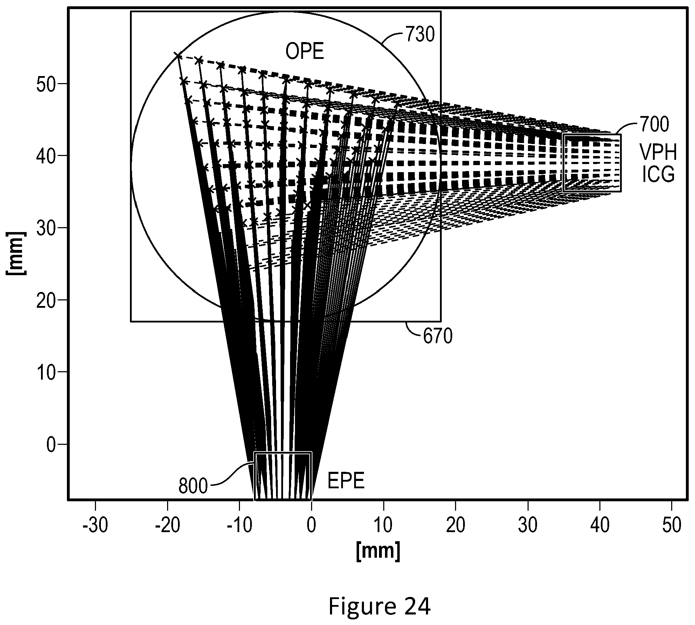

Figure 24 is an example of a simulation illustrating redirecting guided light received from a first VPHG, functioning as an in-coupling optical element to a second VPHG functioning as an out-coupling optical elements, with the light optionally routed via an intermediate third VPHG.

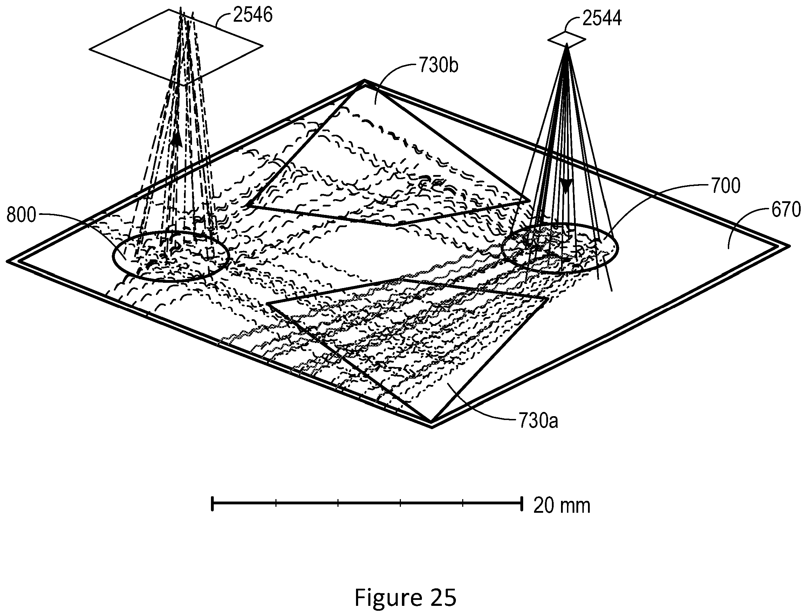

Figure 25 is a simulation illustrating an example of a configuration for coupling multicolor light into a waveguide using a VPHG in-coupling optical element, redirecting multicolor light using to VPHG OPEs and coupling multicolor light out of the waveguide using a VPHG functioning as an EPE.

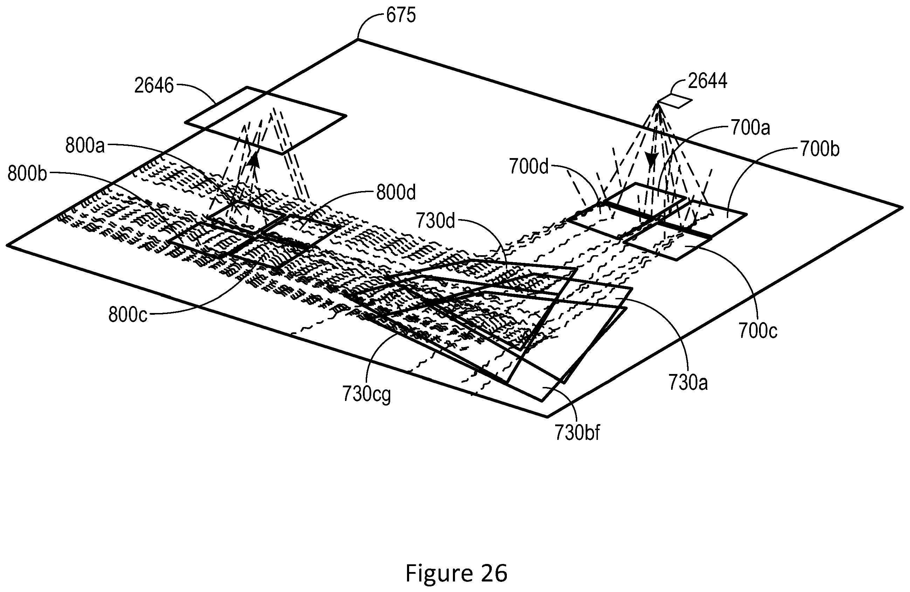

Figure 26 is a simulation illustrating an example of a configuration for coupling light into a waveguide, redirecting light inside the waveguide and coupling light out of the waveguide using a plurality of VPHGs as in-coupling optical elements, a plurality of VPHGs as OPEs and a plurality of VPHGs as out-coupling optical elements and EPEs.

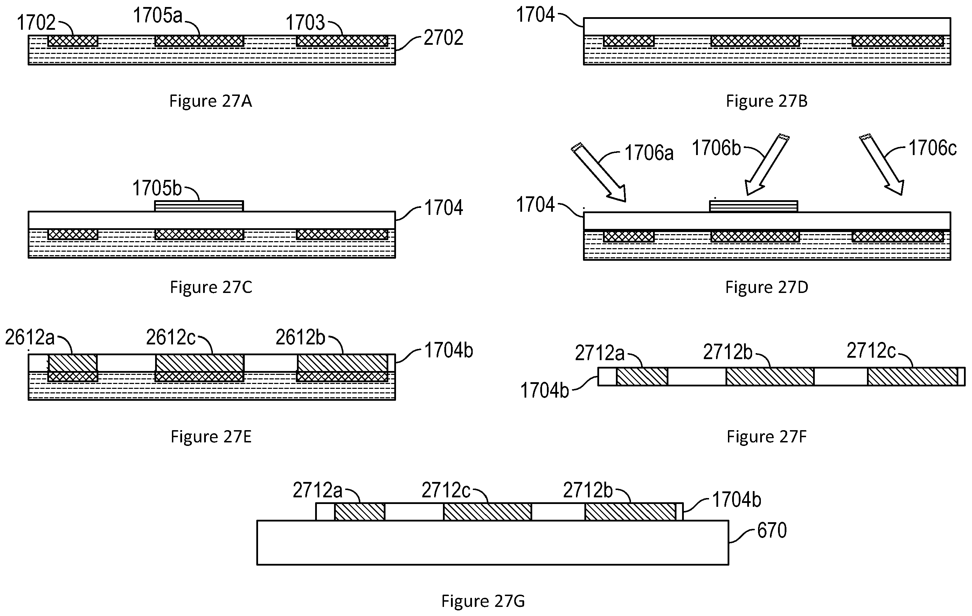

Figures 27A-27G illustrate an example method for fabricating a VPHG layer comprising multiple VPHGs, and attaching the VPHG layer to a waveguide.

Like reference numbers and designations in the various drawings indicate like elements throughout.

### DETAILED DESCRIPTION

Volume phase holographic gratings (VPHGs) are diffractive optical elements that diffract light based on the interaction of an incident beam of light or a guided light wave (e.g., light propagating inside a waveguide) with a recording medium whose optical properties (e.g., refractive index and/or optical absorption) are spatially modulated within a volume of the recording medium that interacts with the incident beam of light or the guided light wave. Advantageously, VPHGs may diffract light at higher efficiencies than other types of gratings (e.g., surface relief gratings, liquid crystal polarization gratings, and the like). In some implementations, the VPHG may be configured to diffract light at very high efficiencies (e.g., diffraction efficiencies greater than or equal to about 80% or 90%). Such high efficiencies may be beneficial for, e.g., in-coupling or out-coupling light into or out of a waveguide. A VPHG may be a reflective grating or a transmission grating.

In some implementations, the VPHG may comprise a layer of photosensitive material whose optical properties (e.g., refractive index and/or optical absorption) are spatially modulated within a larger layer of the photosensitive material (this larger layer of the photosensitive material may be referred to as PL or photosensitive layer). In some examples, the VPHG may be a hologram formed in the PL using a holographic process (a process used to form a hologram). In some implementations, a thickness of the VPHG (e.g., a thickness of the layer in which the optical properties are modulated) may be less than or equal to the thickness of the PL. In some such implementations, the VPHG may be a thick hologram or a thick holographic grating (also referred to as a Bragg hologram) where the thickness of the VPHG is larger than the wavelength of a beam of light incident on the VPHG. Advantageously, a thick holographic grating may diffract such beam of light with very high efficiency. The diffraction efficiency of a VPHG may be proportional to the thickness of the VPHG.

The photosensitive material may be a material whose optical properties (e.g., refractive index and/or optical absorption) may be locally changed (at locations receiving incident light) when illuminated by light having wavelengths within a certain wavelength range (e.g., ultraviolet or visible wavelength range), herein referred to as the *characteristic wavelength range* of the photosensitive material; thus, in some cases, a photosensitive material may have its refractive index changed by light having a wavelength within the characteristic wavelength range of the photorefractive material. Examples of photosensitive material include, but are not limited to dichromated gelatin (DCG), photopolymers, photorefractive crystals, and the like. In some implementations, the thickness of the VPHG (e.g., a layer of material defining and fully occupied by the VPHG) may be between 1 and 10 micrometers, 10 and 100 micrometers, 0.1 and 1 mm, or 1 mm and 2 mm. In some implementations, the VPHG may be sandwiched between two protective films, at least one of the films being transparent to light within a wavelength range for which the VPHG has a desired optical functionality. In some implementations, the protective film may be formed from glass, polymers, and the like.

In some implementations, the VPHG may diffract an incident beam of light with very high efficiency (e.g., larger than 80%) within a wavelength range centered around a peak wavelength (e.g., corresponding to a component color for forming component color images). In these examples, the peak wavelength may be controlled by changing the angle of incidence of the incident beam. The maximum efficiency (e.g., the efficiency at the peak wavelength) may also depend on the angle of incidence. For a given angle of incidence, the peak wavelength and peak efficiency may be controlled by the spatial variation of the optical properties (e.g., refractive index variations) recorded inside the corresponding PL and therefore may be selected during manufacturing (e.g., during a hologram recording process).

In various implementations, a VPHG may be configured to transform a beam of light or a guided light wave (e.g., light propagating inside a waveguide) to another beam of light or guided light wave. In some implementations, a VPHG may be a *reflective* grating that transforms an *input beam* of light into a reflected beam of light. In some other examples, the VPHG may be a *transmissive* grating that transforms the input beam of light to a transmitted beam of light. In some implementations, a VPHG may transform the input beam of light to an output guided light wave (e.g., light propagating inside a waveguide). In some other examples, a VPHG may transform an input guided light wave to an output beam of light. In yet other examples, the VPHG may transform the input guided light wave to an output guided light wave. In various examples, the input/output beam of light may be a divergent, collimated or convergent beam of light propagating in free space and the guided light wave can be light propagating inside a waveguide (e.g., a slab waveguide) via total internal reflection (TIR) at the boundaries of the waveguide. In some implementation, the waveguide may be a waveguide used in a wearable or a head mounted display system. In some such implementations, the waveguide can be a waveguide in a stack of waveguides (a waveguide stack) used as a see-through display.

In some implementations, transforming the beam of light or the guided light wave may comprise diffracting the beam of light or the guided light wave. In various implementations, transforming the beam of light or the guided light wave may include changing the shape of the wavefront and/or changing the direction of propagation of the beam of light. In some implementations, transforming the beam of light or the guided light wave may include, but is not limited to a specific relationship between the optical phase distribution in the input and output beams of light and light waves. The specific transformation supported by the VPHG may be referred to as the *optical function* of the VPHG. The optical function of a VPHG may be controlled by the distribution and amplitude of refractive index and/or optical absorption variation within the VPHG. Thus, the optical function of a VPHG may advantageously be selected by design during fabrication (e.g., during a hologram recording process) in some implementations, as discussed herein.

In some implementations, the optical function of a VPHG may be different for different input light beams or input guided light waves (e.g., having different wavelengths, beam shapes, wavefronts, polarizations, angles of incidence and the like). For example, optical input beams that are incident on the VPHG at different angles may be transformed or diffracted according to different optical functions. Similarly, input light beams and light waves having different wavelengths may be transformed or diffracted according to different optical functions.

As such, a VPHG may support a specific optical function for a specific input light beam (or input guided light wave) or a specific set of input light beams (or guided lightwaves). In some implementations, a VPHG may be designed and fabricated to transform a beam with a specific wavelength that is incident on the VPHG at a specific angle to a specific output beam. In some other implementations, a VPHG may be designed and fabricated to transform a beam with a wavelength within a specific wavelength range that is incident on the VPHG at an angle within a specific incident angle range, to a specific output beam. The specific wavelength range may be referred to as the *"operational wavelength range"* of the VPHG and the specific incident angle range may be referred to as the *"operational incident angle range"* of the VPHG. The wavelength at which the VPHG transforms light to the specific output beam with highest efficiency may be referred as *"operational wavelength"* of the VPHG. Thus, if the wavelength of an input beam light is within the operational wavelength range of the VPHG associated with an optical function for which the VPHG has been designed and fabricated, the optical transformation may be supported if the input beam of light is incident on the VPHG with an angle within the operational incident angle range of the VPHG and may not be supported at angles outside the operational incident angle range; this property is herein referred to as *"selectivity"* of the VPHG.

In some implementations, the distribution of refractive index over a VPHG may be a periodic distribution characterized with a spatial period Λ_{HG}. Without being limited by theory, in some such examples, the angle at which such a VPHG may diffract an incident beam of light with the wavelength λ, with highest efficiency may be related to Λ_{HG} and λ, by the following equation (known as Bragg equation): $θ = {Sin}^{- 1} \left(\frac{λ \times K}{2 {nΛ}_{HG}}\right)$ where n is the average refractive index of the PL (after formation of the VPHG) and K is an arbitrary integer. In some implementations, K may quantify the diffraction order. θ is the angle between the incident beam and the planes defined by points inside VPHG that have the same refractive index.

In some cases, the spatial refractive index variation (and/or optical absorption variation) inside the VPHG may be tailored such that diffraction efficiency approaches 100% near the operational wavelength of the VPHG.

In some implementations, the spatial refractive index variation (and/or optical absorption variation) inside the VPHG may be selected to provide diffractive properties (e.g., efficiency, optical function, selectivity, peak wavelength and the like), that depend on the polarization state of the incident beam of light. In some implementations, a VPHG (e.g., a reflective VPHG, a transmissive VPHG or a VPHG that diffracts guided waves), may diffract a portion of incident light having wavelengths within the operational wavelength range of the VPHG while transmitting the portion of incident light that is not diffracted, without affecting the optical characteristics (e.g., wavefront, wavelength content, polarization and the like) of the transmitted light. Advantageously, transmitting the portion of incident light that is not diffracted without affecting its optical characteristics may facilitate using a stack of VPHGs (positioned one above another) to independently diffract portions of a light beam having non-overlapping wavelengths, in which each diffracted beam may be associated with (e.g., outcoupled by) one of the VPHG of plurality of VPHGs in the stack. This property is particularly beneficial for coupling multi-color light to a waveguide stack used in wearable or head mounted display systems (as described herein).

In some implementations, the VPHGs may be utilized as constituent parts of a display system (e.g., a head mounted or wearable display system). The display system may include a waveguide or a waveguide stack, and an image injection system or a light projector system configured to direct light into the waveguide or the waveguide stack. In some examples, one or more of the image injection devices of the image injection system may inject light to waveguides in the waveguide stack from a position that requires light to be redirected for in-coupling. In these examples, one or more VPHGs may be used as one or more of an input coupling grating (ICG), or an in-coupling optical element, to couple light to one or more waveguides in the waveguide stack.

The VPHGs may also be used as one or more of an exit pupil expander (EPE) or out-coupling optical element to redirect or extract light propagating within a waveguide of the waveguide stack out of the waveguide, to output image information to an eye of a user of the head mounted or wearable display. In some implementations, when used as an EPE, the VPHG may allow shorter pupil relief between the VPHG and the user's eye that receives the output beam. Additionally, the VPHG may support a smaller exit pupil located on the user's eye. Advantageously, a small exit pupil located on the user's eye may reduce the amount of light lost when coupling light from a waveguide to the user's eye.

Further, VPHGS according to some implementations may be used as one or more of a light redistributing optical element for receiving incident light propagating in the waveguide and for redirecting that incident light so that the redirected light continues to propagate through the waveguide by total internal reflection. Examples of the latter type of optical element include pupil expanders such as orthogonal pupil expanders (OPEs). For example, one or more VPHGs may be used as OPE's to deflect or distribute light received from one or more in-coupling optical elements toward the out-coupling optical elements. In some implementations, VPHGs may also increase the beam or spot size of the light that is redirected and that propagates to the out-coupling optical elements.

In some implementations, a VPHG may support an improved point spread function compared to other types of gratings (e.g., surface relief gratings, liquid crystal polarization gratings, and the like).

In some examples, the optical function of a VPHG may be associated with an optical functionality of the VPHG as an ICG, EPE or OPE on a waveguide or a waveguide in a waveguide stack used in a wearable or head mounted display. For example, the optical function of a VPHG functioning as ICG on a waveguide may be used to quantify a relation between a beam of light incident on the VPHG and the resulting diffracted (or deflected) light that propagates in the waveguide.

As described above, VPHGs may be used to in-couple, out-couple, and/or redirect light propagating within the waveguide (e.g., a waveguide in waveguide stack). The light may be light of a single wavelength or a single range of wavelengths (e.g., visible wavelength range, near-IR wavelength range, or mid-IR wavelength range). In some other implementations, the light may be a light stream that is part of a multiplexed light stream that includes a plurality of light streams having different light properties (e.g., each stream may have a different wavelength). For example, a VPHG disposed on a waveguide, may be configured to selectively redirect an incident light stream formed of light having a particular light property (e.g., a first wavelength or first range of wavelengths) into the waveguide, while being substantially transmissive to one or more other streams of light (e.g., having wavelengths different from the first wavelength or first range of wavelengths). In some implementations, the waveguide is part of a stack of waveguides, which may include a second waveguide including in-coupling optical elements configured to selectively in-couple a second of the streams of light while being transmissive to one or more other streams of light. In some implementations, the in-coupling VPHGs used on a waveguide are configured to transmit at least one of the streams of light to the in-coupling optical elements (e.g., diffractive optical elements or VPHGs) of the second waveguide.

In some implementations, multiple VPHGs, having different diffractive properties (e.g., different optical functions), may be stacked vertically and/or disposed on the same vertical level (e.g., laterally spaced-apart from one another) on a waveguide. In some such implementations, the plurality of discrete VPHGs may be used to couple light of different wavelengths into or out of a single waveguide. For example, a plurality of discrete VPHGs may be used to couple portions of light having different colors, wherein each color includes a wavelength range, into and out of a single waveguide.

In yet other implementations, a single VPHG may be used to couple multi-color light into and/or out of a waveguide and/or redirect multi-color light in a waveguide.

Advantageously, using a VPHG may eliminate the need for additional optical elements (e.g., an optical relay) to couple a beam of light (e.g., an image) generated by a light projector system into a waveguide (e.g., a waveguide in a wearable or head mounted display).

In some implementations, where the waveguides of a wearable display system display or head mounted display (HMD) are made of polymer material or other soft materials, using VPHGs as in-coupling/out-coupling optical elements and OPEs may facilitate the attachment of the VPHG to the waveguides.

Advantageously, when VPHGs are used in HMDs or wearable displays, their high diffraction efficiency (particularly for use as in-coupling optical elements) and ability to be highly operationally selective for wavelength and/or angle of incidence or light redirection, combined with their small form factor and low density of structural material, may result in wearable displays with improved power efficiency (e.g., because bright images may be generated with lower input intensity, e.g., due to the high efficiency and selectivity of the VPHGs more compact and/or lower power light and projection systems may be utilized), lower weight and smaller form factor.

In some implementations, a VPHG may be fabricated by recording a spatial distribution of refractive index change (and/or optical absorption change) in a volume in a layer of a photosensitive material (a photosensitive layer or PL). In some implementations, the photosensitive layer may be exposed to an optical intensity distribution generated at least in part by a *recording light beam* having a wavelength within the characteristic wavelength range of the photosensitive material. In these examples, the characteristic wavelength range of the photosensitive material may be referred to as the *recording wavelength range.* In some implementations, the distribution of refractive index inside the photosensitive layer may be permanently changed proportional to the optical intensity distribution generated by the recording light beam. Thus, a specific three dimensional refractive index pattern or optical absorption pattern may be recorded in the photosensitive layer resulting in a VPHG with specific diffractive properties (e.g., optical function, selectivity, and the like).

The VPHG fabricated according to the claimed invention is fabricated using an optical intensity distribution generated using two master gratings. According to the claimed invention, the two master gratings are liquid crystal polarization gratings. Illuminating the master grating by the recording light beam generates the optical intensity distribution within the PL. Advantageously, fabrication of VPHG using one or two master gratings may facilitate replication of VPHGs with identical or near identical refractive properties. Such approaches may be used for low cost and high volume production of VPHGs for various applications. For example, this fabrication method may be used for fabricating VPHGs that may function as in-coupling optical elements, out-coupling optical elements (e.g., exit pupil expander or EPEs), and/or as light redirecting structures (e.g., orthogonal pupil expanders or OPEs) in wearable or head mounted displays.

Advantageously, if a liquid crystal master grating (e.g., a liquid crystal polarization grating) is used to fabricate (or replicate) a VPHG, the optical function and the selectivity of the resulting VPHG may be controlled independently during the fabrication process. For example, the optical function may be set based upon the liquid crystal master grating, while the selectivity may be set based upon the recording light beam (e.g., angle of incidence of the recording light beam). Without being limited by theory, liquid crystal master gratings (e.g., cholesteric liquid crystal polarization gratings) are believed to only support one order of diffraction, which may advantageously eliminate parasitic holograms that may be formed during the recording process. It will be appreciated that the presence of such parasitic holograms adversely affects the performance of the VPHG, particularly for imaging applications (e.g., when VPHGs are used in HMDs), by, for example, causing unintended optical functionality. In some cases, a polarization of the recording light beam may be controlled to reduce or eliminate high order diffraction by the liquid crystal master grating. In some implementations, only a single diffraction order may advantageously be present.

These characteristics (e.g., independent control over optical function and selectivity, and the absence of higher diffraction orders), may help mitigate certain challenges associated with the design and fabrication of VPHGs, when liquid crystal master gratings are used. For example, it will be appreciated that VPHGs are typically fabricated using a recording light beam with a wavelength similar to an operational wavelength range. However, finding photosensitive materials with characteristic wavelengths that overlap with the desired operational wavelengths range of a VPHG may be difficult for some operational wavelengths. In some implementations, the characteristic wavelength range of the photosensitive material may be within the ultraviolet wavelength range (e.g., between 100-400 nm) or visible wavelength range (e.g., 400 nm -750 nm), while the desired operational wavelength range of the corresponding VPHGs for certain applications may be within near-IR wavelength range (e.g., 700 nm - 2000 nm) or mid-IR wavelength range (e.g., 2000 - 4000 nm). For example, some wearable displays may be configured to project light having a wavelength within in near-IR or mid-IR wavelength range towards or into an eye of a user of the wearable display (e.g., for eye tracking or medical diagnostic applications). As such, the operational wavelength ranges of VPHGs used as ICGs, EPEs or OPEs in such wearable displays are preferably within the near-IR or mid-IR wavelength range. Advantageously, the independent control of the optical function and selectivity during the recording process combined with the fact that liquid crystal master gratings only support one order of diffraction, may allow fabrication of VPHGs having non-overlapping operational and recording wavelength ranges in some implementations.

It will be appreciated that changing the distribution of the refractive index variation over the volume of the VPHG (e.g., the periodicity, amplitude of the refractive index change, etc.) may change the operational wavelength and operational wavelength range of the VPHG. In some implementations, multiple VPHGs, having different three dimensional refractive index patterns, may be used to diffract light of different wavelengths. In some other examples, a VPHG may be recorded in a single volume of the photosensitive material to support near identical optical functions at different wavelengths or wavelength ranges. In some such examples, the VPHG may comprise several interleaving refractive index distributions (and/or optical absorption distributions) reordered in a single volume using multiple exposures using the same or different recording wavelengths. Advantageously, using liquid crystal polarization master gratings to fabricate VPHGs may facilitate the recording of such VPHGs by eliminating parasitic interference patterns (e.g., interference patters associated with one or more high order diffractions). Such VPHGs may be used to couple light of different wavelengths into or out of a single waveguide.

In addition to AR display systems, it will be appreciated that VPHGs according to some implementations may be utilized in other applications in which diffractive optical elements are utilized. For example, the liquid crystal grating structures may be utilized to steer light in other optical systems, including flat panel computer monitors or televisions, illuminated signs, imaging systems, etc.

Reference will now be made to the figures, in which like reference numerals refer to like parts throughout. It will be appreciated that some implementations disclosed herein include optical systems, including display systems, generally. In some implementations, the display systems are wearable, which may advantageously provide a more immersive VR or AR experience. For example, displays containing one or more waveguides (e.g., a stack of waveguides) may be configured to be worn positioned in front of the eyes of a user, or viewer, and the waveguides may be considered to be eyepieces in some implementations. In some implementations, two stacks of waveguides, one for each eye of a viewer, may be utilized to provide different images to each eye.

### Example Display Systems

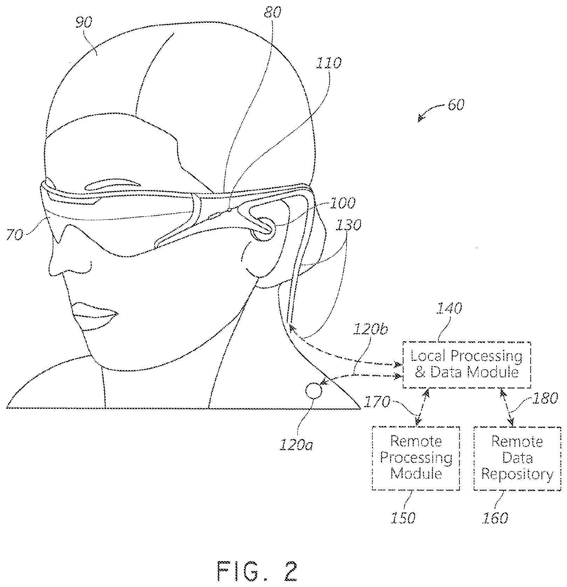

Figure 2 illustrates an example of wearable display system 60. The display system 60 includes a display 70, and various mechanical and electronic modules and systems to support the functioning of that display 70. The display 70 may be coupled to a frame 80, which is wearable by a display system user or viewer 90 and which is configured to position the display 70 in front of the eyes of the user 90. The display 70 may be considered eyewear in some implementations. In some implementations, a speaker 100 is coupled to the frame 80 and configured to be positioned adjacent the ear canal of the user 90 (in some implementations, another speaker, not shown, is positioned adjacent the other ear canal of the user to provide stereo/shapeable sound control). In some implementations, the display system may also include one or more microphones 110 or other devices to detect sound. In some implementations, the microphone is configured to allow the user to provide inputs or commands to the system 60 (e.g., the selection of voice menu commands, natural language questions, etc.), and/or may allow audio communication with other persons (e.g., with other users of similar display systems. The microphone may further be configured as a peripheral sensor to collect audio data (e.g., sounds from the user and/or environment). In some implementations, the display system may also include a peripheral sensor 120a, which may be separate from the frame 80 and attached to the body of the user 90 (e.g., on the head, torso, an extremity, etc. of the user 90). The peripheral sensor 120a may be configured to acquire data characterizing the physiological state of the user 90 in some implementations. For example, the sensor 120a may be an electrode.

With continued reference to Figure 2, the display 70 is operatively coupled by communications link 130, such as by a wired lead or wireless connectivity, to a local data processing module 140 which may be mounted in a variety of configurations, such as fixedly attached to the frame 80, fixedly attached to a helmet or hat worn by the user, embedded in headphones, or otherwise removably attached to the user 90 (e.g., in a backpack-style configuration, in a belt-coupling style configuration). Similarly, the sensor 120a may be operatively coupled by communications link 120b, e.g., a wired lead or wireless connectivity, to the local processor and data module 140. The local processing and data module 140 may comprise a hardware processor, as well as digital memory, such as non-volatile memory (e.g., flash memory or hard disk drives), both of which may be utilized to assist in the processing, caching, and storage of data. The data include data a) captured from sensors (which may be, e.g., operatively coupled to the frame 80 or otherwise attached to the user 90), such as image capture devices (such as cameras), microphones, inertial measurement units, accelerometers, compasses, GPS units, radio devices, gyros, and/or other sensors disclosed herein; and/or b) acquired and/or processed using remote processing module 150 and/or remote data repository 160 (including data relating to virtual content), possibly for passage to the display 70 after such processing or retrieval. The local processing and data module 140 may be operatively coupled by communication links 170, 180, such as via a wired or wireless communication links, to the remote processing module 150 and remote data repository 160 such that these remote modules 150, 160 are operatively coupled to each other and available as resources to the local processing and data module 140. In some implementations, the local processing and data module 140 may include one or more of the image capture devices, microphones, inertial measurement units, accelerometers, compasses, GPS units, radio devices, and/or gyros. In some other implementations, one or more of these sensors may be attached to the frame 80, or may be standalone structures that communicate with the local processing and data module 140 by wired or wireless communication pathways.

With continued reference to Figure 2, in some implementations, the remote processing module 150 may comprise one or more processors configured to analyze and process data and/or image information. In some implementations, the remote data repository 160 may comprise a digital data storage facility, which may be available through the internet or other networking configuration in a "cloud" resource configuration. In some implementations, the remote data repository 160 may include one or more remote servers, which provide information, e.g., information for generating augmented reality content, to the local processing and data module 140 and/or the remote processing module 150. In some implementations, all data is stored and all computations are performed in the local processing and data module, allowing fully autonomous use from a remote module.

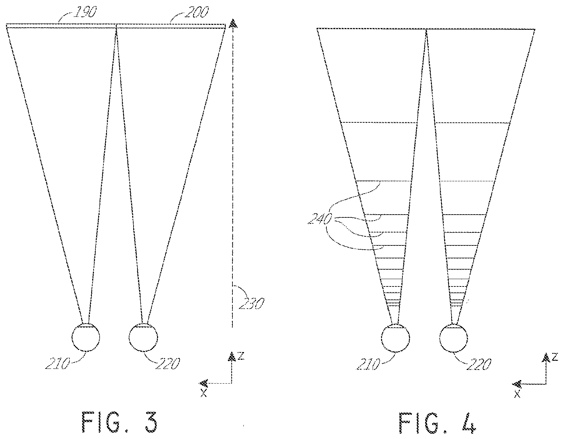

The perception of an image as being "three-dimensional" or "3-D" may be achieved by providing slightly different presentations of the image to each eye of the viewer. Figure 3 illustrates a conventional display system for simulating three-dimensional imagery for a user. Two distinct images 190, 200-one for each eye 210, 220-are outputted to the user. The images 190, 200 are spaced from the eyes 210, 220 by a distance 230 along an optical or z-axis that is parallel to the line of sight of the viewer. The images 190, 200 are flat and the eyes 210, 220 may focus on the images by assuming a single accommodated state. Such 3-D display systems rely on the human visual system to combine the images 190, 200 to provide a perception of depth and/or scale for the combined image.

It will be appreciated, however, that the human visual system is more complicated and providing a realistic perception of depth is more challenging. For example, many viewers of conventional "3-D" display systems find such systems to be uncomfortable or may not perceive a sense of depth at all. Without being limited by theory, it is believed that viewers of an object may perceive the object as being "three-dimensional" due to a combination of vergence and accommodation. Vergence movements (i.e., rotation of the eyes so that the pupils move toward or away from each other to converge the lines of sight of the eyes to fixate upon an object) of the two eyes relative to each other are closely associated with focusing (or "accommodation") of the lenses and pupils of the eyes. Under normal conditions, changing the focus of the lenses of the eyes, or accommodating the eyes, to change focus from one object to another object at a different distance will automatically cause a matching change in vergence to the same distance, under a relationship known as the "accommodation-vergence reflex," as well as pupil dilation or constriction. Likewise, a change in vergence will trigger a matching change in accommodation of lens shape and pupil size, under normal conditions. As noted herein, many stereoscopic or "3-D" display systems display a scene using slightly different presentations (and, so, slightly different images) to each eye such that a three-dimensional perspective is perceived by the human visual system. Such systems are uncomfortable for many viewers, however, since they, among other things, simply provide a different presentation of a scene, but with the eyes viewing all the image information at a single accommodated state, and work against the "accommodation-vergence reflex." Display systems that provide a better match between accommodation and vergence may form more realistic and comfortable simulations of three-dimensional imagery contributing to increased duration of wear and in turn compliance to diagnostic and therapy protocols.

Figure 4 illustrates aspects of an approach for simulating three-dimensional imagery using multiple depth planes. With reference to Figure 4, objects at various distances from eyes 210, 220 on the z-axis are accommodated by the eyes 210, 220 so that those objects are in focus. The eyes 210, 220 assume particular accommodated states to bring into focus objects at different distances along the z-axis. Consequently, a particular accommodated state may be said to be associated with a particular one of depth planes 240, with has an associated focal distance, such that objects or parts of objects in a particular depth plane are in focus when the eye is in the accommodated state for that depth plane. In some implementations, three-dimensional imagery may be simulated by providing different presentations of an image for each of the eyes 210, 220, and also by providing different presentations of the image corresponding to each of the depth planes. While shown as being separate for clarity of illustration, it will be appreciated that the fields of view of the eyes 210, 220 may overlap, for example, as distance along the z-axis increases. In addition, while shown as flat for ease of illustration, it will be appreciated that the contours of a depth plane may be curved in physical space, such that all features in a depth plane are in focus with the eye in a particular accommodated state.

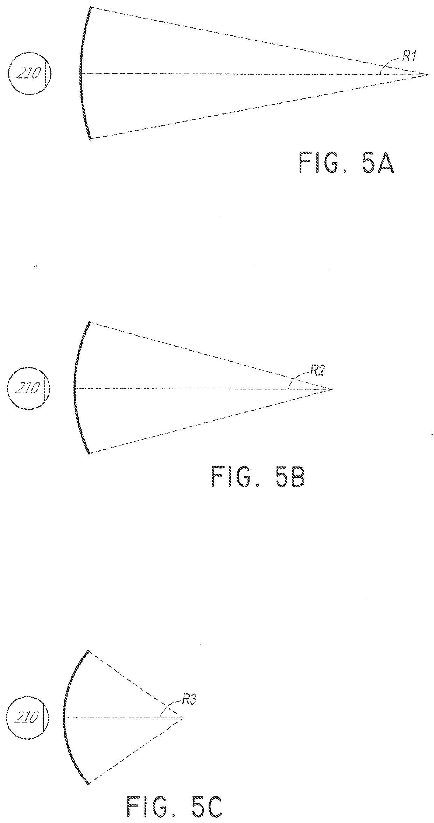

The distance between an object and the eye 210 or 220 may also change the amount of divergence of light from that object, as viewed by that eye. Figures 5A-5C illustrate relationships between distance and the divergence of light rays. The distance between the object and the eye 210 is represented by, in order of decreasing distance, R1, R2, and R3. As shown in Figures 5A-5C, the light rays become more divergent as distance to the object decreases. As distance increases, the light rays become more collimated. Stated another way, it may be said that the light field produced by a point (the object or a part of the object) has a spherical wavefront curvature, which is a function of how far away the point is from the eye of the user. The curvature increases with decreasing distance between the object and the eye 210. Consequently, at different depth planes, the degree of divergence of light rays is also different, with the degree of divergence increasing with decreasing distance between depth planes and the viewer's eye 210. While only a single eye 210 is illustrated for clarity of illustration in Figures 5A-5C and other figures herein, it will be appreciated that the discussions regarding eye 210 may be applied to both eyes 210 and 220 of a viewer.

Without being limited by theory, it is believed that the human eye typically can interpret a finite number of depth planes to provide depth perception. Consequently, a highly believable simulation of perceived depth may be achieved by providing, to the eye, different presentations of an image corresponding to each of these limited number of depth planes. The different presentations may be separately focused by the viewer's eyes, thereby helping to provide the user with depth cues based on the accommodation of the eye required to bring into focus different image features for the scene located on different depth plane and/or based on observing different image features on different depth planes being out of focus.

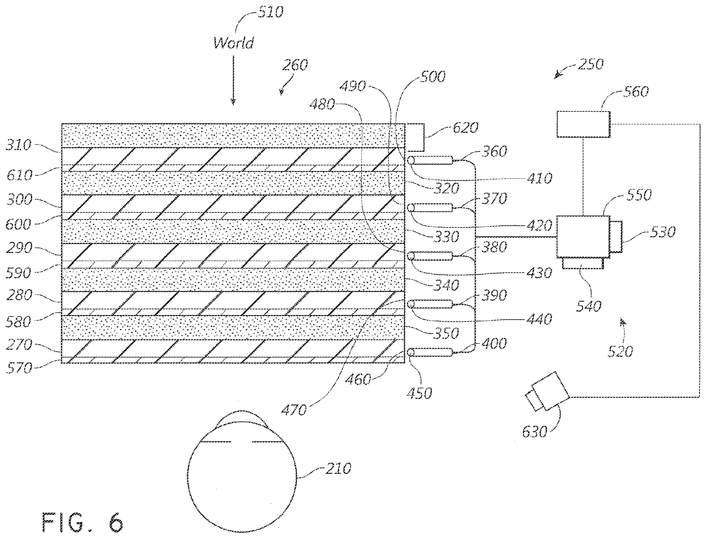

Figure 6 illustrates an example of a waveguide stack for outputting image information to a user. A display system 250 includes a stack of waveguides, or stacked waveguide assembly, 260 that may be utilized to provide three-dimensional perception to the eye/brain using a plurality of waveguides 270, 280, 290, 300, 310. In some implementations, the display system 250 is the system 60 of Figure 2, with Figure 6 schematically showing some parts of that system 60 in greater detail. For example, the waveguide assembly 260 may be part of the display 70 of Figure 2. It will be appreciated that the display system 250 may be considered a light field display in some implementations.

With continued reference to Figure 6, the waveguide assembly 260 may also include a plurality of features 320, 330, 340, 350 between the waveguides. In some implementations, the features 320, 330, 340, 350 may be one or more lenses. The waveguides 270, 280, 290, 300, 310 and/or the plurality of lenses 320, 330, 340, 350 may be configured to send image information to the eye with various levels of wavefront curvature or light ray divergence. Each waveguide level may be associated with a particular depth plane and may be configured to output image information corresponding to that depth plane. Image injection devices 360, 370, 380, 390, 400 may function as a source of light for the waveguides and may be utilized to inject image information into the waveguides 270, 280, 290, 300, 310, each of which may be configured, as described herein, to distribute incoming light across each respective waveguide, for output toward the eye 210. Light exits an output surface 410, 420, 430, 440, 450 of the image injection devices 360, 370, 380, 390, 400 and is injected into a corresponding input surface 460, 470, 480, 490, 500 of the waveguides 270, 280, 290, 300, 310. In some implementations, the each of the input surfaces 460, 470, 480, 490, 500 may be an edge of a corresponding waveguide, or may be part of a major surface of the corresponding waveguide (that is, one of the waveguide surfaces directly facing the world 510 or the viewer's eye 210). In some implementations, a single beam of light (e.g. a collimated beam) may be injected into each waveguide to output an entire field of cloned collimated beams that are directed toward the eye 210 at particular angles (and amounts of divergence) corresponding to the depth plane associated with a particular waveguide. In some implementations, a single one of the image injection devices 360, 370, 380, 390, 400 may be associated with and inject light into a plurality (e.g., three) of the waveguides 270, 280, 290, 300, 310.

In some implementations, the image injection devices 360, 370, 380, 390, 400 are discrete displays that each produce image information for injection into a corresponding waveguide 270, 280, 290, 300, 310, respectively. In some other implementations, the image injection devices 360, 370, 380, 390, 400 are the output ends of a single multiplexed display which may, e.g., pipe image information via one or more optical conduits (such as fiber optic cables) to each of the image injection devices 360, 370, 380, 390, 400. It will be appreciated that the image information provided by the image injection devices 360, 370, 380, 390, 400 may include light of different wavelengths, or colors (e.g., different component colors, as discussed herein).

In some implementations, the light injected into the waveguides 270, 280, 290, 300, 310 is provided by a light projector system 520, which comprises a light module 530, which may include a light emitter, such as a light emitting diode (LED). The light from the light module 530 may be directed to and modified by a light modulator 540, e.g., a spatial light modulator, via a beam splitter 550. The light modulator 540 may be configured to change the perceived intensity of the light injected into the waveguides 270, 280, 290, 300, 310. Examples of spatial light modulators include liquid crystal displays (LCD) including a liquid crystal on silicon (LCOS) displays.

In some implementations, the display system 250 may be a scanning fiber display comprising one or more scanning fibers configured to project light in various patterns (e.g., raster scan, spiral scan, Lissajous patterns, etc.) into one or more waveguides 270, 280, 290, 300, 310 and ultimately to the eye 210 of the viewer. In some implementations, the illustrated image injection devices 360, 370, 380, 390, 400 may schematically represent a single scanning fiber or a bundle of scanning fibers configured to inject light into one or a plurality of the waveguides 270, 280, 290, 300, 310. In some other implementations, the illustrated image injection devices 360, 370, 380, 390, 400 may schematically represent a plurality of scanning fibers or a plurality of bundles of scanning fibers, each of which are configured to inject light into an associated one of the waveguides 270, 280, 290, 300, 310. It will be appreciated that one or more optical fibers may be configured to transmit light from the light module 530 to the one or more waveguides 270, 280, 290, 300, 310. It will be appreciated that one or more intervening optical structures may be provided between the scanning fiber, or fibers, and the one or more waveguides 270, 280, 290, 300, 310 to, e.g., redirect light exiting the scanning fiber into the one or more waveguides 270, 280, 290, 300, 310.

A controller 560 controls the operation of one or more of the stacked waveguide assembly 260, including operation of the image injection devices 360, 370, 380, 390, 400, the light source 530, and the light modulator 540. In some implementations, the controller 560 is part of the local data processing module 140. The controller 560 includes programming (e.g., instructions in a non-transitory medium) that regulates the timing and provision of image information to the waveguides 270, 280, 290, 300, 310 according to, e.g., any of the various schemes disclosed herein. In some implementations, the controller may be a single integral device, or a distributed system connected by wired or wireless communication channels. The controller 560 may be part of the processing modules 140 or 150 (Figure 2) in some implementations.

With continued reference to Figure 6, the waveguides 270, 280, 290, 300, 310 may be configured to propagate light within each respective waveguide by total internal reflection (TIR). The waveguides 270, 280, 290, 300, 310 may each be planar or have another shape (e.g., curved), with major top and bottom surfaces and edges extending between those major top and bottom surfaces. In the illustrated configuration, the waveguides 270, 280, 290, 300, 310 may each include out-coupling optical elements 570, 580, 590, 600, 610 that are configured to extract light out of a waveguide by redirecting the light, propagating within each respective waveguide, out of the waveguide to output image information to the eye 210. Extracted light may also be referred to as out-coupled light and the out-coupling optical elements light may also be referred to light extracting optical elements. An extracted beam of light may be outputted by the waveguide at locations at which the light propagating in the waveguide strikes a light extracting optical element. The out-coupling optical elements 570, 580, 590, 600, 610 may, for example, be gratings, including diffractive optical features, as discussed further herein. While illustrated disposed at the bottom major surfaces of the waveguides 270, 280, 290, 300, 310, for ease of description and drawing clarity, in some implementations, the out-coupling optical elements 570, 580, 590, 600, 610 may be disposed at the top and/or bottom major surfaces, and/or may be disposed directly in the volume of the waveguides 270, 280, 290, 300, 310, as discussed further herein. In some implementations, the out-coupling optical elements 570, 580, 590, 600, 610 may be formed in a layer of material that is attached to a transparent substrate to form the waveguides 270, 280, 290, 300, 310. In some other implementations, the waveguides 270, 280, 290, 300, 310 may be a monolithic piece of material and the out-coupling optical elements 570, 580, 590, 600, 610 may be formed on a surface and/or in the interior of that piece of material.

With continued reference to Figure 6, as discussed herein, each waveguide 270, 280, 290, 300, 310 is configured to output light to form an image corresponding to a particular depth plane. For example, the waveguide 270 nearest the eye may be configured to deliver collimated light (which was injected into such waveguide 270), to the eye 210. The collimated light may be representative of the optical infinity focal plane. The next waveguide up 280 may be configured to send out collimated light which passes through the first lens 350 (e.g., a negative lens) before it can reach the eye 210; such first lens 350 may be configured to create a slight convex wavefront curvature so that the eye/brain interprets light coming from that next waveguide up 280 as coming from a first focal plane closer inward toward the eye 210 from optical infinity. Similarly, the third up waveguide 290 passes its output light through both the first 350 and second 340 lenses before reaching the eye 210; the combined optical power of the first 350 and second 340 lenses may be configured to create another incremental amount of wavefront curvature so that the eye/brain interprets light coming from the third waveguide 290 as coming from a second focal plane that is even closer inward toward the person from optical infinity than was light from the next waveguide up 280.

The other waveguide layers 300, 310 and lenses 330, 320 are similarly configured, with the highest waveguide 310 in the stack sending its output through all of the lenses between it and the eye for an aggregate focal power representative of the closest focal plane to the person. To compensate for the stack of lenses 320, 330, 340, 350 when viewing/interpreting light coming from the world 510 on the other side of the stacked waveguide assembly 260, a compensating lens layer 620 may be disposed at the top of the stack to compensate for the aggregate power of the lens stack 320, 330, 340, 350 below. Such a configuration provides as many perceived focal planes as there are available waveguide/lens pairings. Both the out-coupling optical elements of the waveguides and the focusing aspects of the lenses may be static (i.e., not dynamic or electro-active). In some alternative implementations, either or both may be dynamic using electro-active features.

In some implementations, two or more of the waveguides 270, 280, 290, 300, 310 may have the same associated depth plane. For example, multiple waveguides 270, 280, 290, 300, 310 may be configured to output images set to the same depth plane, or multiple subsets of the waveguides 270, 280, 290, 300, 310 may be configured to output images set to the same plurality of depth planes, with one set for each depth plane. This can provide advantages for forming a tiled image to provide an expanded field of view at those depth planes.

With continued reference to Figure 6, the out-coupling optical elements 570, 580, 590, 600, 610 may be configured to both redirect light out of their respective waveguides and to output this light with the appropriate amount of divergence or collimation for a particular depth plane associated with the waveguide. As a result, waveguides having different associated depth planes may have different configurations of out-coupling optical elements 570, 580, 590, 600, 610, which output light with a different amount of divergence depending on the associated depth plane. In some implementations, the light extracting optical elements 570, 580, 590, 600, 610 may be volumetric or surface features, which may be configured to output light at specific angles. For example, the light extracting optical elements 570, 580, 590, 600, 610 may be volume holograms, surface holograms, and/or diffraction gratings. In some implementations, the features 320, 330, 340, 350 may not be lenses; rather, they may simply be spacers (e.g., cladding layers and/or structures for forming air gaps).

In some implementations, the out-coupling optical elements 570, 580, 590, 600, 610 are diffractive features that form a diffraction pattern, or "diffractive optical element" (also referred to herein as a "DOE"). Preferably, the DOE's have a sufficiently low diffraction efficiency so that only a portion of the light of the beam is deflected away toward the eye 210 with each intersection of the DOE, while the rest continues to move through a waveguide via TIR. The light carrying the image information is thus divided into a number of related exit beams that exit the waveguide at a multiplicity of locations and the result is a fairly uniform pattern of exit emission toward the eye 210 for this particular collimated beam bouncing around within a waveguide.

In some implementations, one or more DOEs may be switchable between "on" states in which they actively diffract, and "off" states in which they do not significantly diffract. For instance, a switchable DOE may comprise a layer of polymer dispersed liquid crystal, in which microdroplets comprise a diffraction pattern in a host medium, and the refractive index of the microdroplets may be switched to substantially match the refractive index of the host material (in which case the pattern does not appreciably diffract incident light) or the microdroplet may be switched to an index that does not match that of the host medium (in which case the pattern actively diffracts incident light).

In some implementations, a camera assembly 630 (e.g., a digital camera, including visible light and infrared light cameras) may be provided to capture images of the eye 210 and/or tissue around the eye 210 to, e.g., detect user inputs and/or to monitor the physiological state of the user. As used herein, a camera may be any image capture device. In some implementations, the camera assembly 630 may include an image capture device and a light source to project light (e.g., infrared light) to the eye, which may then be reflected by the eye and detected by the image capture device. In some implementations, the camera assembly 630 may be attached to the frame 80 (Figure 2) and may be in electrical communication with the processing modules 140 and/or 150, which may process image information from the camera assembly 630 to make various determinations regarding, e.g., the physiological state of the user, as discussed herein. It will be appreciated that information regarding the physiological state of user may be used to determine the behavioral or emotional state of the user. Examples of such information include movements of the user and/or facial expressions of the user. The behavioral or emotional state of the user may then be triangulated with collected environmental and/or virtual content data so as to determine relationships between the behavioral or emotional state, physiological state, and environmental or virtual content data. In some implementations, one camera assembly 630 may be utilized for each eye, to separately monitor each eye.

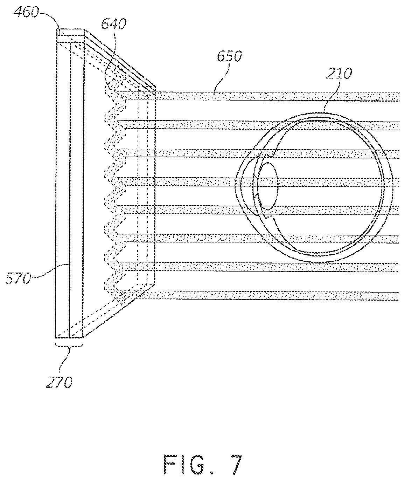

With reference now to Figure 7, an example of exit beams outputted by a waveguide is shown. One waveguide is illustrated, but it will be appreciated that other waveguides in the waveguide assembly 260 (Figure 6) may function similarly, where the waveguide assembly 260 includes multiple waveguides. Light 640 is injected into the waveguide 270 at the input surface 460 of the waveguide 270 and propagates within the waveguide 270 by TIR. At points where the light 640 impinges on the DOE 570, a portion of the light exits the waveguide as exit beams 650. The exit beams 650 are illustrated as substantially parallel but, as discussed herein, they may also be redirected to propagate to the eye 210 at an angle (e.g., forming divergent exit beams), depending on the depth plane associated with the waveguide 270. It will be appreciated that substantially parallel exit beams may be indicative of a waveguide with out-coupling optical elements that out-couple light to form images that appear to be set on a depth plane at a large distance (e.g., optical infinity) from the eye 210. Other waveguides or other sets of out-coupling optical elements may output an exit beam pattern that is more divergent, which would require the eye 210 to accommodate to a closer distance to bring it into focus on the retina and would be interpreted by the brain as light from a distance closer to the eye 210 than optical infinity.

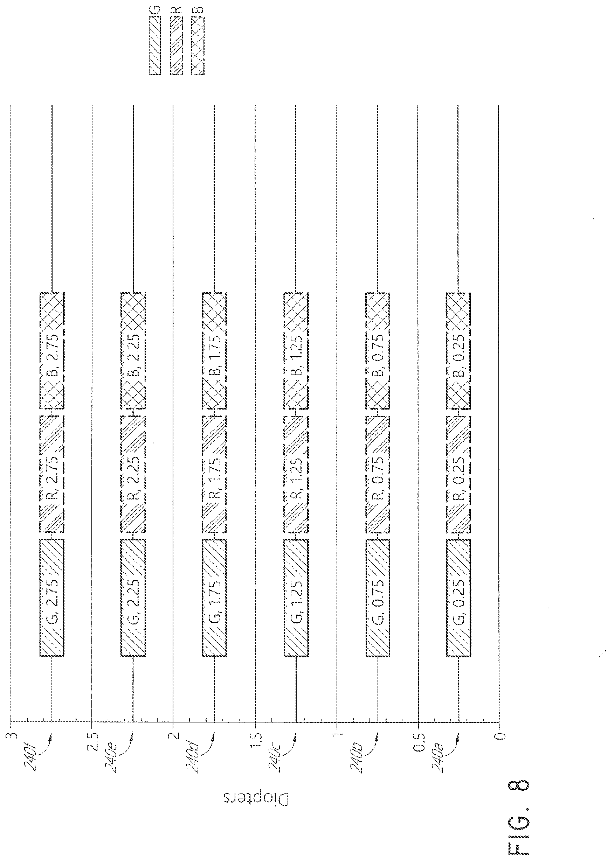

In some implementations, a full color image may be formed at each depth plane by overlaying images in each of the component colors, e.g., three or more component colors. Figure 8 illustrates an example of a stacked waveguide assembly in which each depth plane includes images formed using multiple different component colors. The illustrated implementation shows depth planes 240a - 240f, although more or fewer depths are also contemplated. Each depth plane may have three or more component color images associated with it, including: a first image of a first color, G; a second image of a second color, R; and a third image of a third color, B. Different depth planes are indicated in the figure by different numbers for diopters (dpt) following the letters G, R, and B. Just as examples, the numbers following each of these letters indicate diopters (1/m), or inverse distance of the depth plane from a viewer, and each box in the figures represents an individual component color image. In some implementations, to account for differences in the eye's focusing of light of different wavelengths, the exact placement of the depth planes for different component colors may vary. For example, different component color images for a given depth plane may be placed on depth planes corresponding to different distances from the user. Such an arrangement may increase visual acuity and user comfort and/or may decrease chromatic aberrations.

In some implementations, light of each component color may be outputted by a single dedicated waveguide and, consequently, each depth plane may have multiple waveguides associated with it. In such implementations, each box in the figures including the letters G, R, or B may be understood to represent an individual waveguide, and three waveguides may be provided per depth plane where three component color images are provided per depth plane. While the waveguides associated with each depth plane are shown adjacent to one another in this drawing for ease of description, it will be appreciated that, in a physical device, the waveguides may all be arranged in a stack with one waveguide per level. In some other implementations, multiple component colors may be outputted by the same waveguide, such that, e.g., only a single waveguide may be provided per depth plane.

With continued reference to Figure 8, in some implementations, G is the color green, R is the color red, and B is the color blue. In some other implementations, other colors associated with other wavelengths of light, including magenta and cyan, may be used in addition to or may replace one or more of red, green, or blue.

It will be appreciated that references to a given color of light throughout this disclosure will be understood to encompass light of one or more wavelengths within a range of wavelengths of light that are perceived by a viewer as being of that given color. For example, red light may include light of one or more wavelengths in the range of about 620-780 nm, green light may include light of one or more wavelengths in the range of about 492-577 nm, and blue light may include light of one or more wavelengths in the range of about 435-493 nm.

In some implementations, the light source 530 (Figure 6) may be configured to emit light of one or more wavelengths outside the visual perception range of the viewer, for example, infrared and/or ultraviolet wavelengths. In addition, the in-coupling, out-coupling, and other light redirecting structures of the waveguides of the display 250 may be configured to direct and emit this light out of the display towards the user's eye 210, e.g., for imaging and/or user stimulation applications.

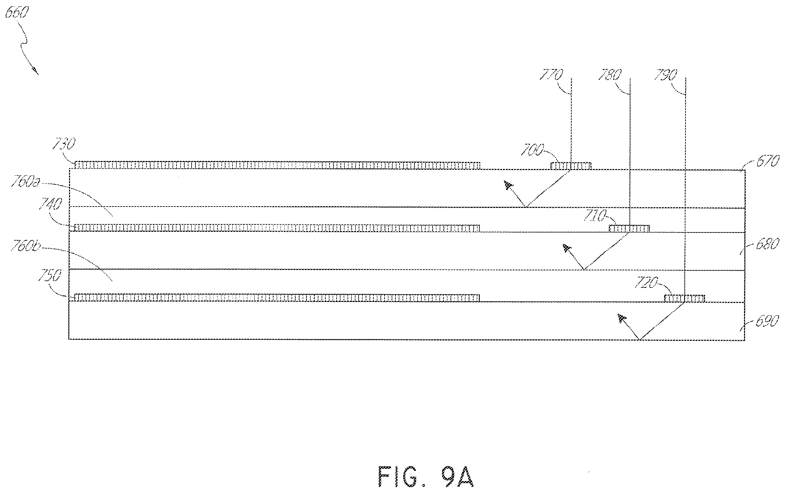

With reference now to Figure 9A, in some implementations, light impinging on a waveguide may need to be redirected to in-couple that light into the waveguide. An in-coupling optical element may be used to redirect and in-couple the light into its corresponding waveguide. Figure 9A illustrates a cross-sectional side view of an example of a plurality or set 660 of stacked waveguides that each includes an in-coupling optical element. The waveguides may each be configured to output light of one or more different wavelengths, or one or more different ranges of wavelengths. It will be appreciated that the stack 660 may correspond to the stack 260 (Figure 6) and the illustrated waveguides of the stack 660 may correspond to part of the plurality of waveguides 270, 280, 290, 300, 310, except that light from one or more of the image injection devices 360, 370, 380, 390, 400 is injected into the waveguides from a position that requires light to be redirected for in-coupling.

The illustrated set 660 of stacked waveguides includes waveguides 670, 680, and 690. Each waveguide includes an associated in-coupling optical element (which may also be referred to as a light input area on the waveguide), with, e.g., in-coupling optical element 700 disposed on a major surface (e.g., an upper major surface) of waveguide 670, in-coupling optical element 710 disposed on a major surface (e.g., an upper major surface) of waveguide 680, and in-coupling optical element 720 disposed on a major surface (e.g., an upper major surface) of waveguide 690. In some implementations, one or more of the in-coupling optical elements 700, 710, 720 may be disposed on the bottom major surface of the respective waveguide 670, 680, 690 (particularly where the one or more in-coupling optical elements are reflective, deflecting optical elements). As illustrated, the in-coupling optical elements 700, 710, 720 may be disposed on the upper major surface of their respective waveguide 670, 680, 690 (or the top of the next lower waveguide), particularly where those in-coupling optical elements are transmissive, deflecting optical elements. In some implementations, the in-coupling optical elements 700, 710, 720 may be disposed in the body of the respective waveguide 670, 680, 690. In some implementations, as discussed herein, the in-coupling optical elements 700, 710, 720 are wavelength selective, such that they selectively redirect one or more wavelengths of light, while transmitting other wavelengths of light. While illustrated on one side or corner of their respective waveguide 670, 680, 690, it will be appreciated that the in-coupling optical elements 700, 710, 720 may be disposed in other areas of their respective waveguide 670, 680, 690 in some implementations.

As illustrated, the in-coupling optical elements 700, 710, 720 may be laterally offset from one another. In some implementations, each in-coupling optical element may be offset such that it receives light without that light passing through another in-coupling optical element. For example, each in-coupling optical element 700, 710, 720 may be configured to receive light from a different image injection device 360, 370, 380, 390, and 400 as shown in Figure 6, and may be separated (e.g., laterally spaced apart) from other in-coupling optical elements 700, 710, 720 such that it substantially does not receive light from the other ones of the in-coupling optical elements 700, 710, 720.

Each waveguide also includes associated light distributing elements, with, e.g., light distributing elements 730 disposed on a major surface (e.g., a top major surface) of waveguide 670, light distributing elements 740 disposed on a major surface (e.g., a top major surface) of waveguide 680, and light distributing elements 750 disposed on a major surface (e.g., a top major surface) of waveguide 690. In some other implementations, the light distributing elements 730, 740, 750, may be disposed on a bottom major surface of associated waveguides 670, 680, 690, respectively. In some other implementations, the light distributing elements 730, 740, 750, may be disposed on both top and bottom major surface of associated waveguides 670, 680, 690, respectively; or the light distributing elements 730, 740, 750, may be disposed on different ones of the top and bottom major surfaces in different associated waveguides 670, 680, 690, respectively.

The waveguides 670, 680, 690 may be spaced apart and separated by, e.g., gas, liquid, and/or solid layers of material. For example, as illustrated, layer 760a may separate waveguides 670 and 680; and layer 760b may separate waveguides 680 and 690. In some implementations, the layers 760a and 760b are formed of low refractive index materials (that is, materials having a lower refractive index than the material forming the immediately adjacent one of waveguides 670, 680, 690). Preferably, the refractive index of the material forming the layers 760a, 760b is 0.05 or more, or 0.10 or less than the refractive index of the material forming the waveguides 670, 680, 690. Advantageously, the lower refractive index layers 760a, 760b may function as cladding layers that facilitate total internal reflection (TIR) of light through the waveguides 670, 680, 690 (e.g., TIR between the top and bottom major surfaces of each waveguide). In some implementations, the layers 760a, 760b are formed of air. While not illustrated, it will be appreciated that the top and bottom of the illustrated set 660 of waveguides may include immediately neighboring cladding layers.

Preferably, for ease of manufacturing and other considerations, the material forming the waveguides 670, 680, 690 are similar or the same, and the material forming the layers 760a, 760b are similar or the same. In some implementations, the material forming the waveguides 670, 680, 690 may be different between one or more waveguides, and/or the material forming the layers 760a, 760b may be different, while still holding to the various refractive index relationships noted above.

With continued reference to Figure 9A, light rays 770, 780, 790 are incident on the set 660 of waveguides. It will be appreciated that the light rays 770, 780, 790 may be injected into the waveguides 670, 680, 690 by one or more image injection devices 360, 370, 380, 390, 400 (Figure 6).

In some implementations, the light rays 770, 780, 790 have different properties, e.g., different wavelengths or different ranges of wavelengths, which may correspond to different colors. The in-coupling optical elements 700, 710, 720 each deflect the incident light such that the light propagates through a respective one of the waveguides 670, 680, 690 by TIR. In some implementations, the in-coupling optical elements 700, 710, 720 each selectively deflect one or more particular wavelengths of light, while transmitting other wavelengths to an underlying waveguide and associated in-coupling optical element.

For example, in-coupling optical element 700 may be configured to deflect ray 770, which has a first wavelength or range of wavelengths, while transmitting rays 780 and 790, which have different second and third wavelengths or ranges of wavelengths, respectively. The transmitted ray 780 impinges on and is deflected by the in-coupling optical element 710, which is configured to deflect light of a second wavelength or range of wavelengths. The ray 790 is deflected by the in-coupling optical element 720, which is configured to selectively deflect light of third wavelength or range of wavelengths.

With continued reference to Figure 9A, the deflected light rays 770, 780, 790 are deflected so that they propagate through a corresponding waveguide 670, 680, 690; that is, the in-coupling optical elements 700, 710, 720 of each waveguide deflects light into that corresponding waveguide 670, 680, 690 to in-couple light into that corresponding waveguide. The light rays 770, 780, 790 are deflected at angles that cause the light to propagate through the respective waveguide 670, 680, 690 by TIR. The light rays 770, 780, 790 propagate through the respective waveguide 670, 680, 690 by TIR until impinging on the waveguide's corresponding light distributing elements 730, 740, 750.

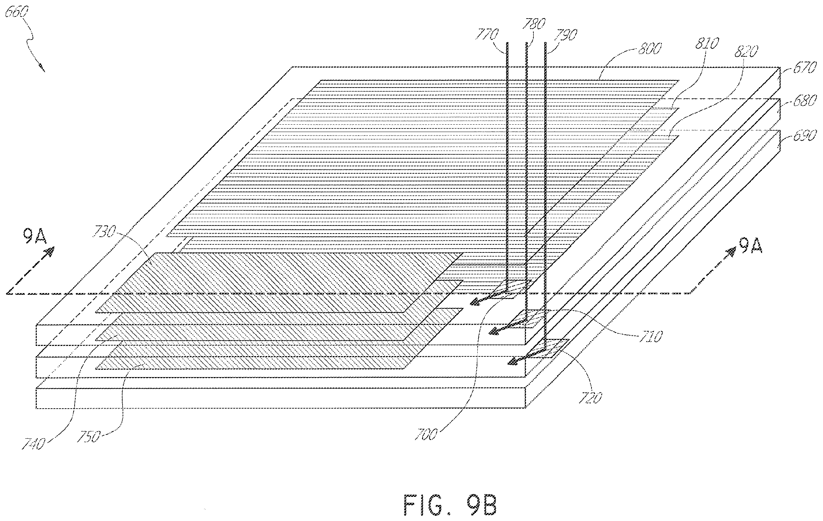

With reference now to Figure 9B, a perspective view of an example of the plurality of stacked waveguides of Figure 9A is illustrated. As noted above, the in-coupled light rays 770, 780, 790, are deflected by the in-coupling optical elements 700, 710, 720, respectively, and then propagate by TIR within the waveguides 670, 680, 690, respectively. The light rays 770, 780, 790 then impinge on the light distributing elements 730, 740, 750, respectively. The light distributing elements 730, 740, 750 deflect the light rays 770, 780, 790 so that they propagate towards the out-coupling optical elements 800, 810, 820, respectively.

In some implementations, the light distributing elements 730, 740, 750 are orthogonal pupil expanders (OPE's). In some implementations, the OPE's deflect or distribute light to the out-coupling optical elements 800, 810, 820 and, in some implementations, may also increase the beam or spot size of this light as it propagates to the out-coupling optical elements. In some implementations, the light distributing elements 730, 740, 750 may be omitted and the in-coupling optical elements 700, 710, 720 may be configured to deflect light directly to the out-coupling optical elements 800, 810, 820. For example, with reference to Figure 9A, the light distributing elements 730, 740, 750 may be replaced with out-coupling optical elements 800, 810, 820, respectively. In some implementations, the out-coupling optical elements 800, 810, 820 are exit pupils (EP's) or exit pupil expanders (EPE's) that direct light in a viewer's eye 210 (Figure 7). It will be appreciated that the OPE's may be configured to increase the dimensions of the eye box in at least one axis and the EPE's may be to increase the eye box in an axis crossing, e.g., orthogonal to, the axis of the OPEs. For example, each OPE may be configured to redirect a portion of the light striking the OPE to an EPE of the same waveguide, while allowing the remaining portion of the light to continue to propagate down the waveguide. Upon impinging on the OPE again, another portion of the remaining light is redirected to the EPE, and the remaining portion of that portion continues to propagate further down the waveguide, and so on. Similarly, upon striking the EPE, a portion of the impinging light is directed out of the waveguide towards the user, and a remaining portion of that light continues to propagate through the waveguide until it strikes the EP again, at which time another portion of the impinging light is directed out of the waveguide, and so on. Consequently, a single beam of incoupled light may be "replicated" each time a portion of that light is redirected by an OPE or EPE, thereby forming a field of cloned beams of light, as shown in Figure 6. In some implementations, the OPE and/or EPE may be configured to modify a size of the beams of light.

Accordingly, with reference to Figures 9A and 9B, in some implementations, the set 660 of waveguides includes waveguides 670, 680, 690; in-coupling optical elements 700, 710, 720; light distributing elements (e.g., OPE's) 730, 740, 750; and out-coupling optical elements (e.g., EP's) 800, 810, 820 for each component color. The waveguides 670, 680, 690 may be stacked with an air gap/cladding layer between each one. The in-coupling optical elements 700, 710, 720 redirect or deflect incident light (with different in-coupling optical elements receiving light of different wavelengths) into its waveguide. The light then propagates at an angle which will result in TIR within the respective waveguide 670, 680, 690. In the example shown, light ray 770 (e.g., blue light) is deflected by the first in-coupling optical element 700, and then continues to bounce down the waveguide, interacting with the light distributing element (e.g., OPE's) 730 and then the out-coupling optical element (e.g., EPs) 800, in a manner described earlier. The light rays 780 and 790 (e.g., green and red light, respectively) will pass through the waveguide 670, with light ray 780 impinging on and being deflected by in-coupling optical element 710. The light ray 780 then bounces down the waveguide 680 via TIR, proceeding on to its light distributing element (e.g., OPEs) 740 and then the out-coupling optical element (e.g., EP's) 810. Finally, light ray 790 (e.g., red light) passes through the waveguide 690 to impinge on the light in-coupling optical elements 720 of the waveguide 690. The light in-coupling optical elements 720 deflect the light ray 790 such that the light ray propagates to light distributing element (e.g., OPEs) 750 by TIR, and then to the out-coupling optical element (e.g., EPs) 820 by TIR. The out-coupling optical element 820 then finally out-couples the light ray 790 to the viewer, who also receives the out-coupled light from the other waveguides 670, 680.

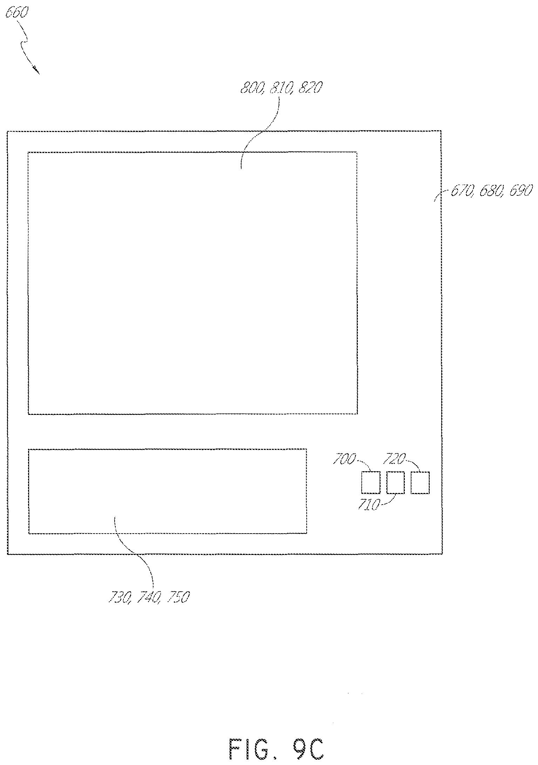

Figure 9C illustrates a top-down plan view of an example of the plurality of stacked waveguides of Figures 9A and 9B. As illustrated, the waveguides 670, 680, 690, along with each waveguide's associated light distributing element 730, 740, 750 and associated out-coupling optical element 800, 810, 820, may be vertically aligned. However, as discussed herein, the in-coupling optical elements 700, 710, 720 are not vertically aligned; rather, the in-coupling optical elements are preferably non-overlapping (e.g., laterally spaced apart as seen in the top-down view). As discussed further herein, this nonoverlapping spatial arrangement facilitates the injection of light from different resources into different waveguides on a one-to-one basis, thereby allowing a specific light source to be uniquely coupled to a specific waveguide. In some implementations, arrangements including nonoverlapping spatially-separated in-coupling optical elements may be referred to as a shifted pupil system, and the in-coupling optical elements within these arrangements may correspond to sub pupils.

### EXAMPLE LIQUID CRYSTAL POLARIZATION GRATINGS

As described above, it will be appreciated that liquid crystal polarization gratings, when used as master gratings for fabricating volume phase holographic grating (VPHGs), may provide various advantages, including, e.g., independent control of the optical function and selectivity of a VPHG during the recording process. Additionally, the fact that, in some implementations, the liquid crystal polarization gratings only support a single diffraction order may enable fabrication of VPHGs with complex optical functions and improve their diffractive properties (e.g., by eliminating parasitic diffraction, which may cause unintended optical functionality).

Some particularly advantageous liquid crystal polarization gratings are discussed below, although it will be appreciated that liquid crystal polarization gratings, particularly cholesteric liquid crystal polarization gratings, may generally be utilized as master gratings in some implementations.

In some implementations, it may be desirable that the master grating used to fabricate the VPHG be able to diffract light at large angles. Conventional liquid crystal polarization gratings may have difficulties diffracting or redirecting light at large angles while also achieving high diffraction efficiencies. It has been found that inducing twist along the thickness of the gratings, which may cause sublayers of the gratings to be shifted to define a tilt angle, may provide high diffractive efficiency while achieving large angle diffraction or light redirection. The diffractive efficiencies of such gratings, however, are highly dependent upon the angle of incidence of light on the gratings. Advantageously, it has also been found that varying the tilt angle provides gratings with high efficiency over a wide range of incident angles. In some implementations, the range of incident angles over which high efficiency is achieved may be increased by stacking multiple gratings structures together, with each grating structure having a tilt angle of a different magnitude.

Advantageously, the various diffractive optical elements discussed herein may be grating structures, including liquid crystal grating structures such as liquid crystal polarization gratings. The grating structures are preferably configured to provide high diffraction efficiency for a wide range of incident angles (e.g., between about ±20-degrees about the Bragg angle, between about ±30-degrees about the Bragg angle, between about ±45-degrees about the Bragg angle, etc.). Accordingly, the grating structures described herein may advantageously have low sensitivity to the angle of incidence of light. The grating structures may be fabricated using a variety of methods including but not limited to aligning liquid crystal molecules in a layer of polymerizable liquid crystal material using a patterned alignment layer, which may underlie the liquid crystal material.

It will be appreciated that liquid crystals are partly ordered materials whose molecules are often shaped like rods or plates that may be aligned along a certain direction. The direction and pattern along which the molecules of the liquid crystal are oriented may be manipulated by the use of a template pattern that interacts with the molecules (e.g., through steric and/or anchoring energy interactions). In addition, the liquid crystal materials may comprise chiral dopants and/or reactive mesogens (RMs). The chiral dopants may cause rotation of the liquid crystal molecules over the thickness of the liquid crystal material by a twist angle (Φ) and the reactive mesogens may allow the orientations and positions of the liquid crystal molecules to be fixed through polymerization.

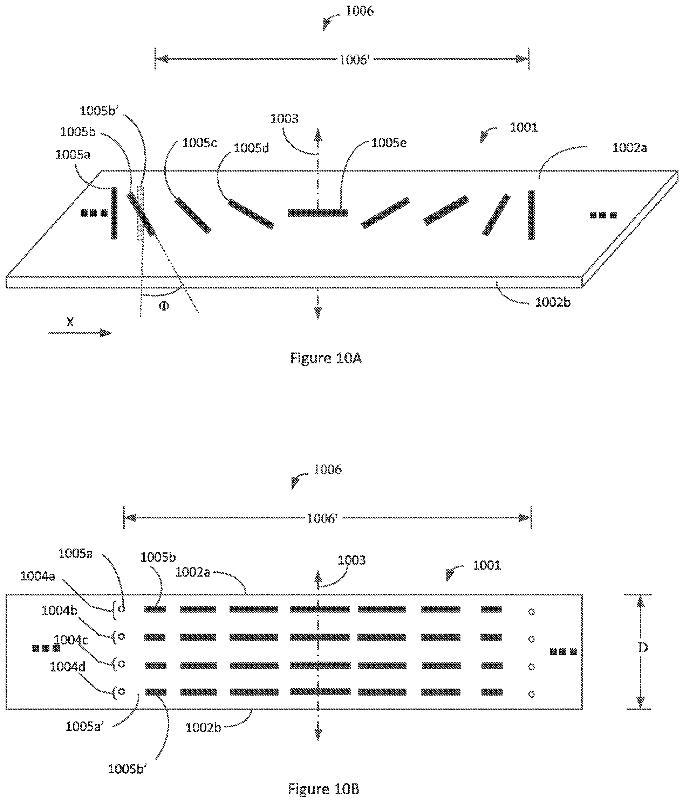

Figure 10A illustrates a top-down perspective view of an example of a grating structure 1001 comprising a first major surface 1002a and a second major surface 1002b. A plurality of sublayers of liquid crystal material (e.g., sublayers 1004a, 1004b, 1004c and 1004d) may be included between the first surface 1002a and the second surface 1002b as depicted in Figure 10B, which is a side view of the structure illustrated in Figure 10A. Each sublayer may be defined by a plurality of liquid crystal molecules arranged in a common plane and, as such, each sublayer is only a single liquid crystal molecule thick. The sublayers form an aggregate layer of liquid crystal material having a thickness D, which may be equal to the total thickness of all sublayers. While four sublayers are illustrated, it will be appreciated that the grating structure 1001 may include more or fewer sublayers.

With continued reference to Figure 10A, the grating structure 1001 has a surface normal 1003 intersecting the first and the second surfaces 1002a and 1002b. As noted above, in some implementations, the liquid crystal material may have a twist angle Φ defined by the angular rotation between a liquid crystal molecule (e.g., 1005b) of an uppermost sublayer 1004a of the grating structure 1001, and an underlying liquid crystal molecule (e.g., 1005b') of a lowermost sublayer 1004d of the grating structure 1001. Without being limited by theory, interactions between neighboring liquid crystal molecules may cause the orientations of the molecules to vary in a regular progression across the grating structure 1001, along the lateral axis (X). Thus, the liquid crystal molecules may form repeating units, each of which has a similar progression of liquid crystal orientations along the X-axis. As a result, groups of liquid crystal molecules for the repeating units in each of the sublayers 1004a-1004d may have a periodicity (A) equal to the lateral distance 1006' between two consecutive liquid crystal molecules having the same orientation, as seen in a side and/or top-down view.

With reference again to Figures 10A and 10B, the grating structure 1001 may comprise a chiral nematic liquid crystal material in some implementations. For example, the plurality of sublayers of liquid crystal material may comprise a cholesteric liquid crystal material. It will be appreciated that liquid crystals in a nematic state or a smectic state may also exhibit chirality. Such liquid crystals are referred to as being in a chiral phase or a cholesteric phase. In a chiral phase or a cholesteric phase, the liquid crystals may exhibit a twisting of the molecules perpendicular to the director, with the molecular axis parallel to the director. The finite twist angle between adjacent molecules is due to their asymmetric packing, which may result in longer-range chiral order.

Preferably, the liquid crystal material is polymerizable. As discussed herein, the liquid crystal material may comprise a reactive mesogen (RM), such as, for example, liquid crystalline di-acrylate. As also discussed herein, the grating structure 1001 preferably also includes chiral dopants, which may be utilized to influence the twist angle Φ of the liquid crystal molecules. Examples of chiral dopants include cholesteryl benzoate, cholesteryl nonanoate, cholesteryl chloride, and cholesteryl oley carbonate.

With reference to Figure 10B, a single repeating unit of each sublayer 1004a, 1004b, 1004c, and 1004d is illustrated. The repeating units 1006 have a periodicity of length 1006'. While the repeating units are illustrated completely directly vertically aligned for ease of discussion, it will be appreciated that the twisting the liquid crystal molecules over the thickness of the grating structure 1001 may cause the repeating units of different sublayers to be laterally shifted relative to one another.

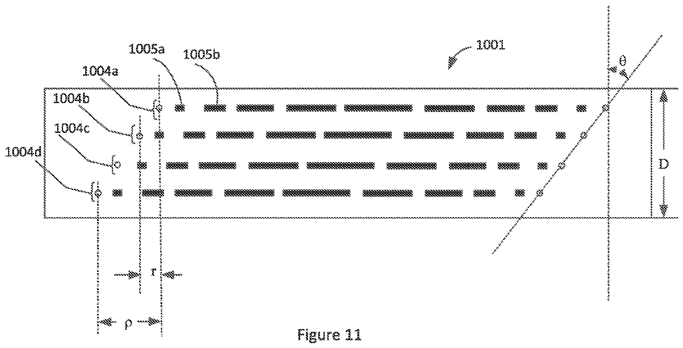

With reference to Figure 11, in some implementations, the sublayers 1004a, 1004b, 1004c, and 1004d of liquid crystal material may be laterally offset with respect to each other. The offset may be such that a grating optic axis that passes through corresponding liquid crystal molecules (that is, liquid crystal molecules having the same orientation) in each of the plurality of sublayers 1004a, 1004b, 1004c, and 1004d is tilted at an angle θ with respect to a normal to the lateral axis X, and this normal may also be the normal to a major surface of the polarization grating structure. Accordingly, the sublayers 1004a, 1004b, 1004c, and 1004d form a tilted grating pattern having a grating optic axis that is tilted at an angle θ with respect to the normal to a major surface of the polarization grating structure 1001. In some implementations, without being limited by theory, such a tilted grating pattern may diffract normally incident light at a high efficiency when the grating period satisfies the following condition with the wavelength λ, the average refractive index n, the grating period A (corresponding to the length 1006') and the tilt angle θ of the grating optic axis of the grating structure in equation (1) below. $sin λ ≅ 2 n Λsin θ$

The twist angle Φ may be determined from the tilt angle θ of the grating optic axis, the twist angle Φ, the thickness of the grating structure D and the grating period A in using equation (2) below. $Φ = \frac{πD}{Λ} tan θ$

With continued reference to Figure 11, the liquid crystal molecules in the plurality of sublayers 1004a, 1004b, 1004c, and 1004d may form repeating units. The periodicity of the repeating units may be equal to the periodicity (A) of the liquid crystal molecules. The repeating units in each of the plurality of sublayers of liquid crystals may be laterally offset with respect to the repeating units in an immediately adjacent sublayer by a shift distance r. It will be appreciated that the tilt angle (θ) may be determined based upon the angle of formed between a normal to a major surface of the grating structure 1001 and an imaginary line extending between similar points in repeating liquid crystal units of directly neighboring sublayers. For example, the imaginary line may be defined by the right hand edges of the repeating units, as illustrated.

Without being limited by theory, when the liquid crystal molecules of the grating structure 1001 have chirality, the orientation of the anisotropy of the liquid crystal material is rotated along the thickness of the polarization grating structure and the amount of the rotation (also known as a twist angle of the liquid crystal material) is determined by the helical pitch P that is a distance for 360 degree rotation of the liquid crystal anisotropy axis. In some implementations, the grating structure 1001 has a uniform and continuous cycloidal anisotropy profile, and a rotation of the anisotropy along the thickness D of the grating structure 1001 leads to a lateral shift (ρ) of the anisotropy profile along the grating direction which gives rise to a tilt of the grating optic axis with respect to the major surface normal of the grating structure as shown in Figure 11. As discussed above regarding equation (2), the tilt angle θ of the sublayers 1004a, 1004b, 1004c, 1004d depends on the twist angle Φ of the liquid crystal molecules, the thickness D of the grating structure 1001, and the grating period A. Accordingly, the tilt angle of the grating optic axis may be varied by varying the twist angle of the liquid crystal molecules, the thickness D of the grating structure, and/or the periodicity A of the grating structure. Where the periodicity A and the thickness D are constant over the grating structure, the twist angle of the liquid crystal molecules of the grating structure may be varied to change the tilt angle. It will be appreciated that, in turn, the twist angle may be varied based upon the chiral dopants doping the grating structure and the thickness D of the grating structure.

As discussed herein, while grating structures such as the grating structure 1001 advantageously provide high diffraction efficiency and large angle diffraction, these grating structures may achieve this highly efficient large angle diffraction for only a limited range of incident angles. Undesirably, light incident on the grating structure outside of this limited range of incident angles is not efficiently diffracted. To increase the large angle diffraction efficiency for light of different incident angles, multiple liquid crystal grating structures with different tilt angles may be utilized. Preferably, these grating structures are formed in a stack.

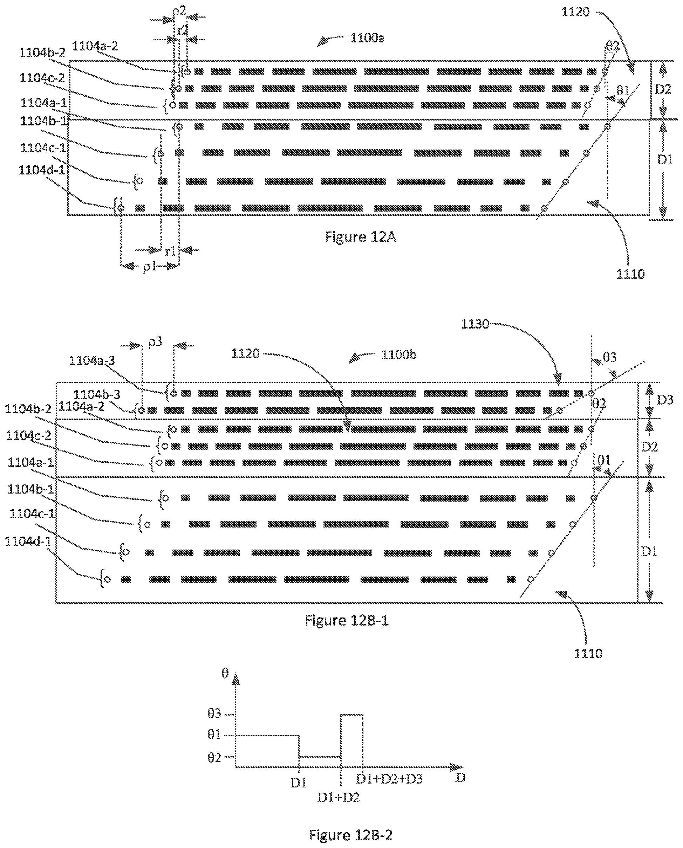

Such stacks are illustrated in Figures 12A and 12B-1. Figure 12A depicts an example of a liquid crystal polarization grating stack 1100a comprising two liquid crystal polarization grating (LCPG) structures 1110 and 1120. The first LCPG structure 1110 comprises a plurality of liquid crystal sublayers 1104a-1, 1104b-1, 1104c-1 and 1104d-1 that are laterally offset with respect to each other by a distance r1 such that repeating units formed by pluralities of liquid crystal molecules are laterally shifted by a distance ρ1 over the thickness D1, which results in a tilt angle θ1 with respect to the surface normal of the first LCPG structure. The second LCPG structure 1120 is disposed over the first LCPG structure 1110 and preferably directly contacts the first LCPG structure 1110. The second LCPG 1120 structure comprises a plurality of liquid crystal sublayers 1104a-2, 1104b-2, and 1104c-2 that are laterally offset with respect to each other by a distance r2 such that repeating units formed by pluralities of liquid crystal molecules are laterally shifted by a distance ρ2 over the thickness D2, which results in the second grating optic axis being tilted by an angle θ2 with respect to the surface normal of the second LCPG structure. Preferably, the magnitudes of the tilt angles θ1 and θ2 are different.

With continued reference to Figure 12A, the lateral shift ρ2 of the grating structure 1120 may be smaller than the lateral shift ρ1 of the grating structure 1110. As a result, the tilt angle θ2 of the grating structure 1120 is smaller than the tilt angle θ1 of the grating structure 1110.

Figure 12B-1 illustrates an example of a grating structure in which a third LCPG structure 1130 is disposed over the second LCPG structure 1120. The third LCPG structure 1130 may comprise a plurality of liquid crystal sublayers 1104a-3 and 1104b-3 that are laterally offset with respect to each other such that repeating units formed by pluralities of liquid crystal molecules in the sublayers 1104a-3 and 1104b-3 are laterally shifted by a distance ρ3 over the thickness D3, which results in a third tilt angle θ3 with respect to the surface normal of the third LCPG structure. It will be appreciated that the lateral shift ρ3 of the third LCPG structure is greater than the lateral shift ρ1 of the first LCPG structure. As a result, the tilt of the third grating optic axis θ3 is greater than the tilt of the first grating optic axis θ1.

Figure 12B-2 is an example of a plot of the tilt angles and thicknesses of the grating structure stack illustrated in Figure 12B-1. Without being limited by theory, the tilt angle may be understood to correspond to angle of the grating optic axis, and the plot shown in Figure 12B-2 may be understood to show the variation of the optic axis across the grating structure stack.

Various implementations of the liquid crystal polarization grating structures described herein may be configured to diffract a variety of wavelengths in the ultraviolet, visible and infra-red spectral ranges. For example, the grating structures may be configured to diffract incident light having a wavelength in a range between about 300 nm and about 10 µm. In some implementations, to achieve high diffraction angles, it may be desirable for the periodicity A of the grating structure to be approximately equal to or even smaller than the wavelength of the incident light. Accordingly, the periodicity A of the grating structure may be between about 200 nm and about 100 µm depending on the wavelength range that the grating structure is configured to operate on. For example, the periodicity A of the grating structure may be between about 200 nm and about 350 nm; between about 330 nm and about 410 nm; between about 370 nm and about 480 nm; between about 450 nm and about 510 nm; between about 500 nm and about 570 nm; between about 550 nm and about 700 nm; between about 650 nm and about 1 µm; between about 980 nm and about 3 µm; between about 1.3 µm and about 3.2 µm; between about 2.3 µm and about 5 µm; between about 5 µm and about 10 µm; between about 5 µm and about 100 µm; or any value in these ranges or sub-ranges.

In some implementations, the thickness D (e.g., D1, D2 and D3) of the various implementations of the LCPG structures described herein may be in a range between about 100 nm to about 50 µm. For example, the thickness D of the grating structure may be in a range between about 100 nm and about 350 nm; between about 320 nm and about 510 nm; between about 450 nm and about 600 nm; between about 550 nm and about 800 nm; between about 700 nm and about 1 µm; between about 1 µm and about 5 µm; between about 3 µm and about 10 µm; between about 7.5 µm and about 20 µm; between about 15 µm and about 30 µm; between about 25 µm and about 50 µm; or any value in these ranges or sub-ranges. In some implementations, the thicknesses of the gratings structures forming a stack differ by about 0 to 10 µm, including about 0 to 100 nm; about 100nm to 1 µm; about 1 µm to 2 µm; or about 2 µm to 10 µm.

In some implementations, the tilt angle θ (e.g., θ1, θ2 and θ3) of the grating optic axis may be in a range between -85 degrees and about 85 degrees. For example, the tilt angle θ may be in a range between -10 degrees and about 10 degrees; between -20 degrees and about 20 degrees; between -35 degrees and about 35 degrees; between -45 degrees and about 45 degrees; between -50 degrees and about 50 degrees; between -65 degrees and about 65 degrees; between -75 degrees and about 75 degrees; or any value in these ranges or sub-ranges. Preferably, tilt angles between the gratings structures forming a stack differ by about 0 to ±90 degrees, including about 0 to ±10 degrees; about ±10 degrees to ±20 degrees; about ±20 degrees to ±30 degrees; about ±30 degrees to ±40 degrees; about ±40 degrees to ±50 degrees; about ±50 degrees to ±60 degrees; about ±60 degrees to ±70 degrees; about ±70 degrees to ±80 degrees; or about ±80 degrees to ±90 degrees.

In some implementations, the pattern shift distance ρ of the grating pattern across the thickness of the grating structure (e.g., ρ1, ρ2 and ρ3) may be in a range between 1 nm and about 50 µm. For example, the pattern shift distance ρ of the grating structure may vary between about 1 nm and about 20 nm; about 10 nm and about 50 nm; about 25 nm and about 125 nm; about 100 nm and about 350 nm; between about 320 nm and about 510 nm; between about 450 nm and about 600 nm; between about 550 nm and about 800 nm; between about 700 nm and about 1 µm; between about 1 µm and about 5 µm; between about 3 µm and about 10 µm; between about 7.5 µm and about 20 µm; between about 15 µm and about 30 µm; between about 25 µm and about 50 µm; or any value in these ranges or sub-ranges.

In some implementations, all sublayers of all of the grating structures of a grating structure stack may be shifted in the same direction as depicted in Figures 10A, 10B, 11, 12A and 12B-1. For examples, the repeating liquid crystal molecules units of each sublayer may be shifted to the same side, e.g., to the left or to the right. For example, as depicted in Figures 12A and 12B-1 the grating optic axis of the different polarization grating stacks are all tilted to the right of the surface normal. Tilting the grating optical axis of the different sublayers to the same side may be advantageous in increasing diffraction efficiencies over a wider range of input angles as explained below with reference to Figures 12C-1, 12C-2, 12D-1, and 12D-2.

Reference will now be made to Figures 12C-1, 12C-2, 12D-1 and 12D-2, which illustrate the advantageous diffraction efficiency of a stack of grating structures having different tilt angles, as disclosed herein. Figure 12C-2 illustrates the diffraction efficiency in the first order of a single liquid crystal polarization grating structure 1148 depicted in Figure 12C-1. The diffraction efficiency has a peak for light incident on the grating structure at an angle parallel to the normal to the major surface of the grating structure (that is, at an angle of 0 degrees relative to the normal). The peak efficiency drops off rapidly, however, as the angle of incidence changes. It has been found, however, that the peak diffraction efficiency may be shifted by varying the tilt angle. Notably, as seen in Figure 12D-2, a stack of two liquid crystal polarization grating structures 1150 and 1152 depicted in Figure 12D-1 having different magnitude tilt angles may provide multiple diffraction peaks, thereby effectively expanding the window over which high diffraction efficiency is achieved. In addition, the stacked grating structure may increase the diffraction efficiency for light incident at angles away from these peaks. For example, as shown in Figures 12D-1 and 12D-2, the grating structure of the layer 1150 is tilted by a first tilt angle configured to provide high diffraction efficiency for light of incident angles of about -20 degrees to 0 degree and the grating structure of the layer 1152 is tilted on the same side by a second tilt angle configured to provide high diffraction efficiency for light of incident angles of 0 degree to about 20 degrees. Accordingly, diffraction efficiency of light incident in the angular range between ±20 degrees is increased to about 40% as compared to the about 20% diffraction efficiency that was achieved by the single grating structure 1148 shown in Figures 12C-1 and 12C-2.

While two liquid crystal polarization grating structures are illustrated to simplify the illustration in Figure 12D-1, in some implementations, more than two liquid crystal polarization grating structures, each having tilt angles of different magnitudes and peak diffraction efficiencies for light of different incident angles, may be stacked together to form a liquid crystal polarization grating structure stack. In some implementations, the grating structure stack has a window (for the angle of incidence of light) of at least about 50 degrees, 40 degrees, or 30 degrees while providing a diffraction efficiency of at least about 40%. Preferably, the diffraction efficiency is greater than about 50%, 60%, or 75% over the window.

### EXAMPLE METHODS OF MAKING LIQUID CRYSTAL POLARIZATION GRATINGS

With reference to Figures 13A-13E, an example of a method for making various liquid crystal polarization grating structures described herein is illustrated. With reference to Figure13A, a substrate 1205 having an overlying alignment layer 1210 is provided. The substrate 1205 is preferably optically transmissive. Examples of suitable materials for the substrate include glass, quartz, sapphire, indium tin oxide (ITO), or polymeric materials, including polycarbonate, polyacetate, and acrylic. In some implementations, the substrate 1205 may be transmissive to light of visible wavelengths.

In some implementations, the alignment layer 1210 may be a layer that causes the liquid crystal molecules to assume a particular orientation or pattern, for example, due to steric interactions with the liquid crystal molecules, and/or anchoring energy exerted on the liquid crystal molecule by the photo-alignment layer. Examples of materials for the alignment layer 1210 include resist (e.g., photoresist), polymers, and resins. As examples, the alignment layer 1210 may include polyimide, linear-polarization photopolymerizable polymer (LPP), Azo-containing polymers, Courmarine-containing polymers and cinnamate-containing polymers. Preferably, the alignment layer 1210 may include polymerizable liquid crystal material (e.g., reactive mesogens). In some implementations, the alignment layer may be deposited on a major surface of the substrate, e.g., by a spin on coating process or jet deposition. It will be appreciated that the major surface may be the largest area surface of the substrate, or may be one of a pair of similarly-sized opposing surfaces each having larger areas than other surfaces.

With reference to Figure13B, the alignment layer 1210 may subsequently be patterned. The pattern may correspond to the desired grating pattern of the liquid crystal polarization grating (e.g., the pattern may be identical to the desired pattern, or may be an inverse of the desired grating pattern). In some implementations, the alignment layer may contain light-activated chemical species and patterning may be accomplished by exposing the alignment layer to light of having an appropriate wavelength for activating those chemical species. For example, a polarization interference pattern may be recorded in the alignment layer 1210 by generating two orthogonal circularly polarized light beams (e.g., left handed circularly polarized light beam 1212a and right handed circularly polarized light beam 1212b) and directing those light beams to the alignment layer, which may be formed by a linear polarization photo-polymerizable polymer material.

In some other implementations, the alignment layer 1210 may be patterned, e.g., by photolithography. For example, the alignment layer 1210 may be formed of resist with reactive species that may be activated by incident energetic species, which is then exposed to the energetic species (e.g., light through a reticle in the case of photolithography, or electrons in the case of electron beam lithography), and then developed to remove or retain the exposed material (depending upon the type of photoresist utilized). Thus, a pattern of surface relief nano-structures may be formed in the alignment layer 1210.

In some other implementations, nano-imprint techniques may be utilized to create surface relief nano-structures in the alignment layer 1210. For example, the alignment layer 1210 may be formed of a resist material, which is physically contacted and deformed by an imprint reticle that imprints a desired pattern into the alignment layer. In some implementations, the alignment layer 1210 may then be exposed to light (e.g., UV light) to cure or harden that patterned layer 1210.

With reference to Figure13C, a layer 1215 of liquid crystal material may be deposited on the patterned alignment layer 1210 and allowed to self-organize into sublayers, as discussed herein. In some implementations, the liquid crystal material may be deposited by, e.g., spin on coating. The liquid material may include polymerizable liquid crystal molecules, such as liquid crystalline acrylates. The liquid crystal layer 1215 may also include a chiral dopant. Preferably, the chiral dopant is mixed into the liquid crystal material before deposition on the patterned alignment layer 1210. After deposition, the liquid crystal molecules of the layer 1215 may be allowed to self-organize, which may form the various sublayers disclosed herein. In some implementations, the self-organization may be facilitated by the application of heat energy. In some implementations, the liquid crystal molecules of the layer 1215 may self-organize under naturally occurring forces over time (e.g., over a few hours or a few days). In some implementations, the rate at which self-organization of the liquid crystal molecules of the layer 1215 occurs may be increased by application of energy, e.g., heat. It will be appreciated that the thickness of the layer 1215 and the identity and concentration of the chiral dopant may be selected to provide a particular twist angle for the liquid crystal molecules during self-organization.

Once the self-organization is complete, the orientations and positions of the liquid crystal molecules may be fixed, e.g., by polymerization of those molecules. In some implementations, the polymerization is initiated by the application of UV light 1217 to the liquid crystal material 1215 as shown in Figure13D.

As shown in Figure13E, in some implementations, additional liquid crystal layers may then each be successively deposited, self-organized, and polymerized by repeating the processes of Figures 13C-13D. For example, the liquid crystal layer 1220 may be deposited directly on and in contact with the liquid crystal layer 1215, allowed to self-organize, and then polymerized. An additional liquid crystal layer 1222 may be deposited directly on and in contact with the liquid crystal layer 1220, allowed to self-organize, and then polymerized. This sequence may then be repeated for further liquid crystal layers. It will be appreciated that the thickness and chiral dopant concentration or composition may be different for each of the liquid crystal layers 1215, 1220, 1222 to provide different twist angles and different tilt angles, as discussed herein. It will be appreciated that, once polymerized, the liquid crystal layers 1215, 1220, 1222 may constitute liquid crystal gratings, such as the liquid crystal gratings 1110, 1120, 1130 discussed above.

Advantageously, each underlying liquid crystal layer may act as an alignment layer for an overlying liquid crystal layer in direct contact with that underlying layer. This may provide for a simplified fabrication process flow, and may also reduce Fresnel reflections at the interfaces between liquid crystal layers.

In some other implementations, additional alignment layers may be disposed over one or more of the fixed liquid crystal layers prior to depositing additional liquid crystal layers. The additional alignment layers may be deposited and patterned as discussed above regarding Figures 13A and 13B. In some implementations, these additional alignment layers may be patterned with the same pattern as the patterned alignment layer 1210. In some other implementations, these additional alignment layers may have a different pattern than patterned alignment layer 1210, to provide different light steering properties for liquid crystal layers aligned to those additional alignment layers.

Figure 14 illustrates a resulting stack of liquid crystal gratings structures 1215, 1220, 1222, having an additional patterned alignment layer 1211 between the liquid crystal gratings structures 1215 and 1220. In some other implementations, additional alignment layers and liquid crystal layers are processed on a separate substrate and then transferred to another substrate through lamination.

In some implementations, an imprint template may be used to align liquid crystal molecules. The imprint template may subsequently be removed, thereby allowing the formation of a liquid crystal grating structure without an alignment layer. Advantageously, the imprint template may be used to align liquid crystals for more than one time, which may eliminate the patterning process for alignment layers for individual substrates. In some implementations, the imprint template may be an intermediate imprint template, which is a replicated template from a master imprint template, which may be used to avoid potential damages or contamination of the master imprint template. Figures 15A-15D illustrate a method for manufacturing the various liquid crystal polarization grating structures described herein using an imprint template. The method comprises aligning liquid crystal molecules of a liquid crystal layer based upon the pattern of protrusions and valleys on the surface of an imprint template 1513. As noted above, the imprint template 1513 may be used in place of the alignment layer 1210 and may have a pattern similar to that which would be provided in the alignment layer 1210. As depicted in Figure 15A, a layer 1515 of liquid crystal material is imprinted with the imprint template 1513. In some implementations, the layer 1515 is first deposited on the substrate 1505 and the layer 1515 is subsequently contacted with the imprint template 1513 such that the pattern in the imprint template 1513 is imprinted into the layer 1515. In some other implementations, the layer 1515 is deposited onto the input template 1513 and then joined with the substrate 1505. It will be appreciated that the layer of liquid crystal material may be deposited onto the substrate using various technologies including but not limited to jet-deposition or spin on deposition.

With continued reference to Figure 15A, the molecules of the layer of liquid crystal material may align (e.g., self-align or self-organize) based on the surface features of the imprint template 1513 to result in a liquid crystal polarization grating having a desired grating structure. As discussed herein, the self-alignments may be facilitated by subjecting the liquid crystal material to an elevated temperature. The imprint template is subsequently separated from the liquid crystal layer 1515 after the molecules of the liquid crystal material have self-aligned and the liquid crystal material with the grating structures is polymerized (e.g., by exposure to UV light) as depicted in Figure 15B. It will be appreciated that the removal of the imprint template may leave a pattern of depressions on the surface of the liquid crystal layer 1515. In some implementations, the surface may be subjected to a planarization process (e.g., a chemical and/or mechanical planarization process) to form a planar surface. For example, a planarization layer 1525 may be disposed over the patterned liquid crystal layer 1515 as shown in Figure 15D. The exposed surface (e.g., the surface opposite to the surface adjacent to the liquid crystal layer 1515) of the planarization layer 1525 may be planarized using a planarization template (e.g., a template having a substantially planar surface), by chemical mechanical polishing, by self-leveling, etc. In various implementations, the planarization layer 1525 may comprise an oxide layer having a thickness between about 1 nm and about 100 nm. In various implementations, the planarization layer 1525 may be configured to function as an isolation layer. Alternatively, the planarization layer 1525 may be omitted and the pattern of depressions on the surface of the liquid crystal layer 1515 may be retained.

Additional liquid crystal layers may be sequentially deposited over the polymerized liquid crystal layer 1515 as shown in Figures 15C and 15D. As noted above, the surface of the liquid crystal layer 1515 onto which an additional layer is deposited may be planarized or may have retained a pattern of depressions form the imprint template. The pattern of depressions may subsequently be filled in with an optically transmissive filler (e.g., a planarization layer as discussed above) or may simply be retained and the additional liquid crystal layers may be deposited into and over the depressions. It will be appreciated that each underlying liquid crystal layer may serve as a template for self-alignment of an overlying liquid crystal layer 1520 or 1522, as disclosed herein and as depicted in Figure 15C.

In some other implementations, one or more of the additional liquid crystal layers may be imprinted with an imprint template and polymerized to obtain a desired alignment of the liquid crystal molecules in those one or more additional liquid crystal layers 1520, 1522 or 1530. For example, in the implementation depicted in Figure 15D, a second liquid crystal layer 1530 is disposed over the planarization layer 1525 and imprinted by a second imprint template. In such implementations, the second liquid crystal layer 1530 may have a different orientation than would be obtained using the underlying liquid crystal layer as an alignment layer. For example, different imprint templates may be utilized to form a stack of liquid crystal gratings having different tilt angles, without using subsequent alignment layers. In some implementations, a stack of liquid crystal grating structures 1515, 1520, 1522 may be formed with each layer directly in contact with neighboring layers and having different tilt angles.

### EXAMPLE VOLUME PHASE HOLOGRAPHIC GRATINGS

As discussed herein, a VPHG may usefully transform (e.g., via diffraction) an input beam of light, propagating in free space and incident on a waveguide, to guided light propagating in the waveguide or transform guided light propagating in the waveguide to an output beam of light that propagates in free space or redirect light propagating by TIR within the waveguide, or otherwise redirect the light.

As described above, in some implementations, the VPHGs may be utilized as optical components in a head mounted or wearable display system (e.g., the wearable display system 60 described above). The display system may include a waveguide or a waveguide stack (e.g., waveguide stack 660), and an image injection system (e.g., the light projector system 520) configured to direct one or more light rays into the waveguide or the waveguide stack.

In some implementations, one or more of the image injection devices of the image injection system (e.g., image injection devices 360, 370, 380, 390, or 400), may inject light to one or more waveguides (e.g., waveguides 670, 680, 690) in a waveguide stack (e.g., waveguide stack 660) from a position that requires light to be redirected for in-coupling such that the resulting light rays propagate though the waveguide by total internal reflection (TIR). In these implementations, one or more VPHGs may be used as one or more of an input coupling grating (ICG) or in-coupling optical elements (e.g., in-coupling optical element 700, 710 or 720) to redirect one or more light rays (e.g., light rays 770, 780, or 790) to the one or more waveguides in the waveguide stack.

The VPHGs may also be used as one or more of an exit pupil extender (EPE) or out-coupling optical element (e.g., out-coupling optical element 730, 740, or 750) to couple out or extract one or more light rays propagating through the waveguide, out of the waveguide and redirect the resulting light rays to a user's eye (e.g., the eye 210 of a wearer of the HMD or the wearable display). In such applications, the diffraction efficiency of the VPHG may be lower than for the VPHGs used as ICGs (for in-coupling light), to facilitate replication of an output beam across a large area for, e.g., expanding the eye box. In some implementations, when used as an EPE, the VPHG may allow shorter pupil relief between the VPHG and the eye (e.g., the eye 210 of a wearer of the HMD or the wearable display), that collects the output beam. In some other implementations, a VPHG used as EPE may support a smaller exit pupil located on the user's eye. Advantageously, a small exit pupil located of the eye 210 may reduce the amount of light lost when coupling light from a waveguide to a user's eye.

In yet other examples, a VPHG may be used to redirect and/or guide light waves propagating in a waveguide. For example, a VPHG may be used an orthogonal pupil expander (OPE) on a waveguide and to redirect a portion of light rays (e.g., light rays redirected by an ICG), striking the OPE toward an EPE of the same waveguide.

For example, with reference to Figure 9, all or some of the in-coupling optical elements 700, 710, 720, all or some of the EPEs 800, 810, 820 and all or some of the OPEs 730, 740, 750, may be VPHGs disposed on the waveguides 670, 680, 690. In some examples, the VPHGs be disposed on and in contact with a major surface of one or more of the waveguides 670, 680, and 690. In some such examples, the VPHGs may be included in a VPHG layer (e.g., a PL within which the one or more VPHGs are formed) disposed on and in contact with a major surface of one of the waveguides 670, 680, and 690. In these examples, the waveguides 670, 680, and 690 may be attached together to form the waveguide stack 660 after disposing the VPHGs or the VPHG layer on some or all of the one or more waveguides 670, 680, and 690.

Figure 16 illustrates the coupling of light into and out of the waveguide 670 using two VPHGs (700 and 800) disposed on the waveguide 670. For example, the waveguide 670 can be a waveguide in the stack of waveguides shown in Figure 9A. A beam of light 770 (e.g., a divergent, convergent, or collimated beam of light) generated by the light projector system 520, is directed toward the in-coupling optical element 700 (e.g., a first VPHG) configured to couple the incident beam of light 770 into the waveguide 670. In some implementations, the incident beam 770 may be an image projected on the first VPHG 700. Upon coupling to the waveguide 670, the incident beam 770 becomes a guided light 1625 (a guided light wave) that propagates inside the waveguide 670 by total internal reflection (TIR). The guided light 1625 may be extracted at any point along the propagation path using an out-coupling optical element (e.g., a second VPHG) disposed on the waveguide 670. Upon interaction with the out-coupling optical element 800 (second VPHG) the guided light 1625 is transformed to an output beam 1626. In some implementations, the output beam 1626 may form an image inside a user's eye 210 (e.g., the user wearing an HMD). In some implementations, the first VPHG 700 and second VPHG 800 may be identical (e.g., having the same optical function and selectivity) but maybe disposed on the waveguide 670 with opposing directionalities (e.g., the face of the first VPHG 700 that is in contact with the waveguide 670 is equivalent to the top face of the second VPHG 800 that is in contact with air). In some implementations, the second VPHG 800 may have lower diffraction efficiency and/or otherwise be designed to redirect a smaller proportion of incident light than the first VPHG 700, to facilitate replication of the output beam across the waveguide, to provide an enlarged eye box.

Various implementations of the VPHGs described herein may be configured to diffract light having a variety of wavelengths, e.g., in the visible (e.g., between 400 nanometers and 750 nanometers) and infra-red (e.g., near-infrared between 750 nanometers and 2000 nanometers, or mid-infrared between 2000 nanometers and 6000 nanometers) spectral ranges. In some implementations, to achieve high diffraction angles, it may be desirable for the periodicity Λ_{HG} (see Eq. 1) of the grating structure to be approximately equal to or even smaller than the wavelength of the incident light. Accordingly, the periodicity Λ_{HG} of the grating structure may be between about 200 nm and about 100 micrometers depending on the operational wavelength range of the VPHG. For example, the periodicity Λ_{HG} of the grating structure may be between about 200 nanometers (nm) and about 350 nm; between about 330 nm and about 410 nm; between about 370 nm and about 480 nm; between about 450 nm and about 510 nm; between about 500 nm and about 570 nm; between about 550 nm and about 700 nm; between about 650 nm and about 1 micrometer (µm); between about 980 nm and about 3 µm; between about 1.3 µm and about 3.2 µm; between about 2.3 µm and about 5 µm; between about 5 µm and about 10 µm; between about 5 µm and about 100 µm; or any value in these ranges or sub-ranges. Preferably, in display applications, the VPHG structure is configured to diffract visible light so that the light propagates away from the grating structure at wide diffraction angles, e.g., angles suitable for TIR within a waveguide on which the grating structure may be formed.

As discussed herein, it will be appreciated that while the VPHGs may advantageously be utilized to redirect light into, through, and/or out of waveguides of display systems, the VPHGs may be utilized in other applications in which optical gratings are suited. The methods disclosed herein allow high-quality replication of the optical functionality of diffractive structures (e.g., diffractive gratings), thereby allowing use of the VPHGs in the various applications for which such structures are suited.

### EXAMPLE METHODS OF MAKING VOLUME PHASE HOLOGRAPHIC GRATINGS

Methods of fabricating an optical device comprising a volume phase hologram (VPH) are described herein. In some implementations, the VPH may function as a diffraction grating and may be referred to as *volume phase holographic grating* (VPHG). The disclosed fabrication methods may be used for fabricating a VPH or a VPHG using one or a plurality of master gratings (e.g., liquid crystal polarization gratings or surface relief gratings). In some implementations, the VPHG may be detached from the master grating after the VPHG is fabricated. In some such implementations, the VPHG may be attached to a major surface of a waveguide (e.g., waveguide 670), and function as an in-coupling optical element, an out-coupling optical element (e.g., an EPE), or a light distribution element (e.g., OPE) for the waveguide. After attaching the VPHG to the waveguide, the waveguide may be used to fabricate a waveguide stack (e.g., the waveguide stack 660, Figure 9A). In various examples which are not according to the claimed invention, a single master grating may be used for fabricating a plurality of VPHGs. Advantageously, fabrication of multiple VPHGs using the same master grating may reduce the cost of replicating VPHGs for applications demanding high volume production of these devices. Further, fabricating multiple VPHGs using a single master grating may enable production of a large number of VPHGs with identical or near identical optical characteristics.

In some implementations, the master grating may be a reflective grating (e.g., a surface relief grating) that may generate one or more diffracted beams of light upon illumination by an incident light, preferably a single recording light beam. Without being limited by theory, one diffracted beam of light of the one or more diffracted beams of light may serve as the *object beam* and a portion of the recording light beam may serve as the *reference beam.* The interference between the object beam and the reference beam may generate a hologram. In some implementations, the VPH may be fabricated by the hologram formed inside a photosensitive layer deposited on the master grating.

According to the claimed invention, the VPHGs are fabricated using a master grating that is a liquid crystal grating (LCG), herein referred to as a *liquid crystal master grating* (LCMG). The LCMGs are liquid crystal polarization gratings (LCPGs), such as one of the LCPGs described above. For example, the LCMG may be a reflective grating or reflective polarization grating. In some implementations, the LCMG may be a polarization grating that diffracts light based on its polarization state. In some implementations, the LCMG may only provide multiple diffracted beams or waves associated with a single diffraction order. For example, when the LCMG is illuminated by an incident beam of light, it may generate two diffracted light beams associated with the first diffraction order. In some implementations, the diffractive properties of the LCMG may be controlled by the structure of the LCMG. For example, the diffractive properties of the LCMG may be tailored by controlling the orientation of the liquid crystal molecules in one or more liquid crystal layers by patterning the LCMG using, for example, lithography (e.g., e-beam lithography) followed by etching (e.g., dry etching or wet etching), or by nanoimprinting. As described above, in some implementations, the LCMGs may be configured to provide a desired (e.g., high) diffraction efficiency for a wide range of incident angles (e.g., between about ±20-degrees about the Bragg angle, between about ±30-degrees about the Bragg angle, between about ±45-degrees about the Bragg angle, etc.). Accordingly, certain properties of the VPHGs and VPHs formed using the LCMGs may advantageously have low sensitivity to the angle of incidence of the recording beam.

In some example methods, the VPH may be formed by coating or laminating a photosensitive layer on a master grating (e.g., an LCMG). The photosensitive layer (PL) may be composed of a photosensitive material whose refractive index and/or optical absorption locally changes when exposed to light having wavelengths within a certain wavelength range (e.g., a visible wavelength range), herein referred to as the *characteristic wavelength range* of the photosensitive material. Examples of photosensitive material include, but are not limited to, Dichromated gelatin (DCG), and photopolymers.

In some implementations, the change of refractive index and/or optical absorption at any point inside a photosensitive layer may be proportional to the intensity of light at that point. The photosensitive material may partially transmit light having a wavelength within its characteristic wavelength range. In some implementations, the change in the refractive index (or optical absorption) of the photosensitive material may be made permanent by one or more post exposure treatments (e.g., keeping the exposed photosensitive material at a specific elevated temperature for a period of time). In some implementations a plurality of air gaps may exist at the interface between the PL and the master grating. In some other examples, the interface between the PL and the master grating may be free of any air gap.

In examples where the master grating is a LCMG, the LCMG may be a single layer or a multilayer LCG. In some such examples, each LCG layer may comprise several sublayers. For example, the LCMG may the single layer LCG shown in Figure 11 comprising multiple sub-layers where the molecules in each sub-layer are aligned with respect to those in the adjacent sub-layers according to the configuration shown in Figure 11. As another example, the LCMG may be the multilayer LCG shown in Figure 12B-1 comprising three layers where each layer has a different arrangement of sub-layers and sublayers of each layer are aligned with respect to those in the adjacent layers according to the configuration shown in Figure 12B-1.

In some implementations, the LCMG may be covered by an optically transparent interface layer. The optically transparent interface layer may be transparent to a range of light wavelengths used for fabricating the VPHG and may have a thickness between 50 microns to 100 microns, 100 microns to 500 microns, or 500 microns to 1 mm. In some examples, the refractive index of the transparent interface layer that covers a VPHG may be taken into account when fabricating the VPHG so that the VPHG supports a specific optical function after being covered with the optically transparent interface layer. In some cases, the optically transparent interface layer may facilitate the adhesion of the PL to the LCMG and it may also protect the LCMG and facilitate the removal of the fabricated LCMG. In some cases, the optically transparent layer may be an antireflection layer configured to reduce Fresnel reflectance (due to refractive index contrast) from the surface of the grating. In some such cases, the antireflection layer may comprise two or more sub-layers.

The VPHG may be formed within the photosensitive layer (PL) by illuminating the PL disposed on the LCMG, using an incident beam of light, herein referred to as a recording beam, that generates a three dimensional interference (3D) pattern within the PL. The incident beam of light may have a wavelength within the characteristic wavelength range of the photosensitive material used to form the PL. In some cases, the incident beam of light may have a polarization selected to reduce or eliminate high order diffraction (e.g., higher than the zero-order) by the liquid crystal master grating. The recording light beam may be directed toward the surface of the PL at an angle between ±20 degrees, ±30 degrees and ±45 degrees in some implementations. The recording beam incident on the PL may be partially transmitted inside the PL and become incident on the master grating (e.g., LCMG). The master grating may generate the object beam by diffracting the transmitted portion of the recording beam back into the PL layer. Advantageously, the LCMG may diffract the transmitted portion into a single diffraction order (e.g., only zero-order). A 3D interference pattern may be generated as a result of the interference between the object beam and a reference beam. In some implementations, the reference beam may be considered to be the portion of recording beam transmitted to the PL. The 3D dimensional interference pattern may create a three dimensional variation of the optical intensity within the volume of the PL resulting in a three dimensional variation of the refractive index (or the optical absorption) of the PL (e.g., proportional to three dimensional optical intensity variation). The characteristics of the 3D interference pattern (e.g., spatial intensity variation, maximum and minimum value of the intensity and the like), may be determined by the characteristics of the recording beam (e.g., its shape, the shape of its wavefront, its intensity and the like), the characteristics of the master grating (e.g., shape of the pattern formed on the liquid crystal, number of layers, molecule orientation within each layer and the like), the characteristics of the PL (e.g., thickness, uniformity, and the like), and the properties of the photosensitive material used to form the PL.

The recording beam may be a divergent beam of light (e.g., generated by a point source), a plane wave (e.g., generated by a collimator) or any other beam of light with a wavefront tailored to generate a desired 3D interference pattern within PL. In some implementations, the resulting refractive index (and/or optical absorption) distribution within the PL may be a periodic distribution. The magnitude of the peak value of the refractive index (and/or the optical absorption) of the PL layer may depend on the intensity of the recording light beam and the duration of the exposure. As such, by controlling the intensity of the recording beam and illumination time, the peak value in the refractive index (and/or optical absorption) distribution within the PL may be controlled. In some implementations, the shape of the 3D interference pattern may also be affected by the length of the illumination period.

It will be appreciated that the optical function and the selectivity of a VPHG fabricated using the above mentioned technique may both be controlled by the diffractive properties of the master grating. In some examples, the optical function and the operational incident angle range of the VPHG may not be selected independently. For example, if a non-liquid crystal surface grating is used as master grating to fabricate a VPHG with a specific optical function associated with the master grating, the operational incident angle range of the resulting VPHG may also be determined by the diffractive properties of the master grating. As such, if a non-liquid crystal surface grating is used as master grating to fabricate a VPHG, the VPHG may not support a desired optical function at a desired operational incident angle range.

As described above, advantageously, an LCMG may be used to fabricate VPHGs with the same optical function, but selectivity may be modulated during fabrication thereby expanding the functionality of the LCMG. In some implementations, when an LCMG is used to fabricate a VPHG using the above mentioned method, the optical function of the resulting VPHG may be controlled by the diffractive properties of the LCMG and the selectivity of the VPHG may be determined by properties of the incident optical beam (e.g., angle of incidence) used to form the VPHG in the PL. For example, an LCMG may be used to fabricate a first VPHG in a first PL layer using a recording beam with a first angle of incidence, and a second VPHG in a second PL layer using a recording beam with a second angle of incidence. Subsequently, the first VPHG may transform an input beam with a first incident angle to a first output beam and the second VPHG may transform an input beam with a second incident angle to a second output beam, wherein the transformation between the first input beam and the first output beam is identical to the transformation between the second input beam and the second output beam.

Advantageously, the ability to independently control the optical function and the selectivity of a VPHG may enable fabrication of VPHGs that transform a selected input beam or input wave based on a selected optical function.

As discussed above, a VPHG may support a specific optical function for input light beams or guided light having wavelengths within an operational wavelength range of the VPHG. It will be appreciated that the operational wavelength range of an VPHG may be determined based at least in part on the application or system that uses the VPHG for transforming light. However to record a VPHG, the wavelength of the recording light beam is preferably within the characteristic wavelength range of the PL. As such, the wavelength of recording light beam may be constrained by the photosensitive material used as the PL.

In some cases, the operational wavelength range of a VPHG may partially overlap with the characteristic wavelength range of the photosensitive material used to fabricate the VPHG. In some other cases, the operational wavelength range of a VPHG may not overlap with the characteristic wavelength range of the photosensitive material used to fabricate the VPHG. For a wide range of applications, a desired operational wavelength range of the VPHG may be between 450 nm and 2000 nm while the characteristic wavelength of the most common photosensitive materials is between 300 nm and 550 nm. For example, where a head mounted display is used for displaying virtual reality or augmented reality, the waveguide display (e.g., the waveguide stack 660) may receive images from a visible image projector where the image is formed with light having wavelengths between 450 nm and 700 nm (visible wavelength range). In some other examples, where the head mounted display is used for eye-tracking or medical diagnostics, the waveguide display (e.g., the waveguide stack 660) may receive images from an infrared (IR) image projector where the image is formed with light having wavelengths between 700 nm and 2000 nm (i.e., near infrared wavelength range) or between 2000 nm and 6000 nm (i.e., mid infrared wavelength range). As a result, the gratings used as ICGs, EPEs and OPEs for in-coupling, out-coupling and/or distributing light in the corresponding waveguide displays preferably support an operational wavelength range different than the wavelength of the recording light beam used to fabricate the gratings.

The operational wavelength range of VPHGs fabricated using conventional fabrication methods (e.g., the methods that do not use LCMGs for recording VPHGs) usually overlaps with the characteristic wavelength range of the PL (typically between 300 nm - 550 nm) because fabrication of VPHGs with operational wavelength ranges above the a maximum characteristic wavelength of a photosensitive material (e.g., 550 nm) may be challenging. Advantageously, when LCMGs are used to fabricate VPHGs, the resulting VPHGs may have operational wavelength ranges that extend well beyond the characteristic wavelength range of the common photosensitive materials, as discussed herein.

Figures 17A-17F illustrate an example of a method for making a VPHG using a liquid crystal master grating (LCMG) which is not according to the claimed invention. As shown in this example, the LCMG may be a reflective grating. First, LCMG 1702 is provided, as shown in cross-sectional side view (FIG. 17A). The LCMG 1702 may be the liquid crystal polarization grating 1001, 1100a, or 1100b and may be fabricated using the method described with respect to Figures 13, 14 or 15. Next, a photosensitive layer (PL) 1704 (e.g., a layer composed of a photosensitive material) is formed on the LCMG 1702, as shown in cross-sectional side view (FIG. 17B). In some implementations, the photosensitive layer 1704 may be formed on the LCMG 1702 (or on the transparent layer covering the LCMG), by spin coating a photosensitive material (originally a liquid) on the LCMG 1702 (or on the transparent layer covering the LCMG). In some other examples, the PL 1704 may be deposited using various deposition techniques including, but not limited to, evaporation (e.g., thermal, e-beam, and the like), molecular beam epitaxy (MBE), chemical vapor deposition (CVD), including metal organic CVD (MOCVD), low-pressure CVD (LPCVD), and the like.

In yet other examples, the photosensitive layer 1704 may be laminated on the LCMG 1702 (or on the transparent layer covering the LCMG). For example, the PL 1704 may be separately formed on an auxiliary substrate (e.g., by spin coating or different types of deposition methods) and then laminated on top of the LCMG 1702 (or the transparent layer covering the LCMG). In some implementations, once the PL 1704 is laminated on the LCMG 1702, the auxiliary substrate may be removed, leaving only the PL 1704 on the LCMG 1702 (or the transparent layer covering the LCMG). In some such implementations, after the PL 1704 is formed on the LCMG 1702 or on the auxiliary substrate, the PL 1704 may be cured using curing techniques associated with the specific type of photosensitive material used to form the PL1704. For example, the PL 1704 may be kept at an elevated temperature for a period of time to form a stable rigid or semi-rigid PL 1704 ready for exposure. The curing process may change the physical and chemical properties of the PL 1704 (including but not limited to its photosensitive properties). As discussed herein, an interface (buffer) layer may be provided between the LCMG 1702 and PL 1704 in some implementations. In some examples, the interface layer may help adhesion of the photoresist material to the LCMG and/or reduce the reflection of light due to index contrast between LCMG and the PL.

Next, with reference to cross-sectional side views shown in FIG. 17C and FIG. 17D, the top surface of the PL 1704 is illuminated by the recording light beam 1706 having a wavelength within the characteristic wavelength range of the photosensitive material used to form the PL layer 1704, as shown in cross-sectional side view (FIG. 17C). The recording light beam 1706 propagates into and through the PL layer 1704 and gets diffracted by the LCMG 1702. The portion of the recording beam 1706 transmitted into the PL 1704 may be understood to be a reference beam, and the portion of the recording beam 1706 diffracted by the LCMG 1702 may be understood to the object beam 1708. The reference beam 1707 and the object beam 1708 generate an interference pattern 1710 inside the PL 1704. Without being limited by theory, after illuminating the PL 1704 for a given period of time, the spatial distribution of the refractive index and/or optical absorption within the PL 1704 is understood to change proportional to the spatial distribution of the optical intensity associated with the interference pattern 1710, transforming the PL 1704 to a VPHG 1712. The illumination time may be determined based on the properties of the PL 1704 (e.g., composition, thickness, pre-illumination curing time and pre-illumination curing temperature, and the like). After a time period sufficient to achieve the desired distribution and magnitude of refractive index change and/or optical absorption change inside the PL 1704, the recording beam 1706 may be turned off, as shown in cross-sectional side view (FIG. 17E). In some implementations, a curing process may be used to stabilize the distribution and magnitude of the induced refractive index change and/or optical absorption inside the PL 1704. For example, the VPHG 1712 may be kept at an elevated temperature for a sufficient period of time to achieve the desired stabilization. The VPHG 1712 may subsequently be detached from the LCMG and used as a standalone VPHG.

In some implementations, the VPHG 1712 may be transferred over to another substrate (not shown) before being detached from the LCMG 1702. For example, the exposed surface of the VPHG 1712 (top surface in the structure shown in view (E)) may be bonded to another substrate. In some such examples, an additional layer (an auxiliary layer) may be deposited on the exposed surface of the VPHG 1712 before bonding to another substrate to facilitate the attachment of the VPHG 1712 to the other substrate and/or enhance the quality and strength of the bonding. Once the VPH is bonded to the substrate, the LCMG may be detached from the VPH.

In some implementations, the resulting VPHG 1712 may be a VPHG with a specific optical function configured to diffract light for a specific application (e.g., coupling light into/out of a waveguide). The specific optical function may be associated with a specific spatial distribution and magnitude of the induced refractive index change (and/or optical absorption change) in the PL 1704. In some such examples, the VPHG 1712 with a specific optical function may be fabricated using an LCMG 1702 with specific diffractive properties to generate an object beam 1708 that, upon interference with the reference beam 1707, generates an interference pattern 1710 to form the specific desired spatial variation of refractive index (and/or optical absorption) within the PL.

In some examples, the VPHG 1712 is configured to couple light beams into and/or out of a waveguide. The waveguide may be a waveguide in a waveguide stack (e.g., waveguide stack 660) used in a wearable display. In some such examples, after fabrication (as shown in cross-sectional side view (FIG. 17E)), and detachment from the LCMG 1702 (as shown in cross-sectional side view (FIG. 17F)), the VPHG 1712 may be attached to a major surface of the waveguide, before adding the waveguide to the waveguide stack, with the VPHG 1712 serving as an ICG or EPE. In some cases, a buffer layer may be disposed between the major surface of the waveguide and the VPHG to improve adhesion and/or reduce optical reflection due to index contrast. The buffer layer may be disposed on VPHG 1712, or on a region of the major surface of the waveguide where the VPHG is attached, before attaching the VPHG to the waveguide.

In some implementations, the recording beam 1706 may have a specific polarization state (e.g., circular, linear or elliptical). In some implementations, the recording beam 1706 may be formed by transforming the output of an optical source (e.g., a laser source) using one or more free-space optical components (e.g., lenses, prisms, polarizers, collimators, and the like). In some other implementations, the recording beam 1706 may be formed using fiber-optic components. In yet other implementations, a combination of free-space, fiber-optic and other types of optical components (e.g., integrated and chip-based optical components) may be used to form the recording beam 1706.

In some implementations, the LCGM may be replaced by surface relief gratings or other types of gratings.

In some implementations, the change in the refractive index of the PL may comprise a change in the optical absorption of the PL. In these implementations, the interference between the object beam 1708 and the reference beam 1707 may induce variations of refractive index and optical absorption within the PL 1704.

As mentioned herein, the recording beam 1706 may have different wavefronts. Figure 18 illustrates an example where the recording beam 1706 is a divergent beam generated by a point source 1801. In this example, the master grating 1702 is a reflective grating, e.g., a liquid crystal reflective grating or a non-liquid crystal surface grating coated with a reflective material (e.g., a metallic layer). It will be appreciated that the reflective coating may underlie the gratings, or may overlie the gratings (e.g., where the grating is a surface relief grating). The master grating 1702 may diffract the portion of the recording beam 1706 transmitted to the PL 1704 back into the PL 1704 where it interferes with the portion 1707 of the recording beam 1706 propagating through the PL 1804, thereby generating an interference pattern.

In some implementations, a VPHG may be recorded in the PL using multiple exposures. In these examples, a first exposure to the recording beam may generate a first refractive index distribution in the PL and second exposure to the recording beam may generate a second refractive index distribution. In some implementations, the first and second refractive index distributions may be non-overlaping. In some other examples, the first and second distributions may at least partially overlap. In some implementations, the relative positions of the master grating and the PL disposed on it may change with respect to the recording beam (e.g., by moving the master grating and /or the recording beam). In some implementations, the recording of a VPHG may comprise more than two exposures (e.g., 3, 4 or 5 exposures). Advantageously, multi-step recording of a VPHG may improve certain performance parameters of the VPHG (e.g., operational wavelength, field of view or angular distribution of the diffracted beam, and the like).

Figures 19A-19B illustrate an example method for multistep recording of a VPHG. In this example, during a first exposure, a divergent recording beam from a light source (not shown) illuminates the PL 1704 disposed on top of the LCMG 1702 at a first position shown in Figure 19A. Once a first refractive index distribution is fully formed inside the PL 1704, the position of the LCMG 1702 relative to the light source is shifted, e.g., the LCMG 1702 is moved along an axis parallel to the surface of the PL 1704 (e.g., in one dimension) to a second position shown in Figure 19B. At the second position the PL 1704 is illuminated by the same recording beam 1706 for a second time, resulting in formation of a second refractive index distribution inside the PL 1704. In some implementations, the method illustrated in Figure 19A-19B may be used to expand the eye box or the exit pupil when the VPHG is used as the out-coupling optical element or exit pupil expander on a waveguide used in an HMD. In some other examples, the LCMG 1702 may be moved in two or three dimensions during a multistep recording process.

Figure 20 illustrates an example configuration for generating the recording beam 1706 used to record a VPHG, for example, using the two-step exposure described with reference to Figure 19. In this example, the recording beam 1706 is formed by transforming a linearly polarized collimated beam 2030 into a circularly polarized divergent beam 1706, e.g., using a positive lens 2032 (e.g., a double convex lens) and a quarter wave plate (QWP) 2034. The recording beam 1706 illuminates the PL 1704 disposed on a master grating 1702 (e.g., an LCMG) and transforms the PL 1704 to a VPHG. In the example shown, the master grating 1702 is mounted on a prism. The prism may be transparent around the wavelength of the recording beam 1706 (e.g., a wavelength in the characteristic wavelength range of the PL). The prism 2036 may have a refractive index close to that of the master grating 1702 (or the refractive index of a substrate on which the master grating is fabricated). Additionally, the shape of the prism 2036 directs light reflected at the prism-air interface away from the master grating 1702. As such, the mounting configuration shown in Figure 20 may reduce the amount of light reflected at the interface between the master grating 1702 and the prism 2036, and at the prism-air interface; as a result, the total amount of reflected light that may return to the master grating and interfere with the formation of the VPHG may be reduced.

In some examples, the linearly polarized collimated beam 2030 may be directly generated by a light source (e.g., a laser). In some other examples, the linearly polarized beam 2030 may be generated using a light source (e.g., a laser source), an optical polarizer and an optical collimator (e.g., a free-space collimator, a fiber coupled collimator and the like). The lens 2032 generates the divergent beam and the quarter wave plate 2034 changes the polarization of the divergent beam from a linear polarization state, to a circularly polarization state (e.g., right circularly polarized or left circularly polarized). As mentioned herein, the diffractive characteristics of the master grating 1702 (e.g., a liquid crystal master grating) may depend on the polarization the recording beam 1706 and the shape of its wavefront. Various optical systems similar to the one shown in Figure 20 may be used to generate a recording beam tailored for generation of a VPHG based on a given master grating. These configurations may use optical elements that include, but are not limited to, polarizers, waveplates, lenses, mirrors, collimators, prisms, circulators, isolators, liquid crystal phase modulators and the like. In some implementations, the recording beam 1706 may have a specific polarization state (e.g., circular, linear or elliptical) selected based on the optical properties of master grating 1702 and the target optical function of VPH or VPHG.

In some cases, the angular distribution of the diffracted light by a single VPHG may be limited. Such a limitation may adversely affect the performance of the HMDs that use VPHGs as out-coupling optical elements. In these cases, a stack of VPHGs may be used to expand the angular distribution of the light out-coupled from a waveguide (e.g., a waveguide in a waveguide stack of an HMD). In these examples, each of the VPHGs in the stack of VPHGs may have the same operational wavelength ranges but diffract light around different central angles.

Figure 21A illustrates out-coupling of light from a waveguide using a single VPHG disposed on a waveguide, and the angular distribution of the out-coupled light beams; and also out-coupling of light from a waveguide using a stack of three VPHGs disposed on a waveguide, and the angular distribution of the out-coupled light beams. Cross-sectional view of FIG. 21A shows an example where a VPHG 1712 is used as the out-coupling optical element on a waveguide 670 and out-couples light propagating in the waveguide 670 according to the angular distribution 2112a (shown as a bell-shaped curve). The out-coupled light 1626a, out-coupled by a single VPHG 1712, may rapidly decrease away from a peak angle of the angular distribution 2112a according to an angular bandwidth of the angular distribution 2112. Figure 21B illustrates another example where a stack of three VPHGs 1712a/ 1712b/1712c is used to out-couple light from the same waveguide 670. In this second example, the out-coupled light 1626a/1626b/1626c by the three VPHGs 1712a/ 1712b/1712c, may have the same wavelength but three different angular distributions 2113a/2113b/2113c each centered around a different peak angle. In some implementations, these angular distributions 2113a/2113b/2113c may have the same angular bandwidth. In some implementations (such as the one shown in cross-sectional view of FIG. 21B), the VPHGs 1712a/ 1712b/1712c in a stack of VPHGs may be designed to output light at different directions (e.g., corresponding to the peak angle of each angular distributions), to support a larger eye box, exit pupil, and/or larger field of view. In these examples, the intensity variation of the diffracted light may be minimized over a relatively broad angular distribution (e.g., 2, 3 or 4 times broader than the angular distribution supported by a single VPHG). In some implementations, the stack of other types of gratings (e.g., liquid crystal polarization gratings) may be used as out-coupling optical elements on a waveguide (e.g., in order to expand the eye box, the exit pupil, and/or the field of view of the HMD that uses the waveguide). According to the claimed invention, a VPHG is fabricated using a plurality of master gratings, e.g., two master gratings. In some such implementations, the first master grating may be a transmissive grating and the second master grating may be a reflective grating. The PL is sandwiched between the first and second master gratings and the VPHG may be recorded by illuminating the transmissive master grating. In these implementations, the optical function of the VPHG may be controlled by the diffractive properties of the recoding beam as well as the first and second master grating used to fabricate the VPHGs. Some VPHGs fabricated using two master gratings, may be used for transforming or redirect guided light propagating in a waveguide (e.g., the light distributing elements or OPEs 730, 740, 750 in Figure 9).

Both master gratings are LCMGs. Advantageously, when both master gratings are LCMGs, the selectivity of the resulting VPHG may be controlled independently of the optical function of the VPHG used in the fabrication process. In these implementations, the optical function of the VPHG may be controlled, at least partially, by the diffractive properties of the first and the second VPHGs. The selectivity of the VPHG may be controlled, at least partially, by the properties of the recording beam (e.g., angle of incidence, wavelength, and the like).

Figures 22A-22F illustrate an example of a method for making a VPHG using two master gratings (e.g. two LCMGs). First, a layer of photosensitive material 1704 is formed on a first master grating 1702a (cross-sectional side view FIG. 22A), for example, using the same techniques described with reference to Figure 17. Next, a second master grating 1702b is formed or attached on the PL 1704. In some implementations, the second master grating 1702b may be separately formed on an auxiliary substrate and then laminated on top of the PL. In some such implementations, once the second master grating 1702b is laminated on the PL 1704, the auxiliary substrate may be removed, leaving only the second master grating 1702b on the PL 1704.

With reference to cross-sectional side view (FIG. 22B), in some implementations, before adding the second master grating 1702b, PL 1704 may be covered by a layer of a transparent material (e.g., UV glue or index matching gel) to reduce reflection (Fresnel reflection) of light in the interface between the second master grating 1702b and the PL 1704 due to refractive index contrast. In some implementations, the refractive index of the transparent material may match the refractive index of the PL. In some other examples, the refractive index of the transparent material may be less than the refractive index of the PL. In some implementations, the first master grating 1702a may be a transmissive grating (e.g., a transmissive liquid crystal polarization grating) and the second master grating 1702b may be a reflective grating (e.g., a reflective liquid crystal polarization grating). In some other implementations, the second master grating may be a grating coated with a highly reflective layer (e.g., a metallic layer).

Next, as shown in cross-sectional side views FIG. 22C and FIG. 22D, the top surface of the second master grating 1702b is illuminated by recording beam 1706 having a wavelength within the characteristic wavelength range of the photosensitive material used to form the PL 1704. The second master grating 1702b generates a first diffracted beam 1707b by diffracting a portion of the recording beam incident on the PL 1704. In some implementations, the characteristics of the first diffracted refracted beam 1707b may be controlled by the optical function of the second master grating 1702b. In some implementations, the angle of incidence of the recording beam 1706 may be selected to provide a high intensity for the diffracted beam 1707b. In some implementations, at least a portion of the first diffracted beam 1707b may be transmitted so that it is incident on the first master grating 1702a resulting in generation of a second diffracted beam 1708a by the first master grating 1702a. The interference between the first diffracted beam 1707b and the second diffracted beam 1708a may generate an interference pattern 1710 inside the PL 1704. In some implementations, the second master grating 1702b may diffract the second diffracted beam 1708a and generate a third diffracted beam 1708b. In some such implementations, the first master grating may refract the third diffracted beam 1708b and generate a fourth diffracted beam 1708c. In these implementations, the interference between the first diffracted beam 1707b, second diffracted beam 1708a, third diffracted beam 1708b and/or fourth diffracted beam 1708c may generate an interference pattern 1710 inside the PL 1704. In yet other implementations, a portion of the second diffracted beam 1708a and the fourth diffracted beam 1708c may be reflected from the interface between the PL 1704 and the second master grating 1702b or the transparent layer between them. In these implementations, the interference pattern 1710 may be generated as a result of the interference between the first diffracted beam 1707b, the second diffracted beam 1708a, the third diffracted beam 1708c and the reflected beams.

After illuminating the PL for a given period of time, the spatial distribution of the refractive index within PL may change proportional the spatial distribution of the optical intensity associated with the interference pattern 1710, transforming the PL 1704 to a VPHG 1712. The illumination time may be determined based on the properties of the PL 1704 (e.g., composition, thickness, pre-illumination curing time and pre-illumination curing temperature, and the like). After a duration sufficient for the desired distribution and magnitude of refractive index (and/or optical absorption) change inside the PL to be achieved, the recording beam 1706 may be turned off (cross-sectional side view E). In some implementations, a curing process may be used to stabilize the distribution and magnitude of the induced refractive index change inside the PL. For example, the VPHG 1712 may be kept at an elevated temperature for a sufficient period of time to achieve the desired stabilization. In some implementations, the VPHG 1712 may be detached from the first master grating 1702a and the second master grating 1702b may be used as a standalone VPHG (cross-sectional side view F).

In some cases, the VPHG 1712 may be transferred to another substrate (e.g., a transparent substrate). In these examples, the first or the second master grating may be removed to expose one or both surfaces of the VPHG 1712. Next, a surface of the VPHG that is not in contact with a master grating may be laminated or glued (e.g., using UV glue) to the transparent substrate. Finally the other master grating will may be detached from the VPHG 1712. In some other cases, both master gratings 1702a/1702b may be removed before attaching the VPHG 1712 to the transparent substrate. In some implementations, the transparent substrate may be waveguide (e.g., a display waveguide used in a head mounted display).

In some implementations, the resulting VPHG 1712 may be a VPHG with a specific optical function configured to diffract light for a specific application. The specific optical function may be associated with a specific spatial distribution and magnitude of the induced refractive index change (and/or optical absorption change) in the PL 1704. In some implementations, the optical function of the VPHG fabricated using two master gratings may be designed for distributing and/or redirecting a guided wave in a waveguide. For example, a VPHG fabricated as described with reference to Figure 22 may be used as a light distributing element (OPE) in a waveguide (e.g., waveguide 670 in the waveguide stack 660) used in an HMD (e.g., as the distributing element 730 in Figure 9). In some such examples, the VPHG 1712 with a specific optical function may be fabricated using a first master grating 1702a and a second mater grating 1702b with specific diffractive properties to generate an interference pattern 1710 that generates a specific spatial variation of refractive index (and/or optical absorption) within the PL 1704. In some implementations, the first master grating 1702a, or the second master grating 1702a, or both master gratings may be LCMGs. Advantageously, when both master gratings used to fabricate the VPHG 1712 are LCMGs, the optical function of the VPHG 1712 may be selected independent of the selectivity of the VPHG 1712. For example, the optical function of the VPHG 1712 may be selected by using the first master grating 1702a and the second master grating 1702b with specific diffractive properties and the selectivity of the VPHG 1712 may be controlled by controlling the properties of the recording beam 1706 (e.g., an angle of incidence of the recording beam 1706).

In some implementations, after fabrication (cross-sectional view E) and detachment from the LCMG 1702 (cross-sectional view F), the VPHG 1712 may be attached to a major surface of the waveguide, before adding the waveguide to the waveguide stack, to serve as an OPE on the waveguide. In some cases, a buffer layer may be disposed between the major surface of the waveguide and the VPHG 1712 to improve adhesion and/or reduce optical reflection due to index contrast. The buffer layer may be disposed on VPHG 1712, or on a region of the major surface of the waveguide where the VPHG 1712 is attached, before attaching the VPHG 1712to the waveguide.

Figures 23A and 23B illustrate an example method for fabricating an OPE that may be used on a waveguide to rotate the direction of propagation of guided light inside the waveguide (e.g., by 90 degrees). As shown in Figure 23A, the PL 1704 may be sandwiched between first master grating 1702a that may be a reflective grating and second master grating 1702b that may be a transmissive grating. In some implementations, a layer 2309 formed from a material that is transparent within the recording wavelength range may be disposed on the PL 2304 and sandwiched between the PL 1704 and the second master grating 1702b. The layer 2309 may be configured to reduce reflection of light in the interface between PL 1704 and the second master grating 1702b (or the substrate on which the second master grating 1702b is disposed). For example, the layer 2309 may be an index matching gel having a refractive index between the refractive index of the second master grating (or the substrate on which the second master grating 1702b) and the refractive index of the PL 1704. In some implementations, the first master grating 1702a and the second master grating 1702b may be periodic gratings. For example, the refractive index, orientation of molecules or thickness of a top layer, in these master gratings may periodically change along a specific direction resulting in periodic modulation of one or more optical parameters along that direction. The first master grating 1702a and the second master grating 1702b are liquid crystal master gratings (e.g., liquid crystal polarization gratings) comprising one or more liquid crystal layers each having several liquid crystal sublayers similar to the liquid crystal grating structures described with respect to Figure 11, 12A or 12B. In some implementations which are not according to the claimed invention, the first master grating 1702a and/or the second master grating 1702b may be a surface grating (e.g., surface relief gratings). For example, the second master grating 1702b may be a transmissive non-blazed linear surface grating and the first master grating 1702a may be the same or another non-blazed linear surface grating coated with a highly reflective metallic layer. These surface gratings may be fabricated on a glass substrate with a refractive index of 1.8 and thickness of 320 micrometers. In some cases, the first master grating may be a grating designed to function as light distributing element (e.g., an OPE) in a waveguide (e.g., a waveguide of a head mounted display) coated with a highly reflective layer. In some such cases, the second master grating 1702b may be a grating designed to function as out-coupling optical element (e.g., an EPE) for a waveguide (e.g., a waveguide of a head mounted display).

Figure 23B is a top-view diagram illustrating the relative alignment between the first master grating 1702a and the second master grating 1702b in the configuration shown in Figure 23A. In some implementations, the first master grating 1702a and the second master grating 1702b may be oriented such that the directions 2340/2342 along which the optical properties periodically vary for the first/second master grating are different by a specific angle (e.g., 45 degrees). In such examples, the interference pattern 1710 inside the PL 1704 may be generated by a reference beam 2307 and an object beam 2308 (diffracted by the first master grating 1702a and that may be propagated in different directions (e.g., directions that are 90 degrees rotated with respect to each other).

In some implementations, the thickness of the various implementations of the VPHG described herein may be in a range between about 1 µm to about 50 µm. For example, the thickness D of the grating structure may be in a range between about 1 µm and about 5 µm; between about 3 µm and about 10 µm; between about 7.5 µm and about 20 µm; between about 15 µm and about 30 µm; between about 25 µm and about 50 µm; or any value in these ranges or sub-ranges. In some implementations, the thicknesses of the grating structures forming a stack differ by about 0 to 10 µm, including about 0 to 100 nm; about 100nm to 1 µm; about 1 µm to 2 µm; or about 2 µm to 10 µm. In some implementations, the thickness of the VPHG may be selected at least in part based on the maximum achievable refractive index modulation in the PL, the grating period and a target diffraction efficiency at the operational wavelength of the VPHG.

The VPHGs fabricated using one or methods mentioned above may be used to design and implement various configurations for coupling light into a waveguide, redirecting light inside the waveguide, and coupling light out of the waveguide. Figure 24 is a simulation illustrating redirecting guided light received from a VPHG, functioning as an in-coupling optical element (an ICG) 700 to an out-coupling optical element (an EPE) 800, using a light distribution element (an OPE) 730. In some examples, the OPE 730 and/or the out-coupling optical element 800 may also be VPHGs. For example, the OPE 730 may be a VPHG fabricated using the configuration and the procedure described with respect to Figure 23A. As shown in the simulation, the OPE may receive a divergent beam of guided light (guided by the waveguide 670) and transform it to a convergent beam of guided light while rotating its direction of propagation by 90 degrees. The ICG 700 may be positioned at the image plane of a projector (e.g., a projector of the light projecting system 520) and couple an image projected by the projector to the waveguide 670.

In some implementations, two or more gratings may be used to redirect multi-component color light propagating inside a single waveguide. In some such examples, a subset of colors may be redirected by each grating that functions as an OPE. For example, Figure 25 illustrates an arrangement wherein a multi-color light beam (e.g., comprising of light beams having red, blue and green colors) is coupled into a waveguide 670 (e.g., a waveguide in an HMD) by an in-coupling optical element 700. The in-coupling optical element 700 couples the multi-color light beam into the waveguide 670 such that light beams having a first and a second color (e.g., red and blue) propagate along a first direction inside the waveguide 670 and light beams having a third color (e.g., green), propagate along a second direction inside the waveguide 670. The light beams having the first and second colors are redirected by a first OPE 730a disposed on the waveguide 670 and the third color (that propagates in different direction) is redirected by a second OPE 730b disposed on the waveguide 670. The two OPEs 730a/730b redirect all beams toward an out-coupling optical element 800, which out-couples all the beams (having any color) while expanding the exit pupil. In some implementations, the in-coupling optical element 700 and/or the out-coupling optical element 800 may be VPHGs designed to function as ICGs and EPEs, respectively. In some other implementations, the first OPE 730a and the second OPE 730b may be VPHGs designed to function as OPEs. In yet other implementations, the in-coupling optical element 700, the OPEs 730a/730b and the out-coupling optical element 800, may all be VPHGs. The in-coupling optical element 700 may receive an image (e.g., a multi-color image) projected through the exit pupil 2544 of a projector (e.g., a projector in the light projection system 520) and the out-coupling optical element 800 may project an image through an exit pupil 2546. It will be appreciated that the exit pupil 2546 may be expanded with respect to the entrance pupil 2544.

In some implementations, the in-coupling optical element 700, out-coupling optical element 800, and the OPEs 730a and 730b may be fabricated separately within different PLs and then attached on the waveguide 670. In some other implementations, the in-coupling optical element 700, out-coupling optical element 800, and the OPEs 730a and 730b may be formed within a single PL. In some examples, where the in-coupling optical element 700, out-coupling optical element 800, and the OPEs 730a and 730b are VPHGs, the PL may be referred to as VPHG layer. A VPHG layer may be attached or disposed on a major surface of the waveguide 670 to provide desired functionalities, as described herein. Advantageously, a single VPHG layer disposed on the waveguide 670, may enable in-coupling and out-coupling multi-color images into and out of the waveguide 670 and manipulating the propagation of the corresponding guided multi-color images within the waveguide 670.

As described above, in some configurations, different portions (e.g., portions having different colors, different spatial frequencies) of an input light beam incident on a waveguide may be coupled into different layers of a waveguide stack using different gratings (e.g., VPHGs). Advantageously, using multiple gratings to in-couple, redirect and out-couple light may expand the field of view of the system. In these configurations (e.g., as illustrated in Figure 9B), each portion of the input light beam may be redirected inside a waveguide of a waveguide stack, and coupled out of the waveguide using different OPEs and EPEs. Figure 26 illustrates an example configuration for coupling light into a waveguide stack 675 comprising four waveguide layers, redirecting light inside each waveguide layer and coupling light out of each waveguide. Four in-coupling optical elements 700a/700b/700c/700d, each couple a portion of light into one waveguide layer in the stack of waveguides 675. In some implementations, in-coupling optical elements 700a/700b/700c/700d are each configured to in couple light of a different color. Four OPEs 730a/730b/730c/730d each redirect light inside one waveguide layer in the stack of waveguides and four out-coupling optical elements 800a/800b/800c/800d couple light out of one waveguide layer in the stack of waveguides. In some implementations, the in-coupling optical elements 700a/700b/700c/700d and/or the out-coupling optical element 800a/800b/800c/800d may be VPHGs designed to function as ICGs and EPEs respectively. In some other implementations, the first OPEs 730a/730b/730c/730d may be VPHGs designed to function as OPEs. In yet other implementations, the in-coupling optical element 700a/700b/700c/700d, the OPEs 730a/730b/730c/730d and the out-coupling optical element 800a/800b/800c/800d, may all be VPHGs. The configuration illustrated in Figure 26 may be used to receive an image projected via the exit pupil 2644 of an image projector at a first location on the waveguide stack 675, transport the image via the waveguide stack 675 and project the image via an exit pupil 2646 in a second location. It will be appreciated that the exit pupil 2646 may be expanded with respect to the exit pupil 2644. Additionally, it will be appreciated that the field of view supported by the configuration illustrated in Figure 26 is expanded compared to the field of view support by a single in-coupling optical element and a single output coupler.

Advantageously, using VPHGs may facilitate implementing configurations like those shown in Figure 25 and Figure 26. In some implementations, the optical functions required for implementing complex configurations, like those shown in Figure 25 and Figure 26, may not be adequately supported by VPHGs fabricated using conventional methods, which may have, e.g., undesired parasitic diffraction, as discussed herein. Advantageously, VPHG recording methods described above (based on one or more LCMGs), may enable the fabrication of VPHGs with complex optical functions and other properties required for implementation of configurations like those shown in Figure 25 and Figure 26 or even more complicated configurations that may improve the performance of HMDs.

As described above, in some implementations, two or more VPHGs with similar or different optical functions may be recorded or formed on a single PL using two or more master gratings and two or more recording light beams. Each VPHG may be recorded in a different region of the PL. A PL layer that includes two or more VPHGs may be referred to as a volume phase hologram grating layer or a VPHG layer. The two or more master gratings may be fabricated on a single substrate or mounted on a single substrate after fabrication. All or some the master gratings may be LCMGs. Advantageously, using LCMGs to form VPHGs in a VPHG layer may enable independent control over the selectivity and optical function of each VPHG in the VPHG layer.

A VPHG layer may be attached to a waveguide (e.g., a waveguide used in a head mounted display) to enable certain optical functionalities. For examples, a VPHG layer may include two VPHGs, one configured to function as an in-coupling optical element and the other configured to function as an out-coupling optical element. When such VPHG layer is attached to a waveguide, light may be coupled into and out of the waveguide via the regions of the VPHG layer in which the corresponding VPHGs are formed. As another example, a VPHG layer may include three VPHGs functioning as ICG, OPE and EPE where the OPE is configured to redirect guided light received from the ICG to the EPE. The arrangement of ICG, OPE and EPE in such VPHG layer may be similar to the arrangement of the ICG 700, OPE 800 and EPE 730 on the waveguide 670 shown in Figure 9C. When such a VPHG layer is attached to a waveguide (e.g., waveguide 670), light may be coupled into the waveguide through the regions of the VPHG layer in which the VPHGs are formed. In some implementations, a VPHG layer may be detached from the corresponding master gratings before being attached to a waveguide. In some other implementations, some of the master gratings or a substrate on which the master gratings are formed or mounted may be detached from the VPHG layer after the VPHG layer is attached to the waveguide. Advantageously, in these implementations, the master gratings or the substrate may facilitate the attachment of the VPHG to the waveguide, for example, by providing mechanical support during the attachment process.

Figures 27A-27G illustrate an example method for fabricating a VPHG layer and attaching it to a waveguide. In this example, the VPHG layer comprises three VPHGs each recorded using a different master grating and a different recording beam. First, a substrate 2702 comprising three master gratings 1702/1703/1705a is provided, as shown in cross-sectional side view (FIG. 27A). The first master grating 1702 may support forming a VPHG that may function as an in-coupling optical element (i.e., an ICG), the second master grating 1703 may support forming a VPHG that may function as an out-coupling optical element (e.g., an EPE), and the third master grating 1705a, may partially support forming a VPHG that may function as a light distribution optical element (e.g., an OPE). In various implementations, the master gratings 1702/1703/1705a may be reflective gratings.

In some examples, these master gratings may be fabricated on the substrate 2702. In some other examples, these master grating may be fabricated on separate substrates and then transferred and attached to the substrate 2702. For example, these master gratings may be liquid crystal gratings (e.g., the multilayer liquid crystal grating shown in Figure 13E) fabricated on a substrate (e.g., substrate 1205) using one of the methods described above with respect to Figures 13A-13C, or Figures 15A-15D. Next a layer of photosensitive material 1704 is formed on the substrate 2702 and the master gratings 1702/1703/1705a, as shown in cross-sectional side view (FIG. 27B). The photosensitive layer (PL) 1704 may be formed, for example, using the same techniques described with reference to Figure 17B. Next, a fourth master grating 1705b is formed on or disposed on the PL 1704 above the third master grating 1705a, as shown in cross-sectional side view (C). In some implementations, the fourth master grating 1705b may be separately formed on an auxiliary substrate and then laminated on top of the PL 1704. The fourth master grating1705b is positioned and aligned with the third master grating 1705a to support forming a VPHG that may function as a light distribution optical element (e.g., an OPE). In various implementations, one or more of the master gratings 1702/1703/1705a and 1705b may be LCMGs.

With continued reference to Figure 27, in some implementations, before adding the fourth master grating 1705b, the PL 1704 may be covered by a layer of a transparent material (e.g., UV glue or index matching gel) to reduce reflection (Fresnel reflection) of light in the interface between the fourth master grating 1705b and the PL 1704 due to refractive index contrast. In some implementations, the refractive index of the transparent material may match the refractive index of the PL 1704. In some other examples, the refractive index of the transparent material may be less than the refractive index of the PL 1704. In some implementations, the first master grating 1705a may be a transmissive grating (e.g., a transmissive liquid crystal polarization grating) and the fourth master grating 1705b may be a reflective grating (e.g., a reflective liquid crystal polarization grating). In some other implementations, the second master grating may be a grating coated with a highly reflective layer (e.g., a metallic layer).

Next, as shown in , as shown in cross-sectional side view (FIG. 27D), the PL surface above of the first master grating 1702, the fourth master grating 1705b and the PL surface above the second master grating 1703 are illuminated by three recording light beams 1706a, 1706b and 1706c to form the VPHGs inside the PL 1704. In some implementations, the recording light beams 1706a/1706b/1706c may have a wavelength within the characteristic wavelength range of the photosensitive material used to form the PL 1704. In some such implementations, the wavelength of the recoding light beams 1706a/1706b/1706c may be substantially equal but each may have a different angle of incidence (as shown in FIG. 27D). The angle of incidence of each recording light beam may be selected based on a target selectivity associated with the corresponding VPHG. In some cases, two or more recording light beams of the recording light beams 1706a/1706b/1706c may have the same angle of incidence.

Upon illumination with the recording light beams 1706a/1706b/1706c, three VPHGs 2612a, 2612b and 2612c may be formed in the PL 1704 within the regions above the master gratings 1702/1705a/1703, as shown in cross-sectional side view (E). The formation of the VPHG 2612a and VPHG 2612b may be similar to the formation of the VPHG 1712 described with reference to Figure 17 and the formation of the VPHG 2612c may be similar to formation of the VPHG 1712 described with reference to Figure 22. In some implementations, the duration of the illumination time for formation of VPHGs 2612a, 2612b, and 2612c may be similar. After a duration sufficient to achieve the desired distribution and magnitude of refractive index (and/or optical absorption) change for each of the VPHGs 2612a/2612b/2612c in the PL 1704, the recording light beams 1706a/1706b/1706c may be turned off.

In some cases, a single recording light beam may illuminate the PL surface above of the first master grating 1702, the fourth master grating 1705b and the PL surface above the second master grating 1703, to form he three VPHGs 2612a, 2612b and 2612c in the PL 1704. The single recording light beam may have a wavelength within the characteristic wavelength range of the photosensitive material used to form the PL 1704.

As shown in as shown in cross-sectional side view (FIG. 27E), the resulting VPHG layer 1704b may be a transparent layer comprising three VPHGs 2612a/2612b/2612c each within a different region or zone in the VPHG layer 1704b. For example, the relative position of VPHGs on the VPHG layer 1704b may be similar to the relative position of the ICG 700, OPE 730 and EPE 800 in Figure 9C. In some implementations, a curing process may be used to stabilize the distribution and magnitude of the induced refractive index change inside the PL. In some implementations, the substrate 2702 may be detached from the VPHG layer 1704b resulting in a free (standalone) VPHG layer, as shown in cross-sectional side view (FIG. 27F). As shown in cross-sectional side view (FIG. 27G), the free VPHG layer 1704b may be attached to a major surface of a waveguide 670. The resulting structure (waveguide with the VPHG layer 1704b on top of one of its major surfaces), may be used as one of the waveguides in an augmented reality or virtual reality display system. The VPHG 2712a may be used to couple light into the waveguide 670, the VPHG 2712c may redirect light received from the VPHG 2712a toward the waveguide region below VPHG 2712b and the VPHG 2712b may be used to couple light from the waveguide 670 to free space and direct it to an eye of a user of the display system (e.g., a head mounted display). In some examples, the waveguide 670 may be one of the waveguides (e.g., waveguide 670, 680 and 690) used to fabricate a waveguide stack (e.g., waveguide stack 660) used in a head mounted display system (e.g., head mounted display).

It is contemplated that various implementations may be implemented in or associated with a variety of applications such as imaging systems and devices, display systems and devices, spatial light modulators, liquid crystal based devices, polarizers, wave guide plates, etc. The structures, devices and methods described herein may particularly find use in displays such as wearable displays (e.g., head mounted displays) that may be used for augmented and/or virtually reality. More generally, the described implementations may be implemented in any device, apparatus, or system that may be configured to display an image, whether in motion (such as video) or stationary (such as still images), and whether textual, graphical or pictorial. It is contemplated, however, that the described implementations may be included in or associated with a variety of electronic devices such as, but not limited to: mobile telephones, multimedia Internet enabled cellular telephones, mobile television receivers, wireless devices, smartphones, Bluetooth^{®} devices, personal data assistants (PDAs), wireless electronic mail receivers, hand-held or portable computers, netbooks, notebooks, smartbooks, tablets, printers, copiers, scanners, facsimile devices, global positioning system (GPS) receivers/navigators, cameras, digital media players (such as MP3 players), camcorders, game consoles, wrist watches, clocks, calculators, television monitors, flat panel displays, electronic reading devices (e.g., e-readers), computer monitors, auto displays (including odometer and speedometer displays, etc.), cockpit controls and/or displays, camera view displays (such as the display of a rear view camera in a vehicle), electronic photographs, electronic billboards or signs, projectors, architectural structures, microwaves, refrigerators, stereo systems, cassette recorders or players, DVD players, CD players, VCRs, radios, portable memory chips, washers, dryers, washer/dryers, parking meters, head mounted displays and a variety of imaging systems. Thus, the teachings are not intended to be limited to the implementations depicted solely in the Figures, but instead have wide applicability as will be readily apparent to one having ordinary skill in the art.

Various modifications to the implementations described in this disclosure may be readily apparent to those skilled in the art, and the generic principles defined herein may be applied to other implementations without departing from the scope of the invention which is defined in the appended claims.

The word "exemplary" is used exclusively herein to mean "serving as an example, instance, or illustration." Any implementation described herein as "exemplary" is not necessarily to be construed as preferred or advantageous over other implementations. Additionally, a person having ordinary skill in the art will readily appreciate, the terms "upper" and "lower", "above" and "below", etc., are sometimes used for ease of describing the figures, and indicate relative positions corresponding to the orientation of the figure on a properly oriented page, and may not reflect the orientation of the structures described herein, as those structures are implemented.

Various terms are used interchangeably within this description. Each of the terms are intended to have their customary ordinarily understood plain meaning in addition to the meanings described throughout this application. For example, the terms "recording beam", "recording light beam", and "recording beam of light" can be used interchangeably. Similarly the terms "head mounted display" and "wearable display" can be used interchangeably. The terms "visible spectrum" or "visible wavelength range" may refer to wavelengths visible to human eye (generally between 450 nanometers and 750 nanometers). The terms "infrared or IR spectrum" or "infrared or IR wavelength range" may refer to wavelengths used for IR imaging, thermal imaging, eye tracking, range finding and the like. IR wavelength range may comprise near IR wavelength range (generally between 750 nanometers to 2000 nanometers) and mid-IR wavelength range (generally between 200 nanometers to 6000 nanometers).

Certain features that are described in this specification in the context of separate implementations also may be implemented in combination in a single implementation. Conversely, various features that are described in the context of a single implementation also may be implemented in multiple implementations separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Further, the drawings may schematically depict one more example processes in the form of a flow diagram. However, other operations that are not depicted may be incorporated in the example processes that are schematically illustrated. For example, one or more additional operations may be performed before, after, simultaneously, or between any of the illustrated operations. In certain circumstances, multitasking and parallel processing may be advantageous. Moreover, the separation of various system components in the implementations described above should not be understood as requiring such separation in all implementations, and it should be understood that the described program components and systems may generally be integrated together in a single software product or packaged into multiple software products. Additionally, other implementations are within the scope of the following claims. In some cases, the actions recited in the claims may be performed in a different order and still achieve desirable results.

The invention includes methods that may be performed using the subject devices. The methods may comprise the act of providing such a suitable device. Such provision may be performed by the end user. In other words, the "providing" act merely requires the end user obtain, access, approach, position, set-up, activate, power-up or otherwise act to provide the requisite device in the subject method. Methods recited herein may be carried out in any order of the recited events which is logically possible, as well as in the recited order of events.

Example aspects of the invention, together with details regarding material selection and manufacture have been set forth above. As for other details of the present invention, these may be appreciated in connection with the above-referenced patents and publications as well as generally known or appreciated by those with skill in the art. The same may hold true with respect to method-based aspects of the invention in terms of additional acts as commonly or logically employed.

In addition, while the invention has been described in reference to several examples optionally incorporating various features, the invention is not to be limited to that which is described or indicated as contemplated with respect to each variation of the invention. In addition, where a range of values is provided, it is understood that every intervening value, between the upper and lower limit of that range and any other stated or intervening value in that stated range, is encompassed within the invention.

Also, it is contemplated that any optional feature of the inventive variations described may be set forth and claimed independently, or in combination with any one or more of the features described herein. Reference to a singular item, includes the possibility that there are plural of the same items present. More specifically, as used herein and in claims associated hereto, the singular forms "a," "an," "said," and "the" include plural referents unless the specifically stated otherwise. In other words, use of the articles allow for "at least one" of the subject item in the description above as well as claims associated with this disclosure. It is further noted that such claims may be drafted to exclude any optional element. As such, this statement is intended to serve as antecedent basis for use of such exclusive terminology as "solely," "only" and the like in connection with the recitation of claim elements, or use of a "negative" limitation.

Without the use of such exclusive terminology, the term "comprising" in claims associated with this disclosure shall allow for the inclusion of any additional element-irrespective of whether a given number of elements are enumerated in such claims, or the addition of a feature could be regarded as transforming the nature of an element set forth in such claims. Except as specifically defined herein, all technical and scientific terms used herein are to be given as broad a commonly understood meaning as possible while maintaining claim validity.

The scope of the present invention is not to be limited to the examples provided and/or the subject specification, but rather only by the scope of the claims.

## Claims

1. A method for fabricating a volume phase hologram, the method comprising:
providing a first liquid crystal master grating (1702a);
providing a photosensitive layer (1704) on the first liquid crystal master grating, the photosensitive layer comprising a photosensitive material;
providing a second liquid crystal master grating (1702b) on the photosensitive layer, wherein the first and second liquid crystal master gratings are master gratings comprising a liquid crystal polarization grating;
forming a volume phase hologram grating in the photosensitive layer, wherein forming the volume phase hologram grating comprises:
illuminating the second liquid crystal master grating with a recording light beam (1706) to diffract at least a portion (1708) of the recording light beam into the photosensitive layer.

2. The method of Claim 1, wherein the first liquid crystal master grating (1702a) is a reflective grating and the second liquid crystal master grating (1702b) is a transmissive grating, and wherein the second liquid crystal master grating is aligned with respect to the first liquid master crystal grating such that at least a portion of the recording light beam (1706) diffracted by the second liquid master crystal grating illuminates the first liquid crystal master grating, wherein the portion of the recording light beam diffracted by the second liquid master crystal grating impinges on the photosensitive layer to form a portion of the volume phase hologram.

3. The method of Claim 1, further comprising forming the photosensitive layer on the first liquid crystal master grating.

4. The method of Claim 1, wherein illuminating the second liquid crystal master grating comprises directing light through the photosensitive layer (1704) to the second liquid crystal master grating.

5. The method of Claim 1, wherein the photosensitive material (1704) is dichromated gelatin (DCG).

6. The method of Claim 1, wherein one of the liquid crystal master gratings (1702a, 1702b) is a cholesteric liquid crystal polarization grating.

7. The method of Claim 1, wherein the recording light beam (1706) illuminating the second liquid crystal master grating is circularly polarized.

8. The method of Claim 1, wherein illuminating the second liquid crystal master grating with the recording light beam comprises illuminating the second liquid crystal master grating with a beam of light impinging on the second liquid crystal master grating at an angle of incidence associated with an operational incident angle range,
optionally wherein the second liquid crystal master grating has diffractive properties corresponding to an optical function, and wherein the volume phase hologram grating diffracts a beam of light having an angle of incidence within the operational incident angle range and a wavelength within an operational wavelength range, according to the optical function,
further optionally wherein the photosensitive layer comprises a photosensitive material having a characteristic wavelength range different from the operational wavelength range of the volume phase hologram grating,
further optionally wherein the characteristic wavelength range of the photosensitive material is between 300 and 550 nm, and the operational wavelength range of the volume phase hologram grating is between 500 nm and 1500 nm.

9. The method of Claim 1, wherein the method is for fabricating an optical device comprising the volume phase hologram, wherein the optical device is a wearable display comprising a waveguide (670) and wherein the method further comprises:
attaching the volume phase hologram grating to a major surface of the waveguide; and
subsequently attaching the waveguide to an image injection device,
wherein the volume phase hologram grating is configured to in-couple light, output from the image injection device, into the waveguide, optionally wherein the method further comprises:
detaching the liquid crystal master gratings from the volume phase hologram grating before subsequently attaching the waveguide to the image injection device. optionally wherein forming a volume phase hologram grating comprises forming an other volume phase hologram grating in the photosensitive layer, the other volume phase hologram grating laterally separated from the volume phase hologram grating, wherein the other volume phase hologram grating is configured to out-couple light propagating within the waveguide.

10. The method of Claim 1, wherein the recording light beam has a polarization associated with only a single diffraction order of the second liquid crystal master grating and wherein the second liquid crystal master grating diffracts the at least a portion of the recording light beam impinging on the second liquid crystal master grating into the single diffraction order.

11. A method for fabricating an optical device, the method comprising:
providing a substrate (2702) comprising a first liquid crystal master grating (1702), a second liquid crystal master grating (1703), and a third liquid crystal master grating (1705a);
forming a photosensitive layer (1704) on the substrate, over the first liquid crystal master grating, the second liquid crystal master grating, and the third liquid crystal master grating;
disposing a fourth liquid crystal master grating (1705b) on the photosensitive layer; transforming the photosensitive layer into a volume phase hologram grating layer by forming a first volume phase hologram grating in a first region of the photosensitive layer, forming a second volume phase hologram grating in a second region of the photosensitive layer, and forming a third volume phase hologram in a third region of the photosensitive layer,
wherein the first, second, third and fourth liquid crystal master gratings are master gratings comprising a liquid crystal polarization grating, and
wherein transforming the photosensitive layer comprises:
illuminating the first, fourth and third liquid crystal master gratings with recording light to diffract recording light from the first, second and third gratings to the photosensitive layer.

12. The method of Claim 11, wherein illuminating the first, second, and third gratings with recording light comprises:
directing a first recording light beam (1706a) through the photosensitive layer to illuminate the first liquid crystal master grating;
directing a second recording light beam (1706b) to the fourth grating to illuminate the second liquid crystal master grating through the photosensitive layer;
directing a third recording light beam (1706c) through the photosensitive layer to illuminate the third liquid crystal master grating.

13. The method of Claim 12, wherein the second liquid crystal master grating (1703) is a reflective grating and the fourth liquid crystal master grating (1705b) is a transmissive grating, and wherein the fourth liquid master crystal grating is aligned with respect to the third liquid crystal master grating (1705a) such that at least a portion of the recording light diffracted by the fourth liquid crystal grating illuminates the second liquid crystal master grating.

14. The method of Claim 13, wherein the optical device is a wearable display comprising a waveguide and the method further comprises:
detaching the fourth liquid crystal master grating from the volume phase hologram grating layer; and
attaching the volume phase hologram layer to a major surface of the waveguide,
wherein the first volume phase hologram grating is configured to in-couple light output from an image injection device to the waveguide and wherein the third volume phase hologram grating is configured to out-couple light propagating in the waveguide towards an eye of a user of the wearable display.

15. The method of Claim 14, wherein the second volume phase hologram grating is configured to redirect the light in-coupled into the waveguide by the first volume hologram grating toward the third volume phase hologram grating, wherein the second volume phase hologram grating is formed by the second recording light beam diffracted by the fourth and the second liquid crystal master gratings.

## Patentansprüche

1. Verfahren zur Herstellung eines Volumenphasen-Hologramms, wobei das Verfahren umfasst:
Bereitstellen eines ersten Flüssigkristall-Mastergitters (1702a);
Bereitstellen einer lichtempfindlichen Schicht (1704) auf dem ersten Flüssigkristall-Mastergitter, wobei die lichtempfindliche Schicht ein lichtempfindliches Material umfasst;
Bereitstellen eines zweiten Flüssigkristall-Mastergitters (1702b) auf der lichtempfindlichen Schicht, wobei das erste und das zweite Flüssigkristall-Mastergitter Mastergitter sind, die ein Flüssigkristall-Polarisationsgitter umfassen;
Bilden eines Volumenphasen-Hologrammgitters in der lichtempfindlichen Schicht, wobei das Bilden des Volumenphasen-Hologrammgitters umfasst:
Beleuchten des zweiten Flüssigkristall-Mastergitters mit einem Aufzeichnungslichtstrahl (1706), um mindestens einen Teil (1708) des Aufzeichnungslichtstrahls in die lichtempfindliche Schicht zu beugen.

2. Verfahren nach Anspruch 1, wobei das erste Flüssigkristall-Mastergitter (1702a) ein reflektierendes Gitter und das zweite Flüssigkristall-Mastergitter (1702b) ein durchlässiges Gitter ist, und wobei das zweite Flüssigkristall-Mastergitter in Bezug auf das erste Flüssigkristall-Mastergitter ausgerichtet so ist, dass mindestens ein Teil des vom zweiten Flüssigkristall-Mastergitter gebeugten Aufzeichnungslichtstrahls (1706) das erste Flüssigkristall-Mastergitter beleuchtet, wobei der vom zweiten Flüssigkristall-Mastergitter gebeugte Teil des Aufzeichnungslichtstrahls auf die lichtempfindliche Schicht trifft, um einen Teil des Volumenphasen-Hologramms zu bilden.

3. Verfahren nach Anspruch 1, das ferner das Bilden der lichtempfindlichen Schicht auf dem ersten Flüssigkristall-Mastergitter umfasst.

4. Verfahren nach Anspruch 1, wobei das Beleuchten des zweiten Flüssigkristall-Mastergitters das Leiten von Licht durch die lichtempfindliche Schicht (1704) auf das zweite Flüssigkristall-Mastergitter umfasst.

5. Verfahren nach Anspruch 1, wobei das lichtempfindliche Material (1704) dichromatierte Gelatine (DCG) ist.

6. Verfahren nach Anspruch 1, wobei eines der Flüssigkristall-Mastergitter (1702a, 1702b) ein cholesterisches Flüssigkristall-Polarisationsgitter ist.

7. Verfahren nach Anspruch 1, wobei der das zweite Flüssigkristall-Mastergitter beleuchtende Aufzeichnungslichtstrahl (1706) zirkular polarisiert ist.

8. Verfahren nach Anspruch 1, wobei das Beleuchten des zweiten Flüssigkristall-Mastergitters mit dem Aufzeichnungslichtstrahl das Beleuchten des zweiten Flüssigkristall-Mastergitters mit einem Lichtstrahl umfasst, der unter einem Einfallswinkel auf das zweite Flüssigkristall-Mastergitter trifft, der einem Betriebs-Einfallswinkelbereich zugeordnet ist,
wobei das zweite Flüssigkristall-Mastergitter optional diffraktive Eigenschaften aufweist, die einer optischen Funktion entsprechen, und wobei das Volumenphasen-Hologrammgitter einen Lichtstrahl mit einem Einfallswinkel innerhalb des Betriebs-Einfallswinkelbereichs und einer Wellenlänge innerhalb eines Betriebs-Wellenlängenbereichs entsprechend der optischen Funktion beugt,
wobei ferner optional die lichtempfindliche Schicht ein lichtempfindliches Material umfasst, das einen charakteristischen Wellenlängenbereich aufweist, der sich vom Betriebswellenlängenbereich des Volumenphasen-Hologrammgitters unterscheidet,
wobei ferner optional der charakteristische Wellenlängenbereich des lichtempfindlichen Materials zwischen 300 und 550 nm liegt, und der Betriebswellenlängenbereich des Volumenphasen-Hologrammgitters zwischen 500 nm und 1500 nm liegt.

9. Verfahren nach Anspruch 1, wobei das Verfahren zur Herstellung einer optischen Vorrichtung dient, die das Volumenphasen-Hologramm umfasst, wobei die optische Vorrichtung ein tragbares Display ist, das einen Wellenleiter (670) umfasst, und wobei das Verfahren ferner umfasst:
Anbringen des Volumenphasen-Hologrammgitters an einer Hauptfläche des Wellenleiters; und
anschließendes Anbringen des Wellenleiters an einer Bildinjektionsvorrichtung,
wobei das Volumenphasen-Hologrammgitter so konfiguriert ist, dass es von der Bildinjektionsvorrichtung ausgegebenes Licht in den Wellenleiter koppelt,
wobei das Verfahren optional ferner umfasst:
Ablösen der Flüssigkristall-Mastergitter vom Volumenphasen-Hologrammgitter vor dem anschließenden Anbringen des Wellenleiters an der Bildinjektionsvorrichtung, wobei das Bilden eines Volumenphasen-Hologrammgitters optional das Bilden eines weiteren Volumenphasen-Hologrammgitters in der lichtempfindlichen Schicht umfasst, wobei das weitere Volumenphasen-Hologrammgitter seitlich vom Volumenphasen-Hologrammgitter getrennt ist, wobei das weitere Volumenphasen-Hologrammgitter dafür konfiguriert ist, Licht auszukoppeln, das im Wellenleiter ausgebreitet wird.

10. Verfahren nach Anspruch 1, wobei der Aufzeichnungslichtstrahl eine Polarisation aufweist, die nur einer einzigen Beugungsordnung des zweiten Flüssigkristall-Mastergitters zugeordnet ist, und wobei das zweite Flüssigkristall-Mastergitter mindestens einen Teil des auf das zweite Flüssigkristall-Mastergitter auftreffenden Aufzeichnungslichtstrahls in die einzelne Beugungsordnung beugt.

11. Verfahren zur Herstellung einer optischen Vorrichtung, wobei das Verfahren umfasst:
Bereitstellen eines Substrats (2702), das ein erstes Flüssigkristall-Mastergitter (1702), ein zweites Flüssigkristall-Mastergitter (1703) und ein drittes Flüssigkristall-Mastergitter (1705a) umfasst;
Bilden einer lichtempfindlichen Schicht (1704) auf dem Substrat über dem ersten Flüssigkristall-Mastergitter, dem zweiten Flüssigkristall-Mastergitter und dem dritten Flüssigkristall-Mastergitter;
Anordnen eines vierten Flüssigkristall-Mastergitters (1705b) auf der lichtempfindlichen Schicht; Umwandeln der lichtempfindlichen Schicht in eine Volumenphasen-Hologrammgitterschicht durch Bilden eines ersten Volumenphasen-Hologrammgitters in einem ersten Bereich der lichtempfindlichen Schicht, Bilden eines zweiten Volumenphasen-Hologrammgitters in einem zweiten Bereich der lichtempfindlichen Schicht und Bilden eines dritten Volumenphasen-Hologramms in einem dritten Bereich der lichtempfindlichen Schicht, wobei das erste, zweite, dritte und vierte Flüssigkristall-Mastergitter Mastergitter sind, die ein Flüssigkristall-Polarisationsgitter umfassen; und
wobei das Umwandeln der lichtempfindlichen Schicht umfasst:
Beleuchten des ersten, vierten und dritten Flüssigkristall-Mastergitters mit Aufzeichnungslicht, um Aufzeichnungslicht vom ersten, zweiten und dritten Gitter in die lichtempfindliche Schicht zu beugen.

12. Verfahren nach Anspruch 11, wobei das Beleuchten des ersten, zweiten und dritten Gitters mit Aufzeichnungslicht umfasst:
Leiten eines ersten Aufzeichnungslichtstrahls (1706a) durch die lichtempfindliche Schicht, um das erste Flüssigkristall-Mastergitter zu beleuchten;
Leiten eines zweiten Aufzeichnungslichtstrahls (1706b) auf das vierte Gitter, um das zweite Flüssigkristall-Mastergitter durch die lichtempfindliche Schicht zu beleuchten;
Leiten eines dritten Aufzeichnungslichtstrahls (1706c) durch die lichtempfindliche Schicht, um das dritte Flüssigkristall-Mastergitter zu beleuchten.

13. Verfahren nach Anspruch 12, wobei das zweite Flüssigkristall-Mastergitter (1703) ein reflektierendes Gitter und das vierte Flüssigkristall-Mastergitter (1705b) ein durchlässiges Gitter ist, und wobei das vierte Flüssigkristall-Mastergitter in Bezug auf das dritte Flüssigkristall-Mastergitter (1705a) so ausgerichtet ist, dass mindestens ein Teil des vom vierten Flüssigkristall-Mastergitter gebeugten Aufzeichnungslichts das zweite Flüssigkristall-Mastergitter beleuchtet.

14. Verfahren nach Anspruch 13, wobei die optische Vorrichtung ein tragbares Display ist, das einen Wellenleiter umfasst, und das Verfahren ferner umfasst:
Ablösen des vierten Flüssigkristall-Mastergitters von der Volumenphasen-Hologrammgitterschicht; und
Anbringen der Volumenphasen-Hologrammschicht an einer Hauptfläche des Wellenleiters,
wobei das erste Volumenphasen-Hologrammgitter so konfiguriert ist, dass es von einer Bildinjektionsvorrichtung ausgegebenes Licht in den Wellenleiter koppelt, und wobei das dritte Volumenphasen-Hologrammgitter so konfiguriert ist, dass es sich im Wellenleiter ausbreitendes Licht in Richtung eines Auges eines Benutzers des tragbaren Displays auskoppelt.

15. Verfahren nach Anspruch 14, wobei das zweite Volumenphasen-Hologrammgitter so konfiguriert ist, dass es das durch das erste Volumenphasen-Hologrammgitter in den Wellenleiter gekoppelte Licht zum dritten Volumenphasen-Hologrammgitter umleitet, wobei das zweite Volumenphasen-Hologrammgitter durch den zweiten Aufzeichnungslichtstrahl gebildet wird, der durch das vierte und das zweite Flüssigkristall-Mastergitter gebeugt wird.

## Revendications

1. Procédé de fabrication d'un hologramme de phase en volume, le procédé comprenant :
la fourniture d'un premier réseau principal à cristaux liquides (1702a),
la fourniture d'une couche photosensible (1704) sur le premier réseau principal à cristaux liquides, la couche photosensible comprenant un matériau photosensible,
la fourniture d'un deuxième réseau principal à cristaux liquides (1702b) sur la couche photosensible, lesdits premier et deuxième réseaux principaux à cristaux liquides étant des réseaux principaux comprenant un réseau de polarisation à cristaux liquides,
la formation d'un réseau holographique de phase en volume dans la couche photosensible, ladite formation du réseau holographique de phase en volume comprenant :
l'éclairage du deuxième réseau principal à cristaux liquides avec un faisceau lumineux d'enregistrement (1706) pour diffracter au moins une partie (1708) du faisceau lumineux d'enregistrement dans la couche photosensible.

2. Procédé selon la revendication 1, dans lequel le premier réseau principal à cristaux liquides (1702a) est un réseau réfléchissant et le deuxième réseau principal à cristaux liquides (1702b) est un réseau transmissif, et dans lequel le deuxième réseau principal à cristaux liquides est aligné par rapport au premier réseau principal à cristaux liquides de telle façon qu'au moins une partie du faisceau lumineux d'enregistrement (1706) diffractée par le deuxième réseau principal à cristaux liquides éclaire le premier réseau principal à cristaux liquides, ladite partie du faisceau lumineux d'enregistrement diffractée par le deuxième réseau principal à cristaux liquides venant frapper la couche photosensible pour former une partie de l'hologramme de phase en volume.

3. Procédé selon la revendication 1, comprenant en outre la formation de la couche photosensible sur le premier réseau principal à cristaux liquides.

4. Procédé selon la revendication 1, dans lequel l'éclairage du deuxième réseau principal à cristaux liquides comprend l'opération consistant à diriger de la lumière à travers la couche photosensible (1704) vers le deuxième réseau principal à cristaux liquides.

5. Procédé selon la revendication 1, dans lequel le matériau photosensible (1704) est de la gélatine bichromatée (DCG, dichromated gelatin).

6. Procédé selon la revendication 1, dans lequel l'un des réseaux principaux à cristaux liquides (1702a, 1702b) est un réseau de polarisation à cristaux liquides cholestériques.

7. Procédé selon la revendication 1, dans lequel le faisceau lumineux d'enregistrement (1706) éclairant le deuxième réseau principal à cristaux liquides est à polarisation circulaire.

8. Procédé selon la revendication 1, dans lequel l'éclairage du deuxième réseau principal à cristaux liquides avec le faisceau lumineux d'enregistrement comprend l'éclairage du deuxième réseau principal à cristaux liquides avec un faisceau de lumière venant frapper le deuxième réseau principal à cristaux liquides selon un angle d'incidence associé à une plage d'angles d'incidence opérationnelle,
dans lequel éventuellement le deuxième réseau principal à cristaux liquides présente des propriétés de diffraction correspondant à une fonction optique, et dans lequel éventuellement le réseau holographique de phase en volume diffracte un faisceau de lumière ayant un angle d'incidence compris dans la plage d'angles d'incidence opérationnelle et une longueur d'onde comprise dans une plage de longueurs d'onde opérationnelle, conformément à la fonction optique,
dans lequel éventuellement, en outre, la couche photosensible comprend un matériau photosensible ayant une plage de longueurs d'onde caractéristique différente de la plage de longueurs d'onde opérationnelle du réseau holographique de phase en volume,
dans lequel éventuellement, en outre, la plage de longueurs d'onde caractéristique du matériau photosensible est comprise entre 300 et 550 nm, et la plage de longueurs d'onde opérationnelle du réseau holographique de phase en volume est comprise entre 500 nm et 1500 nm.

9. Procédé selon la revendication 1, ledit procédé étant destiné à la fabrication d'un dispositif optique comprenant l'hologramme de phase en volume, ledit dispositif optique étant un dispositif d'affichage à porter sur soi comprenant un guide d'ondes (670), ledit procédé comprenant en outre :
la fixation du réseau holographique de phase en volume à une surface principale du guide d'ondes, et
la fixation subséquente du guide d'ondes à un dispositif d'injection d'image ;
ledit réseau holographique de phase en volume étant conçu pour coupler en entrée la lumière, émise par le dispositif d'injection d'image, dans le guide d'ondes,
ledit procédé comprenant éventuellement en outre :
le détachement des réseaux principaux à cristaux liquides du réseau holographique de phase en volume avant la fixation subséquente du guide d'ondes au dispositif d'injection d'image,
ladite formation d'un réseau holographique de phase en volume comprenant éventuellement la formation, dans la couche photosensible, d'un autre réseau holographique de phase en volume latéralement séparé du réseau holographique de phase en volume, ledit autre réseau holographique de phase en volume étant conçu pour coupler en sortie la lumière se propageant à l'intérieur du guide d'ondes.

10. Procédé selon la revendication 1, dans lequel le faisceau lumineux d'enregistrement a une polarisation associée à un seul ordre de diffraction du deuxième réseau principal à cristaux liquides, et
dans lequel le deuxième réseau principal à cristaux liquides diffracte ladite au moins une partie du faisceau lumineux d'enregistrement venant frapper le deuxième réseau principal à cristaux liquides dans ledit ordre de diffraction unique.

11. Procédé de fabrication d'un dispositif optique, le procédé comprenant :
la fourniture d'un substrat (2702) comprenant un premier réseau principal à cristaux liquides (1702), un deuxième réseau principal à cristaux liquides (1703) et un troisième réseau principal à cristaux liquides (1705a),
la formation d'une couche photosensible (1704) sur le substrat, par-dessus le premier réseau principal à cristaux liquides, le deuxième réseau principal à cristaux liquides et le troisième réseau principal à cristaux liquides,
la disposition d'un quatrième réseau principal à cristaux liquides (1705b) sur la couche photosensible, la transformation de la couche photosensible en une couche de réseau holographique de phase en volume par formation d'un premier réseau holographique de phase en volume dans une première zone de la couche photosensible, formation d'un deuxième réseau holographique de phase en volume dans une deuxième zone de la couche photosensible, et formation d'un troisième hologramme de phase en volume dans une troisième zone de la couche photosensible ;
lesdits premier, deuxième, troisième et quatrième réseaux principaux à cristaux liquides étant des réseaux principaux comprenant un réseau de polarisation à cristaux liquides, et
ladite transformation de la couche photosensible comprenant :
l'éclairage des premier, quatrième et troisième réseaux principaux à cristaux liquides avec une lumière d'enregistrement pour diffracter la lumière d'enregistrement des premier, deuxième et troisième réseaux vers la couche photosensible.

12. Procédé selon la revendication 11, dans lequel l'éclairage des premier, deuxième et troisième réseaux avec une lumière d'enregistrement comprend les opérations consistant à :
diriger un premier faisceau lumineux d'enregistrement (1706a) à travers la couche photosensible pour éclairer le premier réseau principal à cristaux liquides,
diriger un deuxième faisceau lumineux d'enregistrement (1706b) vers le quatrième réseau pour éclairer le deuxième réseau principal à cristaux liquides à travers la couche photosensible,
diriger un troisième faisceau lumineux d'enregistrement (1706c) à travers la couche photosensible pour éclairer le troisième réseau principal à cristaux liquides.

13. Procédé selon la revendication 12, dans lequel le deuxième réseau principal à cristaux liquides (1703) est un réseau réfléchissant et le quatrième réseau principal à cristaux liquides (1705b) est un réseau transmissif, et dans lequel le quatrième réseau principal à cristaux liquides est aligné par rapport au troisième réseau principal à cristaux liquides (1705a) de telle façon qu'au moins une partie de la lumière d'enregistrement diffractée par le quatrième réseau à cristaux liquides éclaire le deuxième réseau principal à cristaux liquides.

14. Procédé selon la revendication 13, dans lequel le dispositif optique est un dispositif d'affichage à porter sur soi comprenant un guide d'ondes, ledit procédé comprenant en outre :
le détachement du quatrième réseau principal à cristaux liquides de la couche de réseau holographique de phase en volume, et
la fixation de la couche de réseau holographique de phase en volume à une surface principale du guide d'ondes ;
ledit premier réseau holographique de phase en volume étant conçu pour coupler en entrée la lumière émise par un dispositif d'injection d'image vers le guide d'ondes, et ledit troisième réseau holographique de phase en volume étant conçu pour coupler en sortie la lumière se propageant dans le guide d'ondes vers un œil d'un utilisateur du dispositif d'affichage à porter sur soi.

15. Procédé selon la revendication 14, dans lequel le deuxième réseau holographique de phase en volume est conçu pour rediriger la lumière couplée en entrée dans le guide d'ondes par le premier réseau holographique de phase en volume vers le troisième réseau holographique de phase en volume, ledit deuxième réseau holographique de phase en volume étant formé par le deuxième faisceau lumineux d'enregistrement diffracté par les quatrième et deuxième réseaux principaux à cristaux liquides.
